# EUROPÄISCHE PATENTSCHRIFT

(11) **EP 1 569 825 B1**
(45) Veröffentlichungstag und Bekanntmachung des Hinweises auf die Patenterteilung: **09.05.2007**
(21) Anmeldenummer: 03780030.7
(22) Anmeldetag: 22.11.2003
(51) Int. Cl.: B60R 21/16

(54) **SICHERHEITSEINRICHTUNG FÜR EIN FAHRZEUG, INSBESONDERE FÜR EIN KRAFTFAHRZEUG**
SAFETY DEVICE FOR A VEHICLE, PARTICULARLY A MOTOR VEHICLE
DISPOSITIF DE SECURITE POUR VEHICULE, NOTAMMENT AUTOMOBILE

(30) Priorität: 30.11.2002 DE 10256024; 21.12.2002 DE 10260385
(43) Veröffentlichungstag der Anmeldung: 07.09.2005
(73) Patentinhaber: Volkswagen Aktiengesellschaft, 38436 Wolfsburg (DE)
(72) Erfinder: WOHLLEBE, Thomas, 38547 Calberlah (DE); SINNHUBER, Ruprecht, 38518 Gifhorn (DE); JAN, Tycho Von, 38518 Gifhorn (DE); STRUTZ, Torsten, 38173 Veltheim (DE)
(74) Vertreter: Liebl, Thomas
(86) Internationale Anmeldenummer: PCT/EP2003/013132
(87) Internationale Veröffentlichungsnummer: WO 2004/050435

(56) Entgegenhaltungen:
- WO-A-00/41919
- WO-A-98/26959
- DE-A- 2 151 498
- DE-A- 2 229 261
- GB-A- 2 299 306
- US-B1- 6 283 500
- PATENT ABSTRACTS OF JAPAN Bd. 0181, Nr. 19 (M-1567), 25. Februar 1994 (1994-02-25) -& JP 05 310095 A (NISSAN MOTOR CO LTD), 22. November 1993 (1993-11-22)

## Beschreibung

Die Erfindung betrifft ein Fahrzeug, insbesondere ein Kraftfahrzeug, mit einer Sicherheitseinrichtung nach Anspruch 1.

Aus der DE 2 041 741 A1 ist bereits eine Sicherheitseinrichtung für ein Kraftfahrzeug bekannt, die wenigstens einen Fondairbag aufweist, der im nicht aktivierten Grundzustand zusammengefaltet hinter einem Innenverkleidungsteil angeordnet ist und der bei einer Aktivierung der Sicherheitseinrichtung im Fahrzeuginnenraum vor einer Fondinsassenposition, insbesondere hinter einem vor einer Fondinsassenposition angeordneten Vordersitz aufblasbar ist. Konkret ist der Fondairbag hier im nicht aktivierten, zusammengefalteten Grundzustand in etwa in einem mittleren Dachbereich angeordnet und entfaltet sich im aktivierten Zustand vom Dachbereich ausgehend in etwa schräg nach vorne in Richtung zum Fondinsassen hin. Mit einem derartigen Aufbau soll erreicht werden, dass der Fondinsasse im Falle eines Unfalls durch den Fondairbag vor Beeinträchtigungen geschützt wird. Problematisch bei diesem Aufbau ist jedoch, dass sich hier der Fondairbag im Belastungsfalle, d. h. bei einem darauf aufprallenden Fondinsassen, unmittelbar an der Sitzlehne des Vordersitzes abstützt, wodurch eine hohe Belastungskraft auf die nicht dafür ausgelegte Sitzlehne wirkt. Diese hohe Belastungskraft kann zu einer Beschädigung und gegebenenfalls sogar zu einer nach Vorneverlagerung der Sitzlehne führen, was auf jeden Fall nachteilig und unerwünscht ist. Das Wegverlagern oder Einknicken der Sitzlehne hat zudem unter Umständen negative Auswirkungen auf das Energieabsorptionsverhalten und das Abfangen des Fondinsassen mittels dem Fondairbag.

Aus der DE 101 11 380 A1 ist ebenfalls eine Sicherheitseinrichtung für ein Fahrzeug mit einem Fondairbag gezeigt, bei dem sich der Fondairbag bei einer Aufprallbelastung am Vordersitz abstützt und dadurch eine unerwünscht hohe Belastung auf die Sitzlehne auftritt. Ein ähnlicher Aufbau ist auch aus der DE 199 16 850 A1 bekannt.

Ein weiteres Problem bei einer Fahrzeugkollision kann sein, dass z. B. die Fondinsassen nicht angegurtet sind, so dass durch z. B. Tischmodule oder andere Einbauten ein zusätzliches Verletzungsrisiko besteht.

Aus der gattungsbildenden WO 00/41919 A ist aus der dortigen Fig. 13 bereits eine Sicherheitseinrichtung für ein Fahrzeug mit einem Airbag bekannt, der im nicht aktivierten Grundzustand zusammengefaltet hinter einem Innenverkleidungsteil des Fahrzeugs angeordnet ist und der bei einer Aktivierung der Sicherheitseinrichtung im Fahrzeuginnenraum vor einer Insassensitzposition aufgeblasen werden kann. Die Sicherheitseinrichtung weist ferner eine mit dem Airbag gekoppelte Rückhaltevorrichtung auf, mit der der Airbag im aufgeblasenen Zustand bei einem Aufprall eines Insassen auf den wenigstens einen Airbag im Fahrzeuginnenraum in eine vorgegebene Rückhalteposition überführt und gehalten werden kann. Konkret weist der Airbag hier einen Abstützairbag auf, der vor einem Fahrzeuginsassen aufgeblasen werden kann und an dem ein Seitenband angreift, das ferner dachseitig angebunden ist. Mit diesem Seitenband ist ein Gaskanal integral ausgebildet, der im Bereich des Kopfes eines Fahrzeuginsassen Zellen aufweist, die über den Gaskanal des Seitenbandes aufgeblasen werden können. Durch das Aufblasen der Zellen reduziert sich die wirksame Länge des Seitenbandes und kann der Airbag in Richtung auf den Fahrzeuginsassen gezogen werden. Ein derartiger Aufbau ist relativ kompliziert und ermöglicht darüber hinaus keine seitliche Abstützung des Thoraxbereichs eines Fahrzeuginsassen.

Aufgabe der Erfindung ist es daher, eine Sicherheitseinrichtung für ein Fahrzeug zu schaffen, das einen Airbag aufweist, mit dem die Gefahr einer Beeinträchtigung vom Fahrzeuginsassen bei einer Fahrzeugkollision auf einfache Weise in Verbindung mit einer guten Rückhaltefunktion für die Insassen reduziert wird.

Diese Aufgabe wird gelöst mit den Merkmalen des Patentanspruchs 1. Vorteilhafte Ausgestaltungen sind Gegenstand der Unteransprüche.

Gemäß Anspruch 1 ist der wenigstens eine Airbag als Abspannairbag H-förmigen Zuschnitts mit einem den eigentlichen Abstützbereich des Abspannairbags bildenden Mittelteil als H-Steg ausgebildet, wobei der Abspannairbag im nicht aktivierten Zustand U-förmig gefaltet im Fahrzeug angeordnet ist dergestalt, dass der H-Steg im gefalteten Zustand Bestandteil der U-Basis ist und die vom H-Steg wegragenden Schlauchbereiche H-Schenkel sind, die im gefalteten Zustand die U-Schenkel des Abspannairbags ausbilden, so dass der H-Steg im aufgeblasenen Zustand einen vor einer Insassensitzposition aufgeblasenen Abstützairbag ausbildet und das die von dem H-Steg wegragenden H-Schenkel im aufgeblasenen Zustand zu beiden Seiten des H-Stegs in Fahrzeughochachsenrichtung übereinander liegende Seitenairbags ausbilden.

Ein derartiger Airbagzuschnitt ist mit relativ wenig Aufwand herstellbar und stellt einen Aufbau zur Verfügung, mit dem vorteilhaft funktionsintegriert sowohl ein vor dem Fahrzeuginsassen liegender Abstützairbag als auch Seitenairbags ausgebildet werden können. Die Seitenairbags können dabei je nach Ausbildung und Dimensionierung einen Großteil bzw. sogar den gesamten Seitenbereich vorteilhaft überdecken. Des weiteren wird mit einem derartigen Zuschnitt eine einfache Anbringung der Abspann- und Rückhaltemittel am Airbag zur Verfügung gestellt, mittels der der Abspannairbag in seine vorgegebene Rückhalteposition gebracht werden kann. Insbesondere können z. B. die unteren Seitenairbags dabei auch durch ein sich beim Aufblasen verkürzendes Airbaggewebe ausgebildet sein, so dass dann gleichzeitig auch die Rückhaltevorrichtung in den durch einen einzigen Zuschnitt gebildeten Airbag integriert sein kann.

Besonders bevorzugt können bei einer erfindungsgemäßen Variante die die oberen H-Schenkel bildenden Schlauchbereiche im aufgeblasenen aktivierten Zustand des Abspannairbags wenigstens den Dachholmbereich abdecken, vorzugsweise sich als Seitenairbag vom Dachholmbereich ausgehend wenigstens bereichsweise vor einem Fahrzeugseitenbereich erstrecken. Des weiteren kann alternativ oder zusätzlich vorgesehen sein, dass die die unteren H-Schenkel bildenden Schlauchbereiche im Falle von Bändern, Seilen oder dergleichen als Abspann- und Rückhaltemittel diese von der Fahrzeuginsassensitzposition her abdecken, wobei vorzugsweise die Bänder, Seile etc. mit den entsprechenden Schlauchbereichen gekoppelt sind. Andererseits kann aber auch vorgehen sein, dass im Falle von sich beim Aufblasen in der Länge verkürzenden Airbagschläuche als Abspann- und Rückhaltemittel diese die unteren H-Schenkel gegebenenfalls ersetzen. Des weiteren umfasst der Aufspann- und Rückhaltevorrichtung eine Strammereinrichtung, vorzugsweise einen nach dem Flaschenzugprinzip arbeitenden Rotationsstrammer, mittels der der Abspannairbag zur Abspannung in Position und insbesondere auch in Richtung zum Fahrzeuginsassen hin einziehbar ist, so dass das sichere Halten des Abspannairbags in Position auch im Falle einer Belastung durch einen aufprallenden Insassen sichergestellt werden kann. Zur Abspannung des wenigstens einen Abspannairbags kann dabei wenigstens eine Strammereinrichtung im seitlichen Säulenbereich und/oder im rückwärtigen Bereich einer Sitzbank oder eines Fahrzeugsitzes angeordnet sein. Ferner kann vorgesehen sein, dass zusätzlich zu dem wenigstens einen Abspannairbag ein im seitlichen Fahrzeugbereich oder seitlichen Sitzbereich verstauter Thorax-Seitenairbag vorgesehen ist, der im aktivierten Zustand eine Verkleidung bzw. Sitznaht öffnet zur Freigabe einer Airbagaustrittöffnung, wobei durch die Airbagaustrittöffnung gegebenenfalls auch das Abspann- und Rückhaltemittel durchgeführt ist. Ein derartiger Thorax-Seitenairbag hat z. B. auch noch folgende weitere Funktionen: So können z. B. im Bereich der Türe oder des Fensters befindliche Körperteile wie z. B. einen Arm, durch den Seitenairbag weggedrückt werden, so dass diese z. B. nicht in Kontakt mit dem Seil als Abspann- und Rückhaltemittel kommen. Des weiteren befindet sich der Thorax-Seitenairbag zwischen dem Abspann- und Rückhaltemittel und dem Insassen und vermeidet somit einen Kontakt, was insbesondere in der Ausbildung der Abspann- und Rückhaltemittel als Seil, Band etc. von Vorteil ist. Des weiteren kann alternativ oder zusätzlich vorgesehen sein, dass das Abspann- und Rückhaltemittel des Abspannairbags im nicht aktivierten Zustand von einem Abspannairbag-Verstaubereich ausgehend entlang des Dachholmbereiches an der dem Fahrzeuginnenraum abgewandten Außenseite eines als Seitenvorhangairbag ausgebildeten Side-Curtains verlegt ist, wobei das Abspann- und Rückhaltemittel zur Anbindung an den Abspannairbag unter dem Side-Curtains verlegt ist und wobei bei der Zündung des Abspannairbags immer auch die Side-Curtains gezündet werden, durch die die Verkleidung aufgedrückt und das Abspann- und Rückhaltemittel nach unten gedrückt wird. Dadurch kann z. B. erreicht werden, dass die die oberen H-Schenkel bildenden Schlauchbereiche des Abspannairbags entbehrlich sind und das Abspann- und Rückhaltemittel auf der dem Fahrzeuginnenraum abgewandten Seite des bzw. der Side-Curtains verläuft. Mehrere Side-Curtains sind dann verwendet, wenn sich der Abstützairbag des Abspannairbags über die gesamte Fahrzeugbreite, z. B. im Fondbereich erstreckt. Grundsätzlich sind jedoch auch Einzelsitzpositionlösungen denkbar, so dass z. B. auf der dem Fahrzeugaufbau abgewandten Seite der Fahrzeuginsassensitzposition auch eine andere Maßnahme als ein Side-Curtain vorgesehen sein kann, wenn diese nicht unmittelbar an den Fahrzeugaufbau, wie z. B. eine Fahrzeugtüre, angrenzt. Selbstverständlich kann auch in Verbindung mit der Verlegung des Abspann- und Rückhaltemittels, z. B. eines Seiles, nach außen vorgesehen sein, dass dieses z. B. trotzdem noch mit einem Airbagschlauch ummantelt ist. Die Abspann- und Rückhaltevorrichtung kann je nach den individuellen Erfordernissen ausgelegt sein, so können die Abspann- und Rückhaltemittel dieser Abspann- und Rückhaltevorrichtung z. B. durch Seile und/oder Bänder und/oder Gurte gebildet sein. Diese können z. B. an in Fahrzeugquerrichtung gegenüberliegenden Seiten des Abspannairbags angebunden werden oder aber auch als einzelnes durch den Abspannairbag durchgehendes, z. B. durch eine Öse durchgehendes, Seil und/oder Band und/oder Gurt ausgebildet sein, die dann an ihren Austrittsbereichen endseitig in Richtung zum Fahrzeuginsassen geführt sind, um von hinten her abgespannt zu werden. Ein entsprechender Aufbau ist auch für den Fall möglich, dass die Abspann- und Rückhaltevorrichtung wenigstens einen sich beim Aufblasen in der Länge verkürzenden Airbag als Abspann- und Rückhaltemittel aufweist. In Verbindung mit einem zuvor erläuterten H-förmigen Zuschnitt des Abspannairbags können im Falle von derartigen Airbagschläuchen als Abspann- und Rückhaltemittel gegebenenfalls auch z. B. die unteren H-Schenkel dieses Airbagzuschnitts ersetzt werden, da die sich beim Aufblasen in der Länge verkürzenden Airbagschläuche in einer Doppelfunktion neben der Abspann- und Rückhaltefunktion gleichzeitig auch eine Abpolsterung für den Fahrzeuginsassen ausbilden. Besonders wichtig in Verbindung mit derartigen sich beim Aufblasen in der Länge verkürzenden Airbagschläuchen ist, dass die Längenverkürzung so ist, dass ein vorgebbarer Einzugsweg erzielt wird. Dies kann z. B. besonders einfach auch dadurch erreicht werden, dass der Airbagschlauch mäanderförmig gewunden ist, um durch diese mäanderförmige Ausbildung den Verkürzungsweg entsprechend der gewählten Mäanderform und -anzahl zu erhöhen. Alternativ dazu kann auch eine Vielzahl von einzelnen kleinvolumigen und miteinander strömungsverbundenen Kammern ausgebildet sein, die ebenfalls in der Summe einen vorgebbaren Verkürzungsweg ergeben. Zusätzlich dazu kann auch wenigstens ein U-förmiger Airbagschlauch vorgesehen sein, der in Fahrzeughochachsenrichtung gesehen jeweils am oberen und unteren Bereich des Abspannairbags mit seinen freien Enden angebunden ist. Dieser Airbagschlauch erstreckt sich vorzugsweise zum Teil entlang des Dachholmbereichs, anschließend entlang eines Säulenbereichs und wieder zurück zum Abspannairbag. Alternativ hierzu kann anstelle einer U-förmigen Ausbildung des Airbagschlauchs auch ein ringförmig geschlossener Airbagschlauch vorgesehen sein, der z. B. über eine Ösenverbindung mit dem Abspannairbag als solches verbunden ist.

Mit einer derartigen Vorrichtung kann vorteilhaft vermieden werden, dass eine zu hohe Belastungskraft auf ein davor liegendes Bauteil, z. B. einen Vordersitz, insbesondere z. B. auf die Sitzlehne des Vordersitzes, durch die Abstützung des z. B. Fondairbags wirkt, wodurch die oben beschriebenen negativen Auswirkungen vorteilhaft auf einfache Weise vermieden werden können. Eine derartige Vorrichtung kann vorteilhaft so ausgelegt werden, dass damit der wenigstens eine Airbag in Position und/oder in Richtung zum Insassen hin gezogen wird, um sicherzustellen, dass dieser sich in der für die Schutzwirkung des Airbags optimalen Position befindet und/oder dort gehalten wird. Dies ist insbesondere bei nicht angegurteten Insassen von erheblichem Vorteil. Ein derartiges Sicherheitssystem ist vorteilhaft vielfältigst einsetzbar. Nachfolgend wird in Verbindung mit weiteren Ausgestaltungen beispielhaft weitgehend auf die vorteilhafte Verwendung in Verbindung mit Fondairbags abgestellt. Grundsätzlich ist jedoch auch die Verwendung in Verbindung mit jeder Insassenposition, d. h. auch mit Frontairbags möglich, z. B. als Fahrer- und/oder Beifahrerairbag-Sicherheitssystem z. B. zur Vermeidung einer Abstützung an einem Lenkrad und/oder einer Instrumententafel mit hoher Abstützkraft. D. h., dass die erfindungsgemäße Sicherheitseinrichtung sowohl für jede Sitzreihe als auch für jeden Einzelsitzplatz eingesetzt werden kann.

Gemäß einer besonders bevorzugten, nicht zur Erfindung gehörigen Ausführungsform ist der Airbag durch eine Airbagmatte ausgebildet, die aus dem Dach vor dem Fondinsassen heraus entfaltet und aufgeblasen wird und z. B. von seitlichen Bändern und/oder sich beim Aufblasen in der Länge verkürzenden Airbags an die Fondinsassen, z. B. Kinder und/oder Erwachsene, herangezogen wird. Die seitlichen Bänder oder dergleichen können dabei z. B. durch Airbags oder durch ein Tuch oder dergleichen von den Insassen ferngehalten werden bzw. im Falle eines Airbags von diesem auch ummantelt sein, um eine Beeinträchtigung durch die Bänder oder dergleichen zu vermeiden. Unter Airbagmatte wird dabei jeder flächig vor einem Insassen aufblasbare Airbag verstanden, auch wenn er z. B. im Längsquerschnitt betrachtet eine mehr runde bzw. kugelige Form aufweisen sollte.

Zur Vermeidung von zusätzlichen Halsbelastungen können in dem Airbag auch Ausnehmungen als Kopfausnehmungen vorgesehen sein, die z. B. ein Durchtauchen der Köpfe ermöglichen. In den Kopfausnehmungen als Kopffenster können zudem aufblasbare Kopffensterairbags angeordnet sein, die mit dem Airbag strömungsverbunden sein können. Bei einem Durchtauchen des Kopfes des Fondinsassen durch das Kopffenster klappt der Kopffensterairbag vorzugsweise nach Aufreißen von Reißnähten zwischen Kopffensterairbag und umgebenden Öffnungsrandbereich in Fahrtrichtung gesehen nach vorne und verhindert so den ungedämpften Aufprall des Kopfes des Fondinsassen auf z. B. die Lehne des Vordersitzes. Somit kann der Kopf durch das Kopffenster durchtauchen und der Fondinsasse legt sich von oben auf die z. B. Airbagmatte als Fondairbag, wodurch die Halsbelastungen reduziert werden. Der Thorax- und Beckenbereich ist dabei im Wesentlichen durch die Airbagmatte geschützt. Die Airbagmatte weist zudem besondere Vorteile bei nicht angeschnallten Insassen auf, wenn sie über eine pre-crash-Sensorik ausgelöst wird.

Durch das Entfalten des Airbaggewebes mit z. B. etwas verzögertem Aufblasen des Airbags werden die Belastungen der Insassen auch bei sogenannten out-of-position-Situationen, d. h. somit bei Situationen, bei denen sich der Fahrzeuginsasse nicht in einer normalen Sitzposition befindet, reduziert. Der Airbag wird somit hier anfänglich schmaler gehalten, was dessen Aggressivität erheblich reduziert.

Die Abspannung und der Einzug der Matte erfolgt dabei vorzugsweise erst dann, wenn der Airbag aufgeblasen und im Wesentlichen in Abstützposition gebracht worden ist.

Der Airbag selbst kann auch kraftbegrenzt z. B. im Dachbereich mit der Airbagmodulbefestigung in Fahrzeugfahrrichtung nachgeben. Die z. B. Airbagmatte kann dabei z. B. mit einem n-Stufengenerator unter anderem in Abhängigkeit von einer out-of-position-Situation und/oder der Unfallschwere aufgeblasen werden und aus mehreren Kammern bestehen, die z. B. auch getrennt für entsprechende Energieabsorption oder Einflussnahme auf die Insassenkinematik in Abhängigkeit von Rückhaltesystemen, z. B. Gurt- oder Kinderrückhaltesysteme, befüllt werden.

Der Airbageinzug kann z. B. entlang der B-Säulen, der Schweller, des Sackes, der C-Säulen und seitlichen Sitzkonturen in Ruheposition erfolgen. Im Rückhaltefall werden die z. B. Bänder über Linear- oder Rotationsstraffer als bevorzugte Strammereinrichtungen dann angezogen, die die Airbagmatte dann aus dem Dachbereich nach unten und später zum Insassen hinziehen. Bei Verwendung eines Linearstraffers kann dieser auch nach dem Flaschenzugprinzip arbeiten. Damit ist ein großer Einzugsweg möglich. Die Strammereinrichtung kann zudem z. B. an einem geführten Schlitten bei der Aktivierung der Sicherheitseinrichtung in Fahrzeughochrichtung gesehen nach unten gezogen werden, wodurch der Einzugspunkt für die Entfaltung des Airbags vorteilhaft mitverlagert wird. Die Strammereinrichtung kann auch eine Kraftbegrenzung aufweisen, mit der ein gewünschtes Nachgeben im Belastungsfall erfolgen kann.

Die vorzugsweise seitlichen Bänder können dabei gleichzeitig mit und auch ohne Seitenairbags aus dem Dach in eine sogenannte Abspannposition gebracht werden und nach einem gewissen Zeitversatz über eine Strammereinrichtung z. B. im seitlichen Lehnenbereich gegen die Insassen gezogen werden.

Insbesondere in Verbindung mit einer Airbagmatte kann auch ein zusätzlicher Thoraxairbag, vorzugsweise eine zusätzliche Thoraxairbag-Kammer vorgesehen sein, die z. B. über die Airbagmatte oder separat z. B. nach einem Zeitversatz zur Mattengeneratorzündung separat mit einer weiteren Generatorstufe aufgeblasen werden kann.

Für den Fall, dass die Abspannung des Airbags mittels eines sich beim Aufblasen in der Länge verkürzenden Airbagschlauchs erfolgt, aber ebenso bei seitlichen Bändern, die jeweils in der Nichtgebrauchsposition hinter einem Innenverkleidungsteil angeordnet sind, kann bei der Aktivierung gleichzeitig auch seitlich eine Airbagmatte oder ein Tuch oder ein Netz oder dergleichen aus dem Dachbereich mit herausgezogen werden. Neben einer Abdeckung der seitlichen Bänder oder des Seitenbereichs kann hier unter Umständen auch eine Entschärfung der Interaktion der Insassen benachbarter Sitzpositionen bei einem z. B. Seitenaufprall mit einem z. B. mittleren Airbag erheblich entschärft werden, was insbesondere dann von Vorteil ist, wenn sich im Fondbereich kein dritter Sitzplatz hinten in der Mitte befindet. Mit der Größe des Thoraxairbags oder der Thoraxairbag-Kammer wird die Kinematik des Insassen beeinflusst. Durch das spätere Aufblasen wird die out-of-position-Situation vorteilhaft entschärft, wobei in Abhängigkeit von der z. B. mittels einer Sensoreinrichtung sensierten Fondinsassenposition von einer Steuereinrichtung entschieden wird, ob die Airbagkammer bzw. der Airbag zusätzlich zum eigentlichen Absützairbag für die Insassen, der diese von vorne her schützen soll, überhaupt aufgeblasen werden soll. Grundsätzlich ist aber auch eine Abspannung und/oder Rückhaltung mittels anderer Mittel als den zuvor erwähnten möglich, so z. B. mittels Seitenairbags, separaten Airbags etc.

Gemäß einer weiteren bevorzugten Ausgestaltung sind der wenigstens eine Airbag und die wenigstens eine Rückhalteeinrichtung durch wenigstens einen sich beim Aufblasen in der Länge verkürzenden Airbagschlauch als Abspannschlauch ausgebildet, der im nicht aktivierten Zustand hinter einem Innenverkleidungsteil zwischen zwei voneinander beabstandeten Abspannschlauch-Anbindungsstellen verläuft. Der wenigstens eine Abspannschlauch ist im aktivierten Zustand vor der wenigstens einen Fondinsassenposition im Fahrzeuginnenraum zwischen den beiden Abspannschlauch-Anbindungsstellen verspannbar zum Auffangen und gezielten Verzögern der Fondinsassen im Wesentlichen unter Vermeidung einer Abstützung des wenigstens einen Abspannschlauchs an einem Vordersitz.

Derartige Abspannschläuche werden gemäß einer nicht beanspruchten Variante so verlegt und gewebt, dass sie sich im aufgeblasenen Zustand aus den jeweiligen Verkleidungsteilen lösen und sich in z. B. der Fahrzeugquerebene im Bereich zwischen den Frontsitzen und den Fondinsassen so verspannen, dass sie die gegurteten, aber auch die ungegurteten Fondinsassen, im Falle eines Frontaufpralls auffangen und gezielt verzögern bei möglichst geringer Belastungskraft auf die Vordersitze. Zwischen den parallel und/oder gekreuzten Abspannschläuchen können Tücher oder Netze mit und ohne Ausnehmungen z. B. zur Optimierung der Fondinsassenkinematik vorgesehen sein. Derartige Ausnehmungen sind z. B. für ein begrenztes Kopfdurchtauchen möglich. Die Abspannschläuche können im Tuch oder Netz integriert sein mit unterschiedlichen Durchmessern, je nach erforderlicher Energieumwandlung und/oder erforderlicher Abstützkraft. Die Lagerstellen als Anbindestellen der Abspannschläuche z. B. im Dach-, Säulen- und Schweller- bzw. TunnelBereich können beliebig so gewählt werden, dass unter Berücksichtigung von out-of-position-Situationen oder auch normalen Sitzpositionen der Fondinsassen das beste Schutzpotential durch Abspannung des Systems ohne Gefährdung gewährleistet ist.

Zur zusätzlichen Abspannung können diese Anbindestellen oder Lager selbst zur Strammung auch crashaktiv verschiebbar ausgebildet sein oder können beim Verschieben in Belastungsrichtung als Kraftbegrenzer genutzt werden.

Bei statischen Lagern kann ebenfalls eine Straffung des Systems über z. B. Seilstraffer erfolgen.

Die Abspannung kann auch als Ladungsschutz zwischen Fondinsassen und Laderaum und bei umgeklappter Fondsitzlehne zwischen Frontinsassen und erweitertem Laderaum gespannt sein.

Das Abspannsystem ist auch als Interaktionsschutzsystem zwischen den Insassen in der Fahrzeuglängsrichtungsebene denkbar.

Durch Nachblasen oder Aufblasen mit unterschiedlich schnellen Generatoren mit gleichen oder unterschiedlichen Gasvolumen kann das Entfalten, die Energieaufnahme und die Standzeit der Abspannschläuche sowie gegebenenfalls damit gekoppelter Airbags angepasst werden.

Unter Berücksichtigung von out-of-position-Situationen ist es denkbar, dass sich erst das Tuch und/oder das Netz wie ein Vorhang bzw. Curtain aus z. B. dem Dach nach unten entfaltet, was z. B. durch einen schnellen Gasstrom bewirkt wird. Anschließend können dann mit dem langsameren Generatorgasstrom mit längerer Ausströmzeit, die im Netz und/oder Tuch und/oder der Matte integrierten Abspannschläuche aufgeblasen und gestrammt werden.

Über eventuell vorgesehene Bypässe können aus einem Generator über unterschiedliche Durchmesser von Leitungen unterschiedliche Kammern in den Abspannschläuchen oder die Abspannschläuche selbst unterschiedlich von der Zeit und vom Volumen (Druck) gefüllt werden.

Die Abspannschläuche und/oder die Airbags und/oder die Strammereinrichtungen können auch einzeln angesteuert werden, z. B. je nach Unfallschwere und Energieabsorption, z. B. über pre-crash, Kontakt- und/oder Early- und Crashsensorik. Dabei können auch unterschiedliche Sitzarten, Sitzpositionen, Insassen (Kinder, Erwachsene) und Ladungsverhältnisse sowie die Unfallschwere und -richtung berücksichtigt werden.

Das Abspannsystem kann sich über die gesamte Fahrzeugquerrichtung vor dem Fondinsassenbereich erstrecken und dabei eine Höhenerstreckung vom Dach bis zum Fußboden aufweisen. Ebenso ist es möglich, dass auch nur Teilbereiche dieser Ebenen abgedeckt werden, wobei auch eine Abspannung des Abspannsystems insgesamt, z. B. durch zusätzliche Bänder oder Airbagschläuche, die sich beim Aufblasen in der Länge verkürzen, vorgesehen sein kann.

Besonders bevorzugt sind Ausgestaltungen, bei denen mittels wenigstens einem Abspannschlauch wenigstens ein Airbag im Fahrzeuginnenraum aufspannbar oder abstützbar ist. Dabei kann der wenigstens eine Airbag über den wenigstens einen Abspannschlauch, vorzugsweise druckgesteuert in Abhängigkeit vom Abspannschlauch-Fülldruck über eine z. B. Drosselverbindung, oder mittels einer separaten Befüllvorrichtung mit Gas, je nach der konkreten Ausführungsform, beaufschlagt werden.

Im nicht aufgeblasenen Zustand können die Abspannschläuche sowie gegebenenfalls die damit gekoppelten oder die damit abgestützten Airbags hinter Verkleidungsteilen, z. B. im B-Säulenbereich und/oder im Dachbereich integriert sein.

Die Abspannschläuche können einzeln oder auch insgesamt mit zusätzlichen Airbagkammern zur Energieabsorption ausgebildet sein, wobei die Kammern z. B. über Drosseln miteinander verbunden sein können. Eine Energieabsorption kann dann hier z. B. über die Drossel-Strömungsverluste erfolgen.

In Verbindung mit den Abspannschläuchen können auch zusätzliche Spannbänder vorgesehen sein, die z. B. die Abspannschläuche in derartige Positionen ziehen, dass z. B. ein Durchtauchen des Kopfes, falls dies erforderlich ist, möglich ist, z. B. für den Fall, dass sich ein Oberkörper bereits an einem zusätzlichen Stützbag oder Thoraxairbag abstützt.

Bei einer zusätzlichen Abstützung des Abspannsystem nach hinten über zusätzliche Airbagschläuche, die sich beim Aufblasen in der Länge verkürzen, kann vorgesehen sein, dass diese im nicht aufgeblasenen Zustand im Dachbereich oder aber auch im Schwellerbereich und im Tunnelbereich und/oder an den Türen integriert sein können.

Grundsätzlich können die einzelnen Airbagschläuche jeweils mit einem separaten Gasgenerator befüllt werden. Alternativ hierzu ist jedoch auch eine Strömungsverbindung unter wenigstens einem Teil der vorgesehenen Abspannschläuche möglich. Auch eine Integration von Zündschnüren oder dergleichen in das System ist möglich.

Besonders bevorzugt sind Ausgestaltungen, bei denen ein Abspannschlauch ein Tuch und/oder ein Netz und/oder eine Matte nach unten zieht und diese im abgespannten Zustand des Abspannschlauches ebenfalls spannt. Hierzu können auch Umlenksysteme über Umlenkrollen vorgesehen sein.

Gemäß einem nicht beanspruchten Aufbau, bei dem gleichzeitig im aktivierten Zustand ein Seitenaufprallschutz durch Seitenairbags vorgesehen ist, verläuft zwischen denen im Wesentlichen ein quer verlaufender Abspannschlauch. Ein derartiger quer verlaufender Abspannschlauch kann einerseits selbst einen Insassenaufprallschutz ausbilden oder aber auch noch mit einem zusätzlichen z. B. Thoraxairbag, Kopfairbag und/oder Knieairbag gekoppelt sein oder diese lediglich auch nur von hinten her abstützen. Für besonders aufprallkritische Systeme empfiehlt sich noch die zusätzliche Abstützung durch z. B. V-förmige zusätzliche Abspann- und Stützschläuche. Derartige Abstütz-Abspannschläuche können einzeln ausgebildet sein oder aber auch im Quer-Abspannschlauch integriert sein. Die Lagerstellen des Abstütz-Abspannschlauchs sind beliebig am Schwellerbereich und/oder im B-Säulenbereich und/oder im Dachbereich und/oder im Fensterschachtbereich wählbar. Die Seitenairbags, die wenigstens zum Teil auch einen sich beim Aufblasen in der Länge verkürzenden seitlichen Airbagschlauch umfassen, sind vorzugsweise mit dem Quer-Abspannschlauch strömungsverbunden. Grundsätzlich ist jedoch auch eine separate Ausbildung möglich. Auch eine crashaktive Lagerung der einzelnen Bestandteile dieses Abspannsystems ist grundsätzlich möglich. Auch bei diesem Abspannsystem können die freien Flächen zwischen den einzelnen Abspannschläuchen bzw. Airbagschläuchen und den z. B. dort vorgesehenen integrierten oder aber auch separaten und lediglich abgestützten Kopf- und/oder Thorax- und/oder Knieairbags mit Tüchern, Matten oder Netzen geschlossen werden.

Grundsätzlich kann das nicht zur Erfindung gehörige Abspannsystem auch aus einem einzigen Abspannschlauch mit z. B. vier Lagerstellen bestehen, wobei zwei Lagerstellen im Dachbereich und jeweils eine Lagerstelle an den gegenüberliegendem B-Säulenbereich vorgesehen ist. Zusätzlich kann mit einem derartigen Abspannschlauch auch ein weiterer Airbag, z. B. ein Thoraxairbag, integral verbunden oder abgestützt sein. Die Freiräume zwischen dem Fahrzeug und einem derartigen Abspannschlauch können auch hier wieder durch zusätzliche Airbags, Matten, Netze oder Tücher zur Vermeidung der Interaktion der Front- und Fondinsassen und des Ladungsschutzes geschlossen werden.

Sofern die Abspannschläuche gleichzeitig zum Abspannen und zur Energieumwandlung dienen, können sie z. B. in Spannrichtung mit unterschiedlichen Querschnitten, Materialien und Geweben ausgelegt sein. Dabei kann vorgesehen werden, dass z. B. in einer ersten Gasgeneratorstufe lediglich ein Spannschlauch mit üblicher länglicher Geometrie aufgeblasen wird und anschließend in einer zweiten Generatorstufe die Kammern aus dem Spannschlauch heraus in einzelnen Bereichen aufgeblasen werden. Der Übergang zu den einzelnen Kammern kann hierbei über entsprechende Drosseln gesteuert sein. Denkbar ist hierbei auch, dass der Abspannschlauch mit integrierten Kammern in unterschiedlichen Größen mit z. B. einem sogenannten "Smart-Venting"-System ausgestattet ist, d. h., dass die Kammern erst dann die Austrittsöffnungen öffnen, wenn sich durch die Insassenbelastungen der Druck erhöht. Das Überströmen kann dabei z. B. auch in Abhängigkeit von der Unfallschwere, der Sitzposition, der Schwere und Größe des Insassen gezielt zugelassen werden, wobei eventuell mehrere derartige Öffnungen bzw. Vents vorgesehen sind.

Ein Abspannsystem bzw. ein einziger Abspannschlauch kann auch aus mehreren parallelen Schlauchteilen bestehen. Denkbar sind hierbei auch Kombinationen von Abspannschläuchen, die netzartig aufgeblasen sind.

Die strukturierten Abspannsysteme können auch integrierte oder aufgesetzte Airbagkammern enthalten, die ein Verdrehen dieser Airbags bei Belastung vermeiden. Z. B. können parallele Abspannschläuche mit integrierter Airbagkammer zur Energieumwandlung vorgesehen sein, wobei die Airbagkammer auch die Abspannschläuche strömungsverbindet und sich die Abspannschläuche und die Airbagkammern gegenseitig stabilisieren.

Gemäß einer weiteren besonders bevorzugten, nicht zur Erfindung gehörigen Ausgestaltung ist ein in der Draufsicht H-förmiger Airbag vorgesehen, der aus zwei Seitenairbags und einem im Fondbereich vor dem Fondinsassen aufblasbaren Fondairbag aufweist. Mit den Seitenairbags wird hier vorteilhaft hinter der Lehne der Vordersitze gleichzeitig der Fondairbag aufgeblasen. Die Seitenairbags dienen hier zur Führung und Abstützung des Fondairbags. Der Fondairbag kann aber auch getrennt von den Seitenairbags z. B. über Schläuche befüllt werden.

Gemäß einer weiteren bevorzugten, nicht zur Erfindung gehörigen Ausgestaltung erstreckt sich der wenigstens eine Fondairbag in Fahrzeugquerrichtung und damit in Längsrichtung des Fondairbags gesehen zwischen gegenüberliegenden Fahrzeugseiten und ist dort jeweils mit einem im aktivierten Zustand vorhangartig vor einem Fahrzeugseitenbereich mittels Spann- und/oder Befestigungsmitteln aufspannbaren Seitenairbag als Side-Curtain verbunden, wobei die Seitenairbags zugleich als Rückhaltevorrichtung den wenigstens einen Fondairbag in der vorgebbaren Rückhalteposition halten. Ein derartiger Aufbau ist relativ einfach mit den ohnehin vorhandenen Seitenairbags zu realisieren, die somit hier gleichzeitig in einer Doppelfunktion als Rückhaltevorrichtung für den wenigstens einen Fondairbag fungieren. Dadurch kann die Bauteilvielfalt vorteilhaft reduziert werden.

Besonders bevorzugt ist hierbei noch eine Ausführungsform, bei dem zwischen zwei benachbarten Fondinsassensitzpositionen ein Interaktionsairbag vorgesehen ist, mit dem eine Interaktion von zwei benachbart sitzenden Fondinsassen vorteilhaft vermieden werden kann. Ein derartiger Interaktionsairbag kann gleichzeitig auch ebenfalls in einer Funktion als Rückhaltevorrichtung den wenigstens einen Fondairbag in der vorgebbaren Rückhalteposition halten und bewirkt hier somit eine vorteilhafte Stabilisierung des Fondairbags im aktivierten Zustands der Sicherheitseinrichtung.

Gemäß einer weiteren bevorzugten, nicht zur Erfindung gehörigen Ausgestaltung ist vorgesehen, dass sich der wenigstens eine Fondairbag in Fahrzeugquerrichtung und damit in Längsrichtung des Fondairbags gesehen zwischen gegenüberliegenden Fahrzeugseiten erstreckt und dort jeweils mittels einer Verschiebeverbindung mit einem im aktivierten Zustand vorhangartig vor einem Fahrzeugseitenbereich aufblasbaren Seitenairbag als Side-Curtain entlang eines Verschiebeweges verschiebbar verbunden ist. Der wenigstens eine Fondairbag ist mit wenigstens einer Abspanneinrichtung als Rückhaltevorrichtung verbunden, die den wenigstens einen Fondairbag im aktivierten Zustand der Sicherheitseinrichtung gegebenenfalls unter Verschiebung entlang wenigstens eines Teilbereichs des Verschiebeweges der Verschiebeverbindung in Richtung Fahrzeuginsassen zieht und dort hält. Mittels einer derartigen Verschiebeverbindung wird vorteilhaft ein sicheres und gezieltes Überführen des wenigstens einen Fondairbags in die vorgesehene Rückhalteposition möglich. Dabei wird mittels der Verschiebeverbindung sichergestellt, dass der wenigstens eine Fondairbag, der vorzugsweise regelmäßig zeitversetzt nach den Side-Curtains aufgeblasen wird, da diese den wenigstens einen Fondairbag im Fahrzeuginnenraum positionieren sollen, dann für den Fall, dass der sich aufblasende wenigstens eine Fondairbag sich noch nicht in der optimalen vorgegebenen Rückhalteposition befindet, mittels der Rückhaltevorrichtung entlang des Verschiebeweges einfach und funktionssicher in die vorgegebene Rückhalteposition überführt und dort auch gehalten werden kann. Die als Abspanneinrichtung ausgeführte Rückhaltevorrichtung kann z. B. durch einen Gurt oder ein Seil gebildet sein, die mit einer Strammereinrichtung verbunden und mittels dieser straffbar sind. Alternativ oder zusätzlich dazu kann die Rückhaltevorrichtung jedoch auch durch einen sich beim Aufblasen in seiner Länge verkürzenden Airbagschlauch gebildet sein, der dann vorzugsweise auch noch eine Abschirmfunktion gegen aufprallharte Bauteile übernehmen kann. Besonders bevorzugt weist die Verschiebeverbindung wenigstens eine am Seitenairbag oder am Fondairbag ausgebildete Airbagnase auf, die einen am Fondairbagbereich oder am Seitenairbagbereich ausgebildeten Führungsschlitz als Gegenelement der Verschiebeverbindung hintergreift. Eine derartige Führungsschlitzanordnung ist bei hoher Funktionssicherheit relativ einfach herstellbar, wobei der Führungsschlitz vorzugsweise am Seitenairbag ausgebildet ist. Grundsätzlich kann der Führungsschlitz jedoch auch in umgekehrter Weise am Fondairbag ausgebildet sein. Der Führungsschlitz als solches kann z. B. durch entsprechende Umnähungen an der Seitenairbaginnenwand gebildet sein oder aber auch durch hier angebrachte Kunststoffleisten oder aber auch durch separate Airbagkammern, die jeweils die Airbagnasen hintergreifen. Durch den Einsatz von Kraftbegrenzem kann die Kinematik des wenigstens einen Fondairbags und damit auch die der Fondinsassen gezielt beeinflusst werden. So können beispielsweise derartige Kraftbegrenzer out-of-position-Situationen entschärfen, da ein kraftbegrenztes Nachgeben einzelner Bauteile der Sicherheitseinrichtung möglich ist.

Für den nicht zur Erfindung gehörigen Fall, dass der wenigstens eine Fondairbag durch einen getrennten Kopfairbag und Thoraxairbag gebildet ist, ist jeder dieser Airbags mit z. B. einem Seil als Rückhaltevorrichtung verbunden, wobei dann der Einzug der Seile vorzugsweise mittels einer einzigen Strammereinrichtung erfolgt, da hierdurch dann die optimale Positionierung lediglich durch eine einzige Strammereinrichtung sichergestellt werden kann. Im Falle von getrennten Kopf- und Thoraxairbags können diese auch untereinander strömungsverbunden sein. So könnte beispielsweise ab einem bestimmten Fühldruck im Thoraxairbag z. B. Gas in den Kopfairbag überströmen und damit das benötigte Gasvolumen für das gesamte System reduziert werden bzw. damit auch z. B. out-of-position-Situationen entschärft werden.

Gemäß einer weiteren alternativen, nicht zur Erfindung gehörigen Ausgestaltung ist vorgesehen, dass sich der wenigstens eine Fondairbag in Fahrzeugquerrichtung und damit in Längsrichtung des Fondairbags gesehen zwischen gegenüberliegenden Fahrzeugseiten erstreckt und dort jeweils mit einem im aktivierten Zustand vorhangartig vor einem Fahrzeugseitenbereich aufblasbaren Seitenairbag als Side-Curtain verbunden ist. Die Side-Curtains erstrecken sich im aufgeblasenen Zustand in ihrer Längserstreckung, vorzugsweise von einem A-Säulenbereich ausgehend, lediglich bis in etwa zum Aufblasbereich des wenigstens einen Fondairbags vor einer Fondinsassenposition, d. h. z. B. lediglich bis in den Bereich hinter einer Vordersitzlehne. Die Side-Curtains und der Fondairbag sind im seitlichen Fahrzeugbereich mit wenigstens einem sich beim Aufblasen in der Länge verkürzenden Airbagschlauch als Abspannschlauch verbunden, der mit einem weiteren Anbindungspunkt am Fahrzeug, vorzugsweise im C-Säulenbereich, angebunden ist. Die sich beim Aufblasen verkürzenden Airbagschläuche halten die Side-Cutains und den wenigstens einen Fondairbag in einer Rückhalteposition vor einer Fondinsassensitzposition, wobei die aufgeblasenen, verkürzten Airbagschläuche zudem in der Art von Seitenairbags den seitlichen Fondinsassenbereich abdecken. Besonders vorteilhaft wird hier somit über die Airbagschläuche einerseits eine Positionierung und Abspannung der Side-Curtains und des wenigstens einen Fondairbags erzielt, wobei die Airbagschläuche in einer vorteilhaften Doppelfunktion zudem auch den seitlichen Fondinsassenbereich abdecken. Dadurch brauchen die Side-Curtains insgesamt nicht so groß wie generell üblich ausgebildet werden, wodurch Materialaufwand und Kosten eingespart werden können. Insgesamt wird daher somit hier ein einfacher und auch kostengünstiger Aufbau einer Sicherheitseinrichtung geschaffen. Bevorzugt wird hier beim Frontalaufprall zuerst der Side-Curtain aufgeblasen. Dieser bringt dann den z. B. als Kopf-/Thoraxairbag ausgebildeten Fondairbag zusammen mit den Airbagschläuchen in Position. Nach Positionierung wird dann der Kopf-/Thoraxairbag aufgeblasen, z. B. mittels Schnurgasgeneratoren, und anschließend die Airbagschläuche aufgeblasen, um den Side-Curtain zu spannen und den Kopf-/Thoraxairbag in Richtung Fondinsassen zu ziehen und über gewünschte Rückhalteposition zu positionieren. Durch diese zeitliche Reihenfolge des Aufblasens können somit insbesondere die out-of-position-Situationen entschärft werden. Das gesamte System wird auch bei einem Seitenaufprall gezündet, wobei hier gegebenenfalls in Abhängigkeit von einer erfassten Kollisionsrichtung z. B. bloß die seitlichen Airbagschläuche und der Side-Curtain aufgeblasen werden, nicht dagegen der wenigstens eine Fondairbag, falls dieser nicht benötigt wird. Je mehr also eine Vorwärtskomponente beim Crash relevant ist, um so mehr ändern sich die Zeitversätze der Zündzeitpunkte des Systems. Die Zündung der einzelnen Bags, die Zündreihenfolge und der Zeitversatz der Zündungen der einzelnen Bags ist also abhängig von der Kollisionsrichtung.

Gemäß einer weiteren alternativen, nicht zur Erfindung gehörigen Ausgestaltung ist vorgesehen, dass der wenigstens eine Fondairbag im aktivierten Zustand in seiner Längserstreckungsrichtung in Fahrzeugquerrichtung gesehen Bereiche unterschiedlicher Dicke zur Ausbildung von Einbuchtungen aufweist. Diese Einbuchtungen sind jeweils einer Fondinsassensitzposition zugeordnet, so dass die seitlichen Verdickungen einen Schrägaufprallschutz und die zwischen zwei Einbuchtungen liegende Verdickungen einen Interaktionsschutz ausbildet. Ein derartiger Fondairbag braucht nicht unbedingt abgespannt zu sein, wobei jedoch im Falle einer vorgesehenen Abspannung mittels einer Rückhaltevorrichtung die Abspannung vorzugsweise unterhalb des Dachbereiches verläuft. Alternativ dazu kann selbstverständlich auch eine seitliche Abspannung vorgesehen sein.

Gemäß einer weiteren besonders bevorzugten Ausführungsform der Erfindung ist der wenigstens eine im Fahrzeuginnenraum abspannbare Airbag als Abspannairbag im nicht aktivierten Zustand im Dachbereich, vorzugsweise im Dachhimmelbereich hinter einem Dachverkleidungsteil verstaut, wobei dieser Abspannairbag vorzugsweise wenigstens einen Airbagbereich aufweist, der zu Beginn der Aktivierung des Airbagmoduls die Verkleidung zur Freigabe wenigstens einer Airbagaustrittöffnung für den Abspannairbag aufdrückt. Diese Airbagbereiche können somit in einer Doppelfunktion gleichzeitig als Aufprallschutz und auch zur Öffnung von Verkleidungsteilen, z. B. auch zur Freigabe der Abspann- und/oder Rückhaltemittel, wie z. B. Bändern, Seilen, etc. dienen.

Gemäß einer weiteren alternativen, nicht zur Erfindung gehörigen Ausbildung kann in den Airbagschlauch auch ein aufblasbares Ringteil integriert sein, das im aufgeblasenen Zustand eine besonders vorteilhafte Verkürzung des Airbagschlauchs insgesamt bewirkt. Der Innenhohlraum dieses Ringteils kann beispielsweise auch mit einem Airbag ausgefüllt sein, der im aufgeblasenen Zustand eine zusätzliche Ausdehnung des Durchmessers des Ringteiles bewirkt und dadurch eine zusätzliche Verkürzung des Airbagschlauches. Alternativ oder zusätzlich dazu kann auch noch ein separates Zugmittel, z. B. ein Seil vorgesehen sein, mittels dem der Ringdurchmesser ebenfalls zur weiteren Airbagschlauchverkürzung vergrößerbar ist.

Gemäß einer weiteren alternativen, nicht zur Erfindung gehörigen Ausgestaltung ist vorgesehen, dass zur Rückhaltung und Abspannung des wenigstens einen Abspannairbags wenigstens ein mit dem Abspannairbag strömungsverbundener Airbagschlauch vorgesehen ist, der vorzugsweise durch einen sich beim Aufblasen in der Länge verkürzenden Airbagschlauch gebildet ist. Dieser Airbagschlauch ist zur Abspannung mittels einer Einzugseinrichtung und/oder einer Strammereinrichtung durch einen sich verjüngenden Einzugstrichter ziehbar, und zwar dergestalt, dass dabei das sich im Airbagschlauch befindliche Gas in den strömungsverbundenen Abspannairbag gedrückt wird. Ein derartiger Einzugstrichter kann dabei z. B. einen runden oder aber auch einen eckigen Querschnitt aufweisen. Das in den Abspannairbag gedrückte Gas wird somit hier vorteilhaft zur nochmaligen Erhöhung des Gasvolumens des sog. Hauptairbags des Abspannairbags ausgenutzt.

Bei einem weiteren, nicht beanspruchten Aufbau ist der Abspannairbag in einer im Querschnitt U-förmigen Airbaggehäuse aufgenommen ist, wobei die Mündung des Airbaggehäuses mit einer durch den sich aufblasenden Abspannairbag aufdrückbaren, vorzugsweise aufschwenkbaren Abdeckung verschlossen ist, mittels der zudem gegebenenfalls eine Richtungslenkung des Abspannairbags in den Fahrzeuginnenraum hinein erfolgt, und zwar vorzugsweise unter Aufdrücken der Verkleidung durch Aufreißen einer Sollaufreißlinie. Dadurch wird ein besonders vorteilhafter flachbauender Airbagmodulaufbau möglich, der im Bereich des Dachhimmels integriert auch zu einem insgesamt wenig hoch aufbauenden Dachhimmelaufbau führt, was sich vorteilhaft auf die im Fahrzeuginnenraum zur Verfügung stehende Kopffreiheit der Insassen auswirkt.

Weiter ist es gemäß einer Ausgestaltung möglich, im Falle mehrerer hintereinander liegender Sitzreihen für jede der Sitzreihen wenigstens einen Abspannairbag vorzusehen, wobei diese in unterschiedlichen Sitzreihen aufspannbaren Abspannairbags vorteilhaft untereinander durch Abspannmittel, wie z. B. Seile und/oder Bänder und/oder Gurte und/oder sich beim Aufblasen in der Länge verkürzende Airbagschläuche, gekoppelt sind. Zur Abspannung der Abspannairbags kann dabei wenigstens eine Strammereinrichtung vorgesehen sein, deren Abspannmittel mit jedem der Abspannairbags gekoppelt ist. Die Strammereinrichtung kann dabei z. B. im Bereich der in Fahrtrichtung gesehen hintersten Sitzreihe angeordnet sein.

Ferner kann das Gas mittels wenigstens einem Gasgenerator so in den wenigstens einen Airbag, gegebenenfalls unter Zwischenschaltung wenigstens einer Gaslanze, eingeleitet werden, dass der wenigstens eine Abspannairbag oder lediglich Teilbereiche davon zu Beginn der Aktivierung der Sicherheitseinrichtung in einer vorgegebenen Richtung aufgeblasen werden und/oder eine Kraft auf einen vorgegebenen Bereich eines Bauteils, vorzugsweise einer Verkleidung, ausüben. Der wenigstens eine Gasgenerator ist dabei vorzugsweise in Fahrtrichtung vor der Abspannairbag-Verstauposition angeordnet, so dass der wenigstens eine Gasgenerator im aktivierten Zustand das Gas entgegen die Fahrtrichtung in den wenigstens einen Abspannairbag und/oder Teile davon einbläst, vorzugsweise zuerst in die die Verkleidung aufdrückenden Teilbereiche oder Airbags einbläst. Dadurch wird ein vorteilhaftes schnelles und funktionssicheres Aufblasen und Positionieren des Airbags im Fahrzeuginnenraum sowie dessen Abspannung möglich. Gegebenenfalls können einzelne Airbags oder Airbagteilbereiche auch mit einem Zeitversatz, von z. B. 10 ms aufgeblasen werden.

Gemäß einer weiteren Ausgestaltung ist der Abspannairbag mehrteilig aus wenigstens einem sich vor einer Fahrzeuginsassensitzposition aufblasbaren Abstützairbag und wenigstens einem damit integral verbundenen oder separat als Einzelairbag ausgebildeten und/oder aufblasbaren weiteren Airbagteil aufgebaut.

Gemäß einer weiteren, nicht zur Erfindung gehörigen Ausgestaltung der Erfindung kann der wenigstens eine Airbag im aktivierten, aufgeblasenen Zustand eine U-Form aufweisen, wobei die Positionier- und/oder Abspann- und/oder Rückhaltevorrichtung durch die vorzugsweise als Seitenairbag den Fahrzeugseitenbereichen zugeordneten U-Schenkel ausgebildet ist und die U-Basis den eigentlichen Abstützairbag ausbildet. Grundsätzlich besteht hierbei jedoch auch die Möglichkeit, diese U-Form um eine Fahrzeuginsassensitzposition herum aufzublasen unabhängig von einer Ausbildung der U-Schenkel als Seitenairbag. Insbesondere in Verbindung mit einer sich über die gesamte Fahrzeugbreite einer Sitzreihe erstreckenden U-Basis mit den Fahrzeugseitenbereichen als Seitenairbag zugeordneten U-Schenkeln kann auch vorgesehen sein, dass zwischen jeweils zwei Insassensitzpositionen noch ein weiterer Schenkel z. B. als Interaktionsairbag vorgesehen ist, so dass dann in der Draufsicht insgesamt eine z. B. E-Form ausgebildet wird. Im Bereich der U-Basis und/oder wenigstens eines der U-Schenkel kann auch noch wenigstens eine weitere Ausnehmung vorgesehen sein, die z. B. eine Sicht-Ausnehmung als Sichtfenster ausbildet. Letzterer Aufbau mit einer Sicht-Ausnehmung ist auch in Verbindung mit einem Airbag möglich, der im aktivierten Zustand eine L-Form aufweist, wobei einer der L-Schenkel den eigentlichen Abstützairbag und der andere L-Schenkel, der vorzugsweise als Seitenairbag einem Fahrzeugseitenbereich zugeordnet ist, die Positionier- und/oder Abspann- und/oder Rückhaltevorrichtung ausbildet. Die L-Form kann dabei auch hier einer oder auch mehreren Fahrzeuginsassenpositionen zugeordnet sein. Besonders bevorzugt ist eine Anordnung, bei der z. B. in Verbindung mit zwei oder aber auch drei in einer Reihe befindlichen Fahrzeuginsassensitzpositionen zwei L-förmige Airbags zu einer insgesamt U-Form ergänzt werden.

Zur Massenreduktion kann vorgesehen sein, dass wenigstens einer der Bestandteil der Sicherheitseinrichtung bildenden Airbags und/oder Airbagschläuche in der one-piece-woven-Technik hergestellt ist.

Die Sicherheitseinrichtung oder Bestandteile davon können ferner auch zur Ausbildung eines Dachhimmelmoduls in den Dachhimmel integriert sein.

Des weiteren kann vorgesehen sein, dass der wenigstens eine Airbag oder aber auch sämtliche Airbags, bei einem Aufprall auf diesen für einen abgasfreien Innenraum insbesondere über wenigstens eine vorzugsweise im Dachhimmel angeordnete Ventilanordnung nach außerhalb des Fahrzeuginnenraums abblasen.

Die Erfindung wird nachfolgend anhand einer Zeichnung näher erläutert, wobei die Figuren 1 bis 48, 52 sowie 54 bis 82 nicht beanspruchte Ausführungsformen zeigen.

Es zeigen:
- Fig. 1: eine schematische Darstellung einer Seitenansicht des Fondbereichs des Kraftfahrzeuges mit einer Sicherheitseinrichtung im aktivierten Zustand,
- Fig. 2: eine schematische Darstellung einer Seitenansicht des Fondbereichs des Kraftfahrzeuges mit einer alternativen Ausführung einer Sicherheitseinrichtung im aktivierten Zustand,
- Fig. 2a: eine schematische Darstellung einer Seitenansicht des Fondbereichs des Kraftfahrzeuges mit einer weiteren Ausführung einer Sicherheitseinrichtung im aktivierten Zustand,
- Fig. 2b: eine schematische Darstellung einer Seitenansicht des Fondbereichs des Kraftfahrzeuges mit einer weiteren Ausführungsform einer Sicherheitseinrichtung im aktivierten Zustand,
- Fig. 2c: eine schematische Darstellung einer Ansicht in Fahrzeuglängsrichtung des Fondbereiches des Kraftfahrzeuges mit einer weiteren Ausführung einer Sicherheitseinrichtung im aktivierten Zustand,
- Fig. 2d: eine schematische Schnittdarstellung in Fahrzeughochrichtung durch die Airbagmatten der Fig. 2c in einer Weiterbildung,
- Fig. 3: eine schematische Darstellung einer Seitenansicht des Fondbereichs des Kraftfahrzeuges mit einer weiteren Ausführung einer Sicherheitseinrichtung im aktivierten Zustand,
- Fig.4: eine schematische Darstellung einer Seitenansicht des Fondbereichs des Kraftfahrzeuges mit einer weiteren Ausführungsform einer Sicherheitseinrichtung im aktivierten Zustand,
- Fig. 5: eine schematische Darstellung einer Draufsicht des Fondbereiches des Kraftfahrzeuges mit der Sicherheitseinrichtung von Fig. 4,
- Fig. 6: eine schematische Darstellung einer Seitenansicht der Sicherheitseinrichtung von Fig. 4 in einer Weiterbildung,
- Fig. 7: eine schematische Darstellung einer Seitenansicht des Fondbereiches des Kraftfahrzeuges mit einer weiteren Sicherheitseinrichtung im aktivierten Zustand,
- Fig. 8: eine schematische Darstellung einer Ansicht in Fahrzeuglängsrichtung des Fondbereiches mit der Sicherheitseinrichtung von Fig. 7,
- Fig. 9: eine schematische Darstellung einer Seitenansicht des Fondbereiches des Kraftfahrzeuges mit einer weiteren Sicherheitseinrichtung im aktivierten Zustand,
- Fig. 10: eine schematische Darstellung einer Ansicht in Fahrzeuglängsrichtung des Fondbereiches mit der Sicherheitseinrichtung von Fig. 9,
- Fig. 11: eine schematische Darstellung einer Seitenansicht des Fondbereiches des Kraftfahrzeuges mit einer weiteren Ausführungsform einer Sicherheitseinrichtung im aktivierten Zustand,
- Fig. 12: eine schematische Darstellung einer Ansicht in Fahrzeuglängsrichtung des Fondbereiches des Kraftfahrzeuges mit einer weiteren Ausführungsform einer Sicherheitseinrichtung im aktivierten Zustand,
- Fig. 13: eine schematische Darstellung einer Ansicht in Fahrzeuglängsrichtung des Fondbereiches des Kraftfahrzeuges mit einer weiteren Ausführungsform einer Sicherheitseinrichtung im aktivierten Zustand,
- Fig. 14: eine schematische Darstellung einer Seitenansicht des Fondbereiches des Kraftfahrzeuges mit einer weiteren Ausführung einer Sicherheitseinrichtung im aktivierten Zustand,
- Fig. 15: eine schematische Darstellung einer Ansicht in Fahrzeuglängsrichtung des Fondbereiches des Kraftfahrzeuges mit der Sicherheitseinrichtung von Fig. 14,
- Fig. 16: eine schematische Darstellung einer Ansicht in Fahrzeuglängsrichtung des Fondbereiches des Kraftfahrzeuges mit einer weiteren Ausführung einer Sicherheitseinrichtung im aktivierten Zustand,
- Fig. 17: eine schematische Darstellung einer Ansicht in Fahrzeuglängsrichtung des Fondbereiches des Kraftfahrzeuges mit einer Weiterbildung der Sicherheitseinrichtung von Fig. 15,
- Fig. 18: eine schematische Darstellung einer Ansicht in Fahrzeuglängsrichtung des Fondbereiches des Kraftfahrzeuges mit einer weiteren Ausführungsform einer Sicherheitseinrichtung im aktivierten Zustand,
- Fig. 19: eine schematische Darstellung einer Ansicht in Fahrzeuglängsrichtung des Fondbereiches des Kraftfahrzeuges mit einer weiteren Ausführungsform einer Sicherheitseinrichtung im aktivierten Zustand,
- Fig. 20: eine schematische Darstellung einer B-Säule eines Kraftfahrzeuges mit einer Sicherheitseinrichtung im aktivierten Zustand,
- Fig. 21: eine schematische Darstellung einer Seitenansicht eines Vordersitzes in out-off-position-Stellung mit einem aktivierten Fondairbag,
- Fig. 22: eine schematische Darstellung einer Ansicht in Fahrzeuglängsrichtung des Fondbereiches des Kraftfahrzeuges mit einer weiteren Ausführungsform einer Sicherheitseinrichtung im aktivierten Zustand,
- Fig. 23: eine schematische Darstellung einer Ansicht in Fahrzeuglängsrichtung des Fondbereiches des Kraftfahrzeuges mit einer weiteren Ausführung einer Sicherheitseinrichtung im aktivierten Zustand,
- Fig. 24: eine schematische Darstellung einer Draufsicht des Fondbereiches des Kraftfahrzeuges mit einer weiteren Ausführungsform einer Sicherheitseinrichtung im aktivierten Zustand,
- Fig. 25: eine schematische Darstellung einer Ansicht in Fahrzeuglängsrichtung des Fondbereiches des Kraftfahrzeuges mit einer weiteren Ausführungsform einer Sicherheitseinrichtung im aktivierten Zustand,
- Fig. 26: eine schematische Ansicht in Fahrzeuglängsrichtung des Fondbereiches des Kraftfahrzeuges mit einer weiteren Ausführung einer Sicherheitseinrichtung im aktivierten Zustand,
- Fig. 27: eine schematische Darstellung einer Ansicht in Fahrzeuglängsrichtung des Fondbereiches des Kraftfahrzeuges mit einer weiteren Ausführungsform einer Sicherheitseinrichtung im aktivierten Zustand,
- Fig. 28: eine schematische, perspektivische Darstellung einer Sicherheitseinrichtung im Fondbereich des Kraftfahrzeuges im aktivierten Zustand,
- Fig. 29: eine schematische Darstellung einer Seitenansicht der Sicherheitseinrichtung von Fig. 28,
- Fig.30: eine schematische Darstellung eines Quer-Abspannschlauches der Sicherheitseinrichtung von Fig. 28,
- Fig. 31: eine schematische Darstellung einer Seitenansicht des Kraftfahrzeuges mit einer weiteren Ausführungsform einer Sicherheitseinrichtung im aktivierten Zustand,
- Fig. 32: eine schematische Darstellung einer Schnittansicht des Schnittes A-A von Fig. 31,
- Fig. 33: eine schematische Darstellung einer Ansicht in Fahrzeuglängsrichtung des Fondbereiches des Kraftfahrzeuges mit einer weiteren Ausführungsform einer Sicherheitseinrichtung im aktivierten Zustand,
- Fig. 34: eine schematische Darstellung einer Ansicht in Fahrzeuglängsrichtung des Fondbereiches des Kraftfahrzeuges mit einer weiteren Ausführungsform einer Sicherheitseinrichtung im aktivierten Zustand,
- Fig. 35: eine schematische Darstellung eines Abspannschlauches,
- Fig. 36: eine schematische Darstellung eines Abspannschlauches im Querschnitt,
- Fig. 37: eine schematische Darstellung einer Ansicht in Fahrzeuglängsrichtung des Fondbereiches des Kraftfahrzeuges mit einer weiteren Ausführungsform einer Sicherheitseinrichtung im aktivierten Zustand,
- Fig. 38: eine schematische Darstellung einer Draufsicht auf die zur Sicherheitseinrichtung von Fig. 37 gehörigen Airbags,
- Fig. 39: einen schematischen Querschnitt durch ein Kraftfahrzeug im Fondinsassenbereich mit aktivierter Sicherheitseinrichtung,
- Fig. 40: eine schematische Draufsicht gemäß der Darstellung der Fig. 39,
- Fig. 41: einen schematischen Querschnitt durch ein Kraftfahrzeug im Fondinsassenbereich,
- Fig. 42: eine schematische Seitenansicht einer aktivierten Sicherheitseinrichtung einer zweiten Ausführungsform,
- Fig. 43: eine schematische Schnittansicht entlang der Linie A-A der Fig. 42,
- Fig. 44: eine schematische Seitenansicht,
- Fig. 45: einen schematischen Querschnitt durch zwei Abspannschläuche, die ein Tuch aufspannen,
- Fig. 46: einen schematischen Querschnitt durch ein Kraftfahrzeug im Fondinsassenbereich,
- Fig. 47: eine schematische Schnittansicht entlang der Linie B-B der Fig. 46,
- Fig. 48: eine schematische Draufsicht auf die Darstellung gemäß Fig. 46,
- Fig. 49: eine schematische Seitenansicht des Fondbereichs des Kraftfahrzeuges mit einer erfindungsgemäßen Ausführungsform einer Sicherheitseinrichtung im nicht aktivierten Zustand,
- Fig. 50: eine schematische Seitenansicht der Sicherheitseinrichtung von Fig. 49 zu Beginn einer Aktivierung der Sicherheitseinrichtung,
- Fig. 51: eine schematische Seitenansicht der Sicherheitseinrichtung von Fig. 49 und 50 im aktivierten Zustand,
- Fig. 52: eine schematische Draufsicht auf das Kraftfahrzeug mit einer weiteren Ausführungsform einer Sicherheitseinrichtung,
- Fig. 53: eine schematische Darstellung einer Ansicht in Fahrzeuglängsrichtung eines Zuschnitts eines erfindungsgemäßen Abspannairbags,
- Fig. 54: eine schematisch Seitenansicht des Fondbereichs des Kraftfahrzeuges mit einer weiteren Ausführungsform einer Sicherheitseinrichtung im aktivierten Zustand,
- Fig. 55: eine schematische Seitenansicht des Fondbereichs des Kraftfahrzeuges mit einer weiteren Ausführungsform einer Sicherheitseinrichtung im aktivierten Zustand,
- Fig. 56: eine schematische Seitenansicht des Fondbereichs des Kraftfahrzeuges mit einer weiteren Ausführungsform einer Sicherheitseinrichtung im aktivierten Zustand,
- Fig. 57: eine schematische Seitenansicht des Kraftfahrzeuges mit zwei in Fahrtrichtung hintereinanderliegenden Abspannairbags,
- Fig. 58 bis 62: jeweils eine schematische Draufsicht auf einen Abspannairbag mit jeweils unterschiedlich ausgeführten Abspann- und/oder Rückhaltevorrichtungen,
- Fig. 63: eine schematische Schnittdarstellung des Schnittes A - A von Fig. 62,
- Fig. 64: eine schematische Seitenansicht des Fondbereichs des Kraftfahrzeuges mit einer weiteren Ausführungsform einer Sicherheitseinrichtung,
- Fig. 65: eine schematische Seitenansicht des Fondbereichs des Kraftfahrzeuges mit einer weiteren Ausführungsform einer Sicherheitseinrichtung im aktivierten Zustand,
- Fig. 66: eine schematische Seitenansicht des Fondbereichs des Kraftfahrzeuges mit einer weiteren Ausführungsform einer Sicherheitseinrichtung im aktivierten Zustand,
- Fig. 67: eine schematische Seitenansicht des Fondbereichs des Kraftfahrzeuges mit einer weiteren Ausführungsform einer Sicherheitseinrichtung im aktivierten Zustand,
- Fig. 68: eine schematische Darstellung der Einzelheit B von Fig. 67,
- Fig. 69: eine schematische Seitenansicht des Fondbereichs des Kraftfahrzeuges mit einer weiteren Ausführungsform einer Sicherheitseinrichtung im aktivierten Zustand,
- Fig. 70: eine schematische Seitenansicht des Fondbereichs des Kraftfahrzeuges mit einer weiteren Ausführungsform einer Sicherheitseinrichtung im aktivierten Zustand,
- Fig. 71: eine schematische Seitenansicht des Fondbereiches des Kraftfahrzeuges mit einer weiteren Ausführungsform einer Sicherheitseinrichtung mit einem Einzugstrichter im aktivierten Zustand,
- Fig. 72: eine schematische Schnittdarstellung durch den Einzugstrichter von Fig. 71 in einer ersten Ausführungsform,
- Fig. 73: eine schematische Schnittdarstellung durch den Einzugstrichter von Fig. 71 in einer zweiten Ausführungsform,
- Fig. 74: eine schematische Rückansicht eines Lehnenteils einer Rücksitzbank mit einer Abspann- und/oder Rückhaltevorrichtung in einer ersten Ausführungsform,
- Fig. 75: eine schematische Ansicht einer Abspann- und/oder Rückhaltevorrichtung in einer zweiten Ausführungsform,
- Fig. 76: eine schematische Ansicht einer Abspann- und/oder Rückhaltevorrichtung in einer dritten Ausführungsform,
- Fig. 77: eine schematische Seitenansicht eines Dachbereiches des Kraftfahrzeuges mit einer weiteren Ausführungsform einer Sicherheitseinrichtung im nicht aktivierten Zustand,
- Fig. 78: eine schematische Draufsicht auf eine weitere Ausführungsform einer Sicherheitseinrichtung,
- Fig. 79: eine schematische Seitenansicht eines Frontbereiches des Kraftfahrzeuges mit einer Sicherheitseinrichtung im aktivierten Zustand für einen Beifahrer des Kraftfahrzeuges,
- Fig. 80: eine schematische Seitenansicht des Frontbereiches des Kraftfahrzeuges mit einer Sicherheitseinrichtung für den Fahrer des Kraftfahrzeuges,
- Fig. 81: eine schematische Draufsicht auf eine weitere alternative Ausführungsform einer erfindungsgemäßen Sicherheitseinrichtung, und
- Fig. 82: eine schematische Draufsicht auf eine weitere Ausführungsform der Sicherheitseinrichtung.

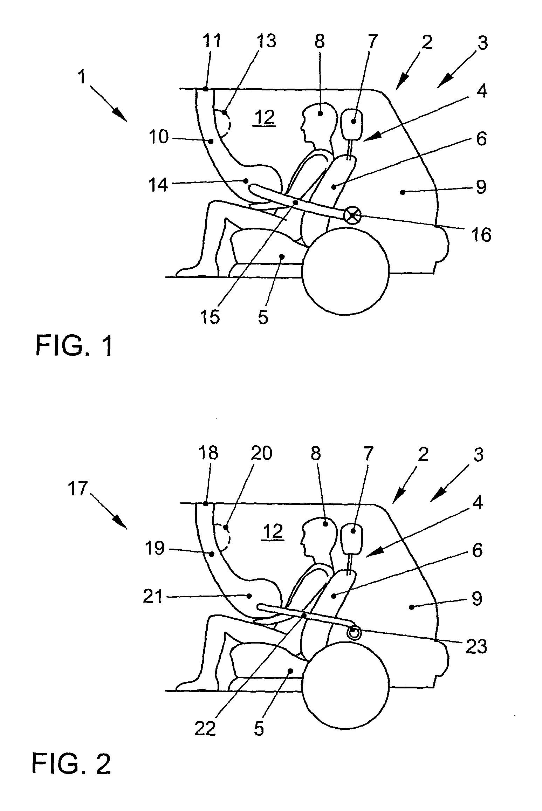

In Fig. 1 ist schematisch eine Seitenansicht einer nicht beanspruchten Sicherheitseinrichtung 1 in einem Fondbereich 2 eines Kraftfahrzeuges 3 dargestellt. Der Fondbereich 2 des Kraftfahrzeuges 3 umfasst eine Rücksitzbank 4, die aus einem Sitzteil 5, einem Lehnenteil 6 und einer daran angeordneten Kopfstütze 7 besteht. Ein Fondinsasse 8 ist in sitzender Position auf der Rücksitzbank 4 angeordnet. In Fahrtrichtung hinter der Rücksitzbank 4 ist ein Laderaum 9 des Kraftfahrzeuges 3 ausgebildet.

Die im folgenden beschriebenen alternativen Ausführungsformen der Sicherheitseinrichtung 1 dienen alle samt vorzugsweise dem Schutz des Fondinsassen 8, der auf der Rücksitzbank 4 im Fondbereich 2 des Kraftfahrzeuges 3 sitzt. Der oben beschriebene grundsätzliche Aufbau des Fondbereiches 2 kann somit bei jeder der folgenden Ausführungsformen der Sicherheitseinrichtungen Verwendung finden, so dass die eingeführten Bezugszeichen für die Bestandteile des Fondbereiches 2 bei allen alternativen Ausführungsformen der Sicherheitseinrichtung 1 übernommen werden. Grundsätzlich können die dargestellten Ausführungsformen entsprechend auch zum Schutz von Frontinsassen im Kraftfahrzeug angeordnet sein.

Die in Fig. 1 dargestellte Sicherheitseinrichtung 1 weist eine vor dem Fondinsassen 8 aufblasbare Airbagmatte 10 als Fondairbag auf, die im nichtaktivierten Zustand in einem Dachbereich 11 angeordnet ist. Im aktivierten Zustand der Sicherheitseinrichtung 1 ist die Airbagmatte 10 vor dem Fondinsassen 8 aufgeblasen und ragt somit vom Dachbereich 11 nach unten in den Fahrzeuginnenraum 12 hinein. An der Airbagmatte 10 ist zusätzlich ein Kopfairbag 13 und ein Thoraxairbag 14 ausgebildet, wobei der Kopfairbag 13 als separater Airbag ausgeführt ist und strichliert in Fig. 1 eingezeichnet ist, und der Thoraxairbag 14 in die Airbagmatte 10 integriert ist. Zur Abspannung der Airbagmatte 10 ist jeweils seitlich an der Airbagmatte 10 ein Band 15 als Rückhaltevorrichtung angebunden, das andern Endes mit einer Strammereinrichtung 16 gekoppelt ist. Die Strammereinrichtung 16 ist karosseriefest hinter der Rücksitzbank 4 angeordnet. Somit wird die Airbagmatte 10 im aufgeblasenen Zustand in Richtung Fondinsasse 8 mittels der Strammereinrichtung 16 und der Kopplung mittels dem Band 15 gezogen, wodurch die Airbagmatte 10 bei einem Fondinsassenaufprall in einer vorgebbaren Rückhalteposition gehalten wird. Am Band 15 ist bei der Sicherheitseinrichtung 1 ebenfalls ein Airbag integriert, wodurch eine Polsterung zum Fondinsassen 8 hin erreicht wird. Das Band 15 ist zu beiden Seiten des Kraftfahrzeuges 3 vorgesehen und jeweils mit der Strammereinrichtung 16 und der Airbagmatte 10 gekoppelt.

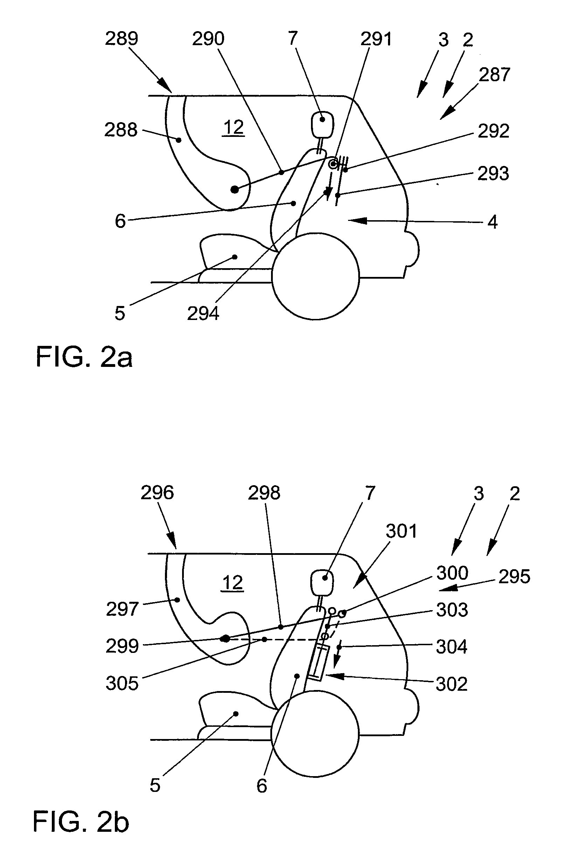

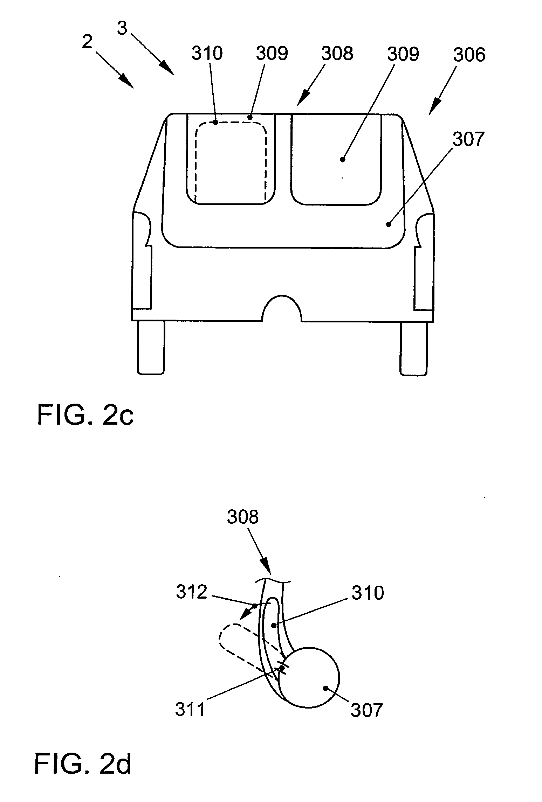

Eine alternative Ausführungsform einer nicht beanspruchten Sicherheitseinrichtung 17 ist in einer Seitenansicht des Fondbereiches 2 in Fig. 2 schematisch dargestellt. Auch bei dieser Sicherheitseinrichtung 17 ist in einem Dachbereich 18 eine Airbagmatte 19 als Fondairbag angeordnet, die im aktivierten Zustand nach unten in den Fahrzeuginnenraum 12 aufgeblasen wird. An der Airbagmatte 19 ist als separater Airbag ein Kopfairbag 20 (strichliert eingezeichnet) und integriert ein Thoraxairbag 21 ausgebildet. Als Rückhaltevorrichtung zur Abspannung der Airbagmatte 19 ist ein Gurtband 22 jeweils seitlich an der Airbagmatte 19 angeordnet, wobei andernends am Gurtband 22 ein Rotationsstrammer 23 vorgesehen ist. Der Rotationsstrammer 23 ist karosseriefest hinter oder seitlich der Rücksitzbank 4 angeordnet. Bei der Aktivierung der Sicherheitseinrichtung 17 entfaltet sich die Airbagmatte 19 vom Dachbereich 18 aus nach unten in den Fahrzeuginnenraum 12 und wird durch das Gurtband 22 in Richtung des Fondinsassen 8 hin gezogen. Der Rotationsstrammer 23 stellt bei einem Fondinsassenaufprall auf die Airbagmatte 19 sicher, dass die vorgebbare Rückhalteposition der Airbagmatte 19 gehalten wird.

Eine weitere Ausführungsform einer nicht beanspruchten Sicherheitseinrichtung 287 ist in einer Seitenansicht des Fondbereiches 2 in Fig. 2a schematisch dargestellt. Eine Airbagmatte 288 ist in einem Dachbereich 289 angeordnet und wird im aktivierten Zustand nach unten in den Fahrzeuginnenraum 12 aufgeblasen. Als Rückhaltevorrichtung zur Abspannung der Airbagmatte 288 ist ein Band 290 jeweils seitlich an der Airbagmatte 288 angeordnet. Das andere Ende des Bandes 290 ist mit einer Strammereinrichtung 291 verbunden, die an einen Schlitten 292 entlang einer Führung 293 in Fahrzeughochachsenrichtung gesehen verlagert werden kann. Im aktivierten Zustand der Sicherheitseinrichtung 287, die in Fig. 2a dargestellt ist, wird die Strammereinrichtung 291 zusammen mit dem Schlitten 292 entlang der Führung 293 nach unten verlagert, was mit dem Pfeil 294 eingezeichnet ist. Damit wird der Einzugspunkt nach unten verlagert, wodurch die Entfaltung der Airbagmatte 288 in gewünschter Weise vorteilhaft beeinflusst werden kann. Die Strammereinrichtung 291 kann sowohl als Rotationsstrammer (in Fig. 2a dargestellt) als auch als Linearstrammer, der nach dem Flaschenzugprinzip arbeitet, ausgeführt sein.

In Fig. 2b ist eine weitere Ausführungsform einer nicht beanspruchten Sicherheitseinrichtung 295 schematisch in einer Seitenansicht des Fondbereiches 2 des Kraftfahrzeuges 3 dargestellt. Eine in einem Dachbereich 296 angeordnete Airbagmatte 297 entfaltet sich bei der Aktivierung der Sicherheitseinrichtung 295 nach unten in den Fahrzeuginnenraum 12. Ein Band 298, das beidseitig an der Airbagmatte 297 angeordnet ist, ist mit einem ersten Anbindungspunkt 299 an der Airbagmatte 297 und mit einem zweiten Anbindungspunkt 300 ortsfest an der Fahrzeugkarosserie im Bereich einer C-Säule 301 angebunden. Der zweite Anbindungspunkt 300 ist in Fahrtrichtung gesehen hinter dem Lehnenteil 6 der Rücksitzbank 4 angeordnet. Im Bereich des Lehnenteils 6 ist eine Zylinder-Kolben-Einheit 302 als Strammereinrichtung angeordnet. Die Wirkrichtung der Zylinder-Kolben-Einheit 302 entspricht etwa der Fahrzeughochachsenrichtung. Das freie Ende einer Kolbenstange 303 der Zylinder-Kolben-Einheit 302 greift so am Band 298 an, dass bei einer Aktivierung der Sicherheitseinrichtung 295 dieses für ein Heranziehen der Airbagmatte 297 in Richtung des Fondinsassen 8 (nicht dargestellt) im Angriffbereich der Kolbenstange 303 nach unten gezogen wird. Die Bewegung der Kolbenstange 303 ist mit dem Pfeil 304 in Fig. 2b eingezeichnet. Der Verlauf des Bandes 298 nach der Verlagerung der Kolbenstange 303 nach unten ist mit einer strichlierten Linie 305 eingezeichnet. Alternativ kann anstelle der Zylinder-Kolben-Einheit 302 auch ein Linearstrammer, der nach dem Flaschenzugprinzip arbeitet, als Strammereinrichtung verwendet werden.

In Fig. 2c ist eine weitere Ausführungsform einer nicht beanspruchten Sicherheitseinrichtung 306 im Querschnitt durch ein Fahrzeug schematisch dargestellt. Eine Airbagmatte 307 erstreckt sich im aktivierten Zustand der Sicherheitseinrichtung 306 von einem Dachbereich 308 nach unten in den Fahrzeuginnenraum 12. Die Airbagmatte 307 erstreckt sich über die komplette Fahrzeugbreite, wobei den Sitzpositionen der Fondinsassen 8 jeweils eine Kopfausnehmung als Kopffenster 309 zugeordnet ist. Damit ist ein Durchtauchen des Kopfes des Fondinsassen durch das Kopffenster 309 möglich, wobei der Thorax- und Beckenbereich des Fondinsassen an der Airbagmatte 307 abgestützt sind. Etwaige Halsbelastungen des Fondinsassen sind durch dieses Durchtauchen vorteilhaft reduziert.

Um im Extremfall ein mögliches Kontaktieren des Kopfes des Fondinsassen mit einem vor ihm liegenden Bauteil, insbesondere mit dem Vordersitz, zu verhindern kann im Kopffenster 309 ein Kopffensterairbag 310 angeordnet werden. Dies ist in einer schematischen Schnittdarstellung in Fahrzeughochrichtung in Fig. 2d dargestellt. Zudem ist der Kopffensterairbag in Fig. 2c als mögliche Alternative strichliert eingezeichnet. Der Kopffensterairbag 310 ist mit der Airbagmatte 307 im unteren Fensterrandbereich über eine Drosselverbindung 311 strömungsverbunden und ragt im aktivierten Zustand der Sicherheitseinrichtung 306 zungenartig nach oben. Durch den Kopffensterairbag 310 ist das Kopffenster 309 wenigstens in einem unteren Bereich abgedeckt. Bei einem Eintauchen des Kopfes des Fondinsassen in den Fensterbereich wird der Kopffensterairbag 310 in Fahrtrichtung nach vorne weggeklappt und deckt somit dahinterliegende Bauteile, insbesondere den Vordersitz, ab. Mit einem Pfeil 312 ist das Wegklappen des Kopffensterairbags 310 in Fig. 2d eingezeichnet, wobei die weggeklappte Position des Kopffensterairbags 310 strichliert dargestellt ist. Damit sind durch das Kopffenster 309 die Halsbelastungen des Fondinsassen vorteilhaft reduziert und zugleich mit dem Kopffensterairbag 310 der Schutz des Kopfbereiches des Fondinsassen gewährleistet.

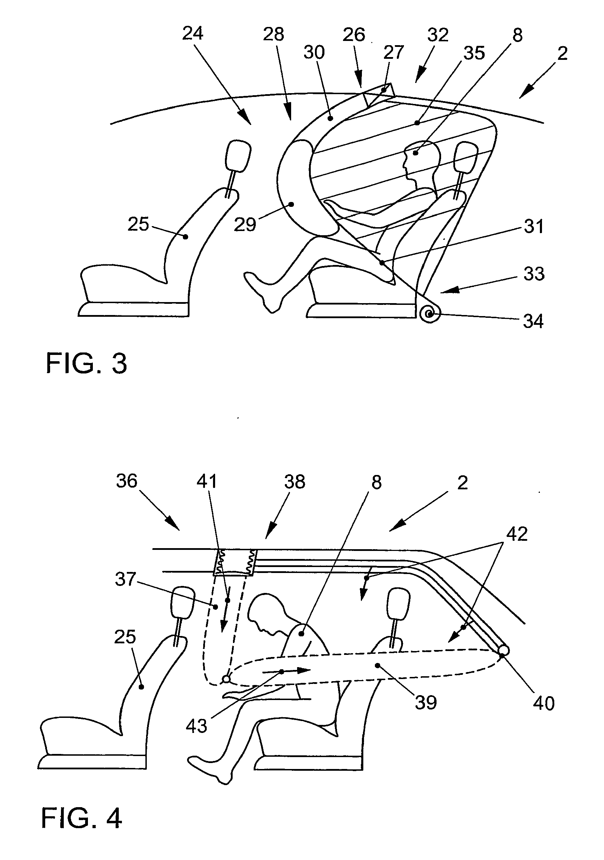

In Fig. 3 ist schematisch eine Seitenansicht des Fondbereiches 2 des Kraftfahrzeuges 3 mit einer weiteren Ausführungsform einer nicht beanspruchten Sicherheitseinrichtung 24 dargestellt. Vor der Rücksitzbank 4 bzw. dem daraufsitzenden Fondinsassen 8 ist ein Vordersitz 25 eingezeichnet. In einem Dachbereich 26 ist ein mehrstufiger Gasgenerator 27 angeordnet, der mit einer Airbagmatte 28 als Fondairbag gekoppelt ist. Die Airbagmatte 28 besteht aus mehreren Kammern 29 und 30, die zeitversetzt durch den mehrstufigen Gasgenerator 27 aufgeblasen werden können. Dadurch kann die Aggressivität des Airbags reduziert werden. Zur Abspannung der Airbagmatte 28 ist ein Band 31 vorgesehen, das im nicht aktivierten Zustand der Sicherheitseinrichtung 24 hinter einem Innenverkleidungsteil (nicht dargestellt) angeordnet ist und von einem Airbagmattenverstaubereich 32, der im Dachbereich 26 angeordnet ist, bis zu einem Strammerbereich 33, der in Fahrtrichtung gesehen hinter der Fondinsassenposition liegt, verläuft. Die Ruhelage des Bandes 31 ist strichliert in Fig. 3 eingezeichnet. Bei der Aktivierung der Sicherheitseinrichtung 24 entfaltet sich die Airbagmatte 28 in Richtung Fahrzeuginnenraum 12 nach unten und wird durch das Band 31 bzw. durch eine damit gekoppelte Strammereinrichtung 34 im Strammerbereich 33 in Richtung Fondinsasse 8 hingezogen. Durch die Verlagerung des Bandes 31, das zu beiden Seiten der Airbagmatte 28 angeordnet ist, wird ein Tuch 35 als zusätzliche Schutzmaßnahme für den Fondinsassen 8 aufgespannt. Das Tuch 35 ist schraffiert in Fig. 3 eingezeichnet. Alternativ zu der Ausführung als Tuch 35 kann ebenso ein Airbag als Seitenairbag entfaltet werden. Im aktivierten Zustand der Airbagmatte 28, wie in Fig. 3 dargestellt, besteht aufgrund des Bandes 31 als Rückhaltevorrichtung zu jedem Zeitpunkt eine Beabstandung der Airbagmatte 28 zum Vordersitz 25, so dass damit vorteilhaft eine Abstützung des Fondairbags als Airbagmatte 28 am Vordersitz 25 vermieden ist.

Eine weitere alternative Ausführung einer nicht beanspruchten Sicherheitseinrichtung 36 ist in einer Seitenansicht des Fondbereiches 2 in Fig. 4 dargestellt. Eine Airbagmatte 37 als Fondairbag ist im nicht aktivierten Zustand in einem Dachbereich 38 angeordnet von diesem Airbagmattenverstaubereich aus verläuft im nicht aktivierten Zustand der Sicherheitseinrichtung 36 ein Airbagschlauch 39 bis zu einem Airbagschlauch-Anbindungspunkt 40, der in Fahrtrichtung gesehen hinter der Fondinsassenposition und niedriger als der Dachbereich 38 liegt. In Fig. 4 ist mit durchgezogenen Linien jeweils der nicht aktivierte Zustand der Airbagmatte 37 und des Airbagschlauches 39 eingezeichnet. Der Airbagschlauch 39 ist so mit der Airbagmatte 37 und dem Airbagschlauch-Anbindungspunkt 40 gekoppelt, dass dieser als Rückhaltevorrichtung zur Abspannung der Airbagmatte 37 einsetzbar ist. Im aktivierten Zustand der Sicherheitseinrichtung 36 verkürzt sich die Länge des Airbagschlauches 39 beim Aufblasen und die Airbagmatte 37 entfaltet sich vom Dachbereich 38 in Richtung nach unten vor dem Fondinsassen 8. Mit dem Pfeil 41 ist die Entfaltungsrichtung der Airbagmatte 37 und mit den Pfeilen 42 die Entfaltungsrichtung des Airbagschlauches 39 in Fig. 4 eingezeichnet. Durch die Längenverkürzung des Airbagschlauches 39 beim Aufblasen wird die Airbagmatte 37 in Richtung des Airbagschlauch-Anbindungspunkt 40 gezogen, das mit dem Pfeil 43 in Fig. 4 eingezeichnet ist. Die aktivierte Position der Airbagmatte 37 und des Airbagschlauches 39 sind strichliert eingezeichnet.

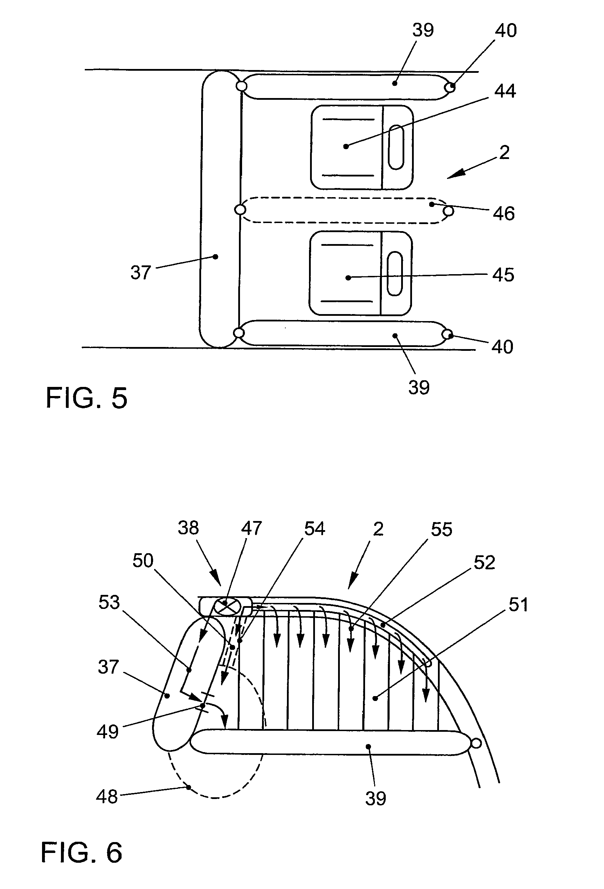

In Fig. 5 ist schematisch eine Draufsicht auf den Fondbereich 2 mit der Sicherheitseinrichtung 36 von Fig. 4 dargestellt. Die Airbagmatte 37 erstreckt sich dabei über die gesamte Fahrzeugbreite und jeweils seitlich ist ein Airbagschlauch 39 in Fahrzeuglängsrichtung verlaufend ausgebildet. Als sog. Interaktionsairbag ist gegebenenfalls zwischen zwei Fondinsassensitzpositionen 44 und 45 ein weiterer Airbagschlauch 46 ausgebildet. Die seitlichen Airbagschläuche 39 können in Höhe der Fensterbrüstung (nicht dargestellt) zu deren Abpolsterung und damit zur Erhöhung des Schutzes der Fondinsassen 8 verlaufen.

Eine Weiterbildung der Sicherheitseinrichtung 36 von Fig. 4 ist in einer Seitenansicht schematisch in Fig. 6 dargestellt. Im Dachbereich 38 ist ein Gasgenerator 47 angeordnet, mittels dem in verschiedenen Varianten die Airbagmatte 37 bzw. der Airbagschlauch 39 aufgeblasen werden können. Zusätzlich ist an der Airbagmatte 37 ein Thoraxairbag 48 angeordnet, der entweder über eine Drossel 49 von der Airbagmatte 37 aus mit Gas befüllt wird oder über eine separate Gaslanze 50 direkt vom Gasgenerator 47 aus befüllbar ist. Zwischen dem Dachbereich 38 und dem im aktivierten Zustand horizontal verlaufenden Airbagschlauch 39 ist ein weiterer Airbag 51 als Seitenairbag vertikal verlaufend angeordnet. Vom Gasgenerator 47 ausgehend ist eine weitere Gaslanze 52 entlang des Dachbereiches 38 angeordnet, über die der Airbag 51 befüllbar ist. Jeweils vom Gasgenerator 47 ausgehend ist mit den Pfeilen 53 eine Befüllung des Thoraxairbags 48 über die Airbagmatte 37 und die Drossel 49 eingezeichnet, mit den Pfeilen 54 eine Befüllung des Thoraxairbags 48 über die Gaslanze 50 und mit den Pfeilen 55 eine Befüllung des Airbags 51 über die Gaslanze 52.

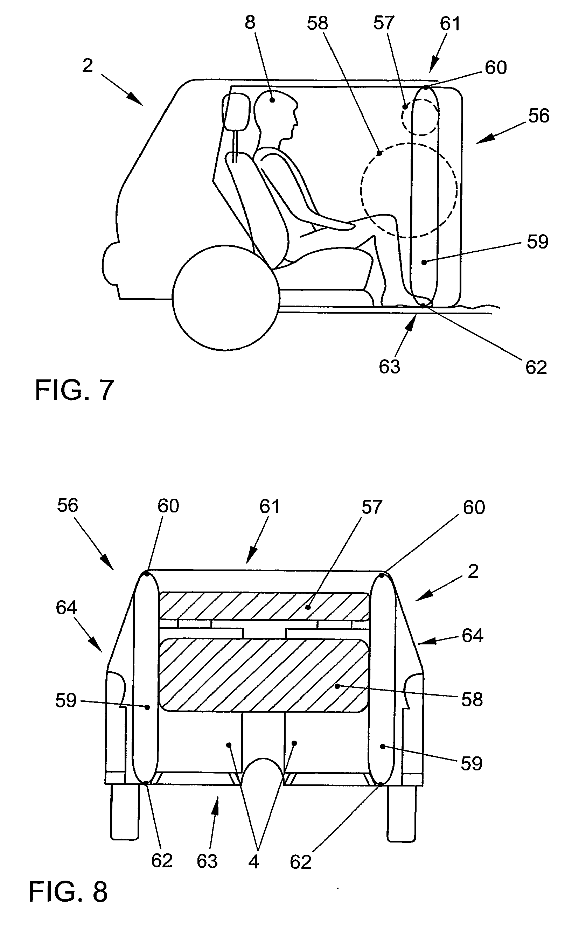

In Fig. 7 ist schematisch eine Seitenansicht des Fondbereiches 2 des Kraftfahrzeuges 3 mit einer weiteren Ausführungsform einer nicht beanspruchten Sicherheitseinrichtung 56 dargestellt. Als Rückhalteeinrichtung für die Airbagmatte als Fondairbag, die hier aus einem separaten Kopfairbag 57 und Thoraxairbag 58, die strichliert eingezeichnet sind, besteht, ist ein Abspannschlauch 59 vorgesehen. Der Abspannschlauch 59 verläuft vertikal in Fahrzeughochrichtung von einer Abspannschlauch-Anbindungsstelle 60 im Dachbereich 61 zu einer Abspannschlauch-Anbindungsstelle 62 im Bodenbereich 63.

In Fig. 8 ist die Sicherheitseinrichtung 56 von Fig. 7 in einer schematischen Darstellung in Fahrzeuglängsrichtung gesehen dargestellt. Dabei ist zu erkennen, dass sowohl der Kopfairbag 57 als auch der Thoraxairbag 58 über die gesamte Fahrzeugbreite im aktivierten Zustand der Sicherheitseinrichtung 56 ausgebildet sind und jeweils seitlich ein Abspannschlauch 59 vertikal im Fahrzeugseitenbereich 64 verläuft.

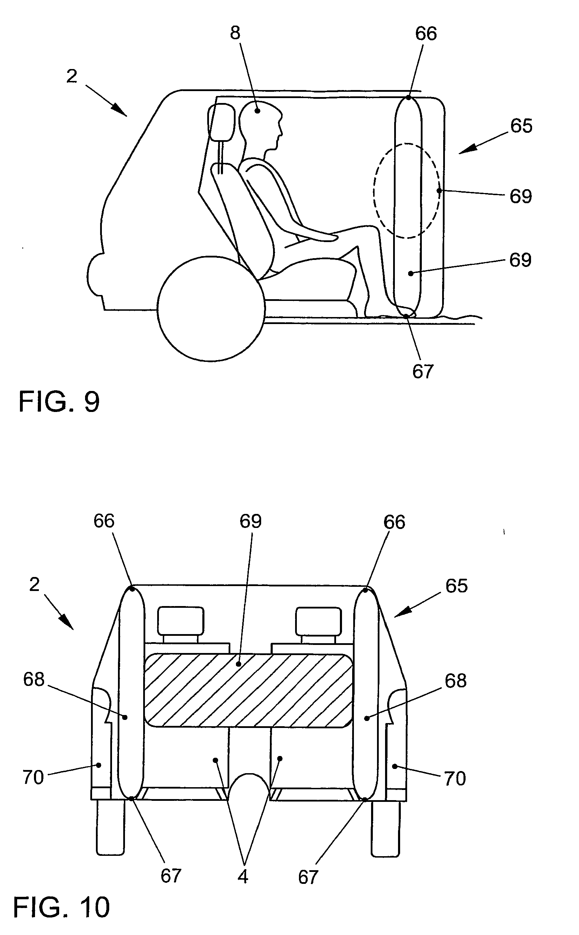

In den Figuren 9 und 10 ist analog zu den Figuren 7 und 8 eine alternative, nicht beanspruchte Sicherheitseinrichtung 65 dargestellt. Auch bei dieser Sicherheitseinrichtung 65 ist vertikal zwischen zwei Abspannschlauch-Anbindungsstellen 66 und 67 jeweils seitlich ein Abspannschlauch 68 als Rückhaltevorrichtung für den Fondairbag im aktivierten Zustand der Sicherheitseinrichtung 65 aufgespannt. Zwischen den beiden Abspannschläuchen 68 ist ein Querairbag 69 als Fondairbag angeordnet. Dieser ist im aktivierten Zustand der Sicherheitseinrichtung 65 in etwa in Brusthöhe des Fondinsassen 8 (sh. Fig. 9) über die ganze Fahrzeugbreite angeordnet. Sowohl bei der Sicherheitseinrichtung 56 (Figuren 7 und 8) als auch bei der Sicherheitseinrichtung 65 (Figur 9 und 10) sind die jeweiligen Abspannschläuche 59 und 68 in etwa auf Höhe einer B-Säule 70 angeordnet, so dass diese bei einem etwaigen Aufprall des Fondinsassen 8 durch den Abspannschlauch 59 und 68 gepolstert ist.

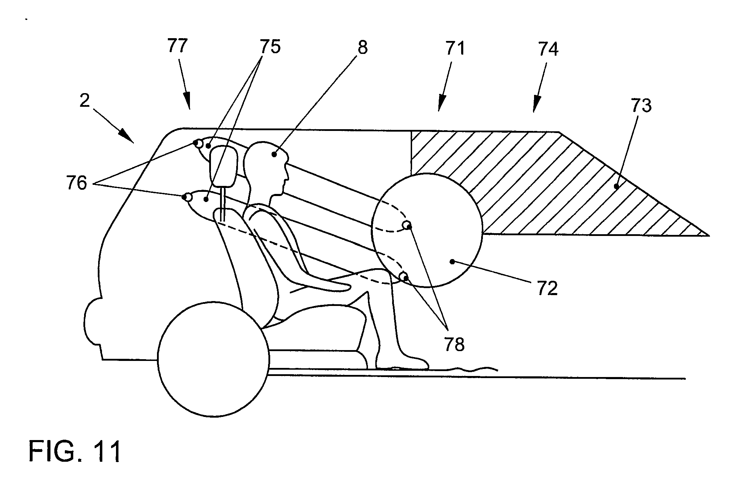

In Fig. 11 ist schematisch eine Seitenansicht des Fondbereiches 2 des Kraftfahrzeuges 3 mit einer weiteren Ausführungsform einer nicht beanspruchten Sicherheitseinrichtung 71 dargestellt. Ein zur Sicherheitseinrichtung 71 gehöriger Fondairbag 72, der im Querschnitt gesehen weitestgehend kreisförmig ausgebildet ist und sich über die gesamte Fahrzeugbreite erstreckt, ist an beiden Enden jeweils mit einem sogenannten Side-Curtain 73 verbunden, der im aufgeblasenen Zustand jeweils im Bereich einer vorderen Türscheibe 74 angeordnet ist. Ebenfalls von den beiden Enden des Fondairbags 72 sind jeweils zwei Abspannschläuche 75 als Rückhaltevorrichtung an beiden Seiten des Kraftfahrzeuges 3 angeordnet. Die Abspannschläuche 75 verlaufen im seitlichen Fahrzeugbereich diagonal, d. h. dass die erste Abspannschlauch-Anbindungsstelle 76 in Fahrtrichtung gesehen hinter der Fondinsassenposition in einem Dachbereich 77 im Bereich einer C-Säule angeordnet ist und eine zweite Abspannschlauch-Anbindungsstelle 78 seitlich am Fondairbag 72 ausgebildet ist. Durch die diagonal verlaufenden Abspannschläuche 75 ist für den Fondinsassen 8 zusätzlich bei einer seitlichen Bewegung ein Schutz gegenüber der hinteren Fensterscheibe bzw. dem hinteren Fahrzeugbereich gegeben.

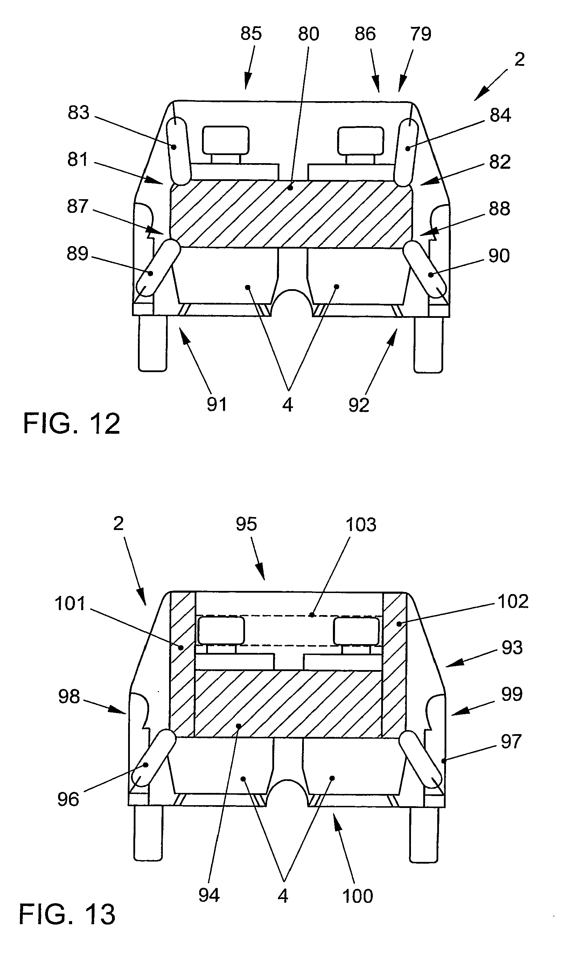

In Fig. 12 ist eine schematische Darstellung einer Ansicht in Fahrzeuglängsrichtung des Fondbereiches 2 des Kraftfahrzeuges 3 mit einer alternativen Ausführungsform einer nicht beanspruchten Sicherheitseinrichtung 79 dargestellt. Dabei ist im aktivierten Zustand der Sicherheitseinrichtung 79 ein Abstützairbag 80 als Fondairbag über die gesamte Fahrzeugbreite ausgebildet. An den beiden oberen Eckbereichen 81 und 82 des Abstützairbags 80 ist jeweils ein Abspannschlauch 83 und 84 angebunden, der andernendes jeweils im Dachbereich 85 und 86 des Kraftfahrzeuges 3 angebunden ist. An den unteren Eckbereichen 87 und 88 des Abstützairbags 80 ist ebenfalls jeweils ein Abspannschlauch 89 und 90 angebunden, der jeweils andernends mit einem Bodenbereich 91 und 92 verbunden ist. Somit ist eine funktionssichere Abspannung des Abstützairbags 80 durch die vier Abspannschläuche 83, 84, 89 und 90 als Rückhaltevorrichtung vor dem Fondinsassen 8 im aktivierten Zustand der Sicherheitseinrichtung 79 geschaffen.

In Fig. 13 ist eine schematische Darstellung einer Ansicht in Fahrzeuglängsrichtung des Fondbereiches 2 mit einer weiteren Ausführungsform einer nicht beanspruchten Sicherheitseinrichtung 93 im aktivierten Zustand dargestellt. Dabei erstreckt sich in Fahrzeugquerrichtung ein Thoraxairbag 94 als Fondairbag, der sich im aktivierten Zustand von einem Dachbereich 95 nach unten entfaltet und zu beiden Seiten mit einem Abspannschlauch 96 und 97 zur Abspannung des Thoraxairbags 94 in der Funktionsstellung verbunden ist. Die beiden Abspannschläuche 96 und 97 die einerseits mittelbar am Thoraxairbag 94 angebunden sind, sind jeweils in einem Fahrzeugseitenbereich 98 und 99 in der Nähe eines Fahrzeugbodens 100 angebunden. Am Thoraxairbag 94 ist jeweils seitlich ein Befüllschlauch 101, 102 angeordnet, wobei zwischen den Befüllschläuchen 101 und 102 und dem Thoraxairbag 94 eine Strömungsverbindung besteht. Die Befüllschläuche 101 und 102 sind ebenfalls im Dachbereich 95 angebunden und werden im aktivierten Zustand der Sicherheitseinrichtung 93 nach unten entfaltet. Die Befüllung des Thoraxairbags 94 erfolgt über die Befüllschläuche 101 und 102. In einer Weiterbildung ist zwischen den Befüllschläuchen 101 und 102, oberhalb des Thoraxairbags 94 ein Kopfairbag 103 (strichliert eingezeichnet) anordenbar.

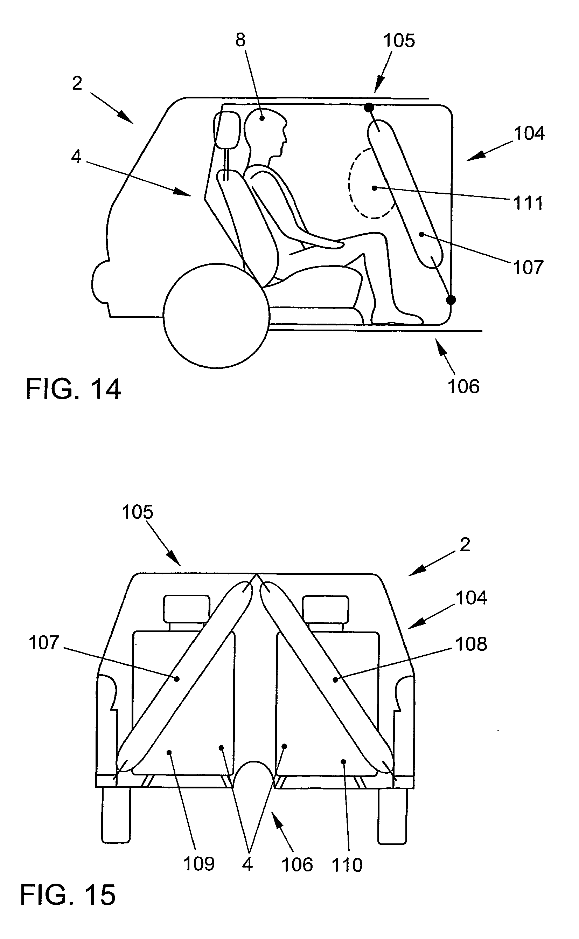

In Fig. 14 ist eine Seitenansicht des Fondbereichs 2 mit einer weiteren Ausführungsform einer nicht beanspruchten Sicherheitseinrichtung 104 schematisch dargestellt. Von einem Dachbereich 105 zu einem Bodenbereich 106 sind jeweils diagonal zwei Abspannschläuche 107 und 108 im aktivierten Zustand der Sicherheitseinrichtung 104 aufgespannt. Die diagonale Anordnung der beiden Abspannschläuche 107 und 108 ist der Ansicht in Fahrzeuglängsrichtung in Fig. 15 der Sicherheitseinrichtung 104 zu entnehmen. Damit ist vor jeder Fondinsassensitzposition 109 und 110 diagonal ein Abspannschlauch 107 und 108 im aktivierten Zustand der Sicherheitseinrichtung 104 ausgebildet, der somit den Fondairbag zum Schutz des Fondinsassen 8 bildet. In einer Weiterbildung kann an einem Abspannschlauch 107 und 108 beispielsweise ein Thoraxairbag 111, der strichliert in Fig. 14 eingezeichnet ist, ausgebildet sein.

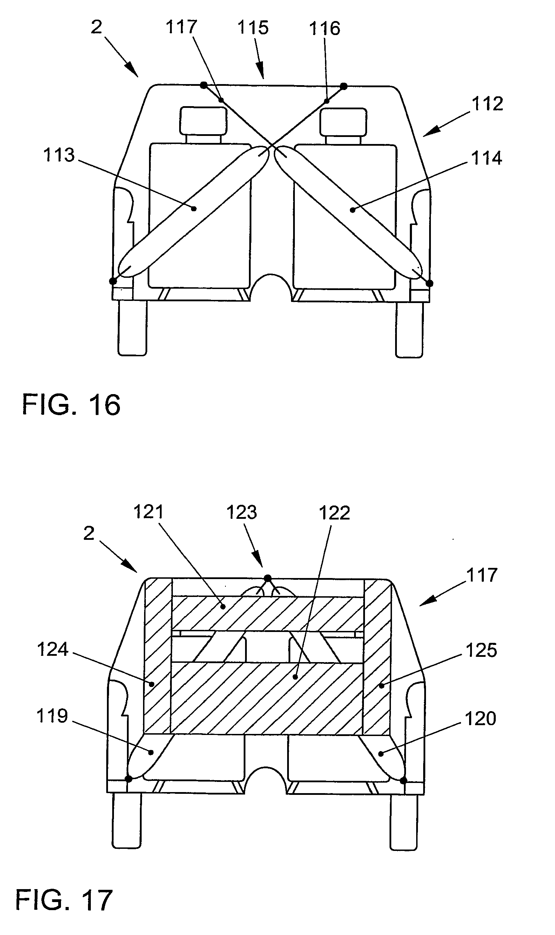

Eine alternative Ausführungsform der Sicherheitseinrichtung 104 ist als nicht beanspruchte Sicherheitseinrichtung 112 in Fig. 16 schematisch dargestellt. Als Fondairbag sind ebenfalls wieder zwei Abspannschläuche 113 und 114 diagonal vor den Fondinsassensitzpositionen 109 und 110 im aktivierten Zustand der Sicherheitseinrichtung 112 ausgebildet. Zwischen den Anbindungsbereichen der Abspannschläuche 113 und 114 im Dachbereich 115 und dem Abspannschlauch 113 und 114 selbst ist jeweils ein Gurtband 116 und 117 vorgesehen, so dass die diagonale Lage der Abspannschläuche 113 und 114 gegenüber der der Abspannschläuche 107 und 108 verändert ist. Je nach Fahrzeugtyp kann eine der beiden Ausführungsvarianten vorteilhaft sein.

Die in Fig. 17 schematisch dargestellte, nicht beanspruchte Sicherheitseinrichtung 118 stellt eine Weiterbildung der Sicherheitseinrichtung 104 von Fig. 14 bzw. 15 dar. Bei dieser Sicherheitseinrichtung 118 ist zu den diagonal angeordneten Abspannschläuchen 119 und 120 zusätzlich ein über die Fahrzeugbreite verlaufender Kopfairbag 121 und ein über die Fahrzeugbreite verlaufender Thoraxairbag 122 ausgebildet. Jeweils seitlich am Kopfairbag 121 bzw. am Thoraxairbag 122 verläuft von einem Dachbereich 123 jeweils ein Befüllschlauch 124 und 125 im aktivierten Zustand der Sicherheitseinrichtung 118 vertikal nach unten. Die Abspannschläuche 119 und 120 sind so mit dem Kopfairbag 121 bzw. dem Thoraxairbag 122 mit den jeweils zugehörigen Befüllschläuchen 124 und 125 verknüpft, dass ein funktionssicheres Abfangen des Fondinsassen 8 bei einer Kollision gegeben ist.

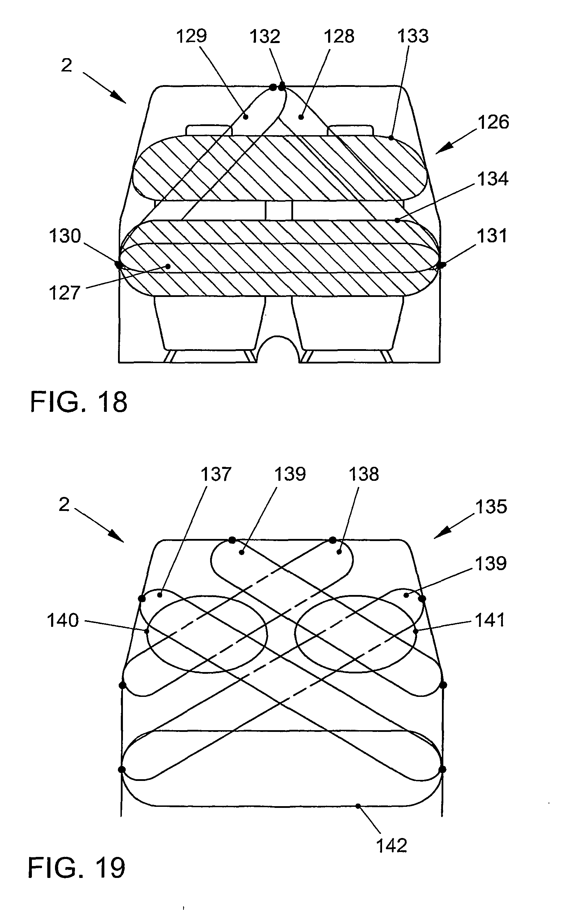

Bei einer in Fig. 18 schematisch dargestellten, nicht beanspruchten Sicherheitseinrichtung 126 sind drei Abspannschläuche 127, 128 und 129 vorgesehen, die im aktivierten Zustand der Sicherheitseinrichtung 126 in einer Aufspannebene dreieckförmig angeordnet sind. Ein Abspannschlauch 127 verläuft quer zwischen zwei Abspannschlauch-Anbindungsstellen 130 und 131 über die komplette Fahrzeugbreite, wobei die Abspannschlauch-Anbindungsstellen 130 und 131 jeweils in einem mittleren Fahrzeugseitenbereich angeordnet sind. Mittig in einem Dachbereich 132 ist eine weitere Abspannschlauch-Anbindungsstelle 133 ausgebildet, zwischen der die beiden Abspannschläuche 128 und 129 jeweils seitlich nach unten zu den Abspannschlauch-Anbindungsstellen 130 und 131 angebunden sind. Damit ergibt sich im aufgeblasenen Zustand der jeweiligen Abspannschläuche 127, 128 und 129 eine dreieckförmige Anordnung derselben. Die Abspannschläuche 127, 128 und 129 spannen zwei Abstützairbags 133 und 134, die über Drosseln (nicht dargestellt) miteinander strömungsverbunden sind, auf und stützen diese von hinten her ab. Damit ist für den Fondinsassen 8 eine kompakte Aufprallfläche durch die Abspannschläuche 127, 128 und 129 und durch die Abstützairbags 133 und 134 für ein funktionssicheres Auffangen bei einer Kollision gegeben.

In Fig. 19 ist eine alternative Variante der Sicherheitseinrichtung 126 von Fig. 18 als nicht beanspruchte Sicherheitseinrichtung 135 schematisch dargestellt. Anstelle der dreieckförmigen Anordnung der Abspannschläuche 127, 128 und 129 in Fig. 18 sind vier Abspannschläuche 136, 137 138 und 139 gekreuzt und teilweise parallel verlaufend an diversen Abspannschlauch-Anbindungsstellen entlang der Fahrzeugaußenseite angeordnet. An den Abspannschläuchen 136 bis 139 sind zusätzlich zwei Kopfairbags 140 und 141 und ein über die komplette Fahrzeugbreite ausgebildeter Thoraxairbag 142 strömungsverbunden angeordnet. Auch hier ist eine kompakte Aufprallfläche für den Fondinsassen 8 bei einem Kollisionsfall mit aktivierter Sicherheitseinrichtung 135 gegeben.

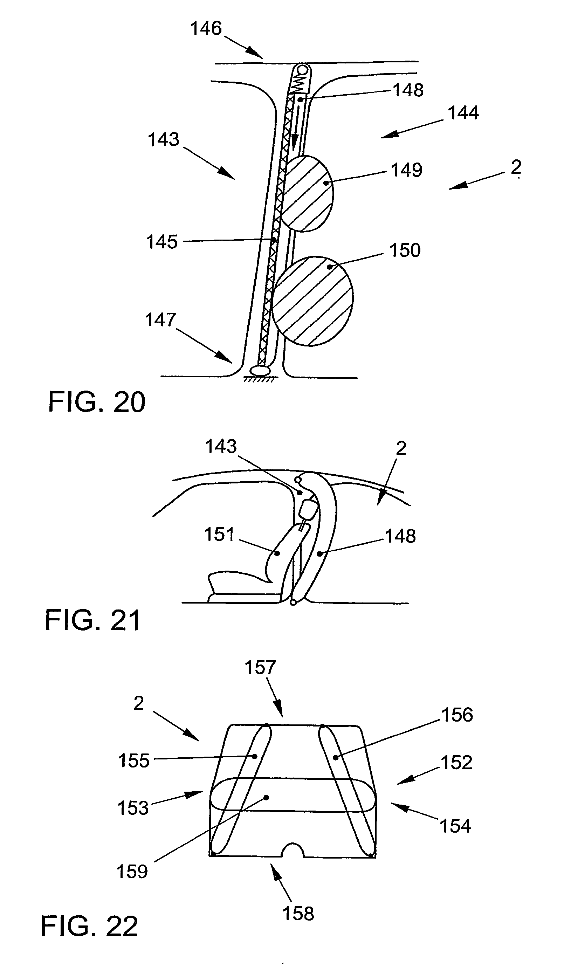

In Fig. 20 ist schematisch eine Seitenansicht einer B-Säule 143 mit einer nicht beanspruchten Sicherheitseinrichtung 144 im aktivierten Zustand dargestellt. Vertikal entlang der B-Säule 143 ist ein Tuch 145 von einem Dachbereich 146 bis zu einem Bodenbereich 147 angeordnet. In das Tuch 145 ist ein Abspannschlauch 148 integriert, wobei der Abspannschlauch 148 im nicht aktivierten Zustand im Dachbereich 146 angeordnet ist. Neben der Abspannfunktion ist der Abspannschlauch 148 auch zur Energieabsorption einsetzbar. Am Abspannschlauch 148 ist ein Kopfairbag 149 und ein Thoraxairbag 150 integral angeordnet. Sowohl der Kopfairbag 149 als auch der Thoraxairbag 150 erstrecken sich über die komplette Fahrzeugbreite, wobei an der gegenüberliegenden B-Säule eine der dargestellten analogen Anordnung von Tuch und Absannschlauch vorhanden ist. Durch ein zeitversetztes Befüllen des Abspannschlauches 148 bzw. des Kopfairbags 149 und des Thoraxairbags 150 führt zur Energieabsorption und somit zu einer Belastungsreduktion für einen in out-of-position befindlichen Fondinsassen 8.

In Fig. 21 ist der Abspannschlauch 148 der Sicherheitseinrichtung 144 bei einer out-of-position-Stellung eines Vordersitzes 151 gezeigt. Der Abspannschlauch 148 ist dabei so ausgelegt, dass trotz der out-of-position-Stellung des Vordersitzes 151 ein Schutz für den Fondinsassen 8 im Kollisionsfall gegeben ist.

In Fig. 22 ist schematisch eine Ansicht in Fahrzeuglängsrichtung des Fondbereiches 2 mit einer nicht beanspruchten Sicherheitseinrichtung 152 im aktivierten Zustand dargestellt. Jeweils seitlich an den beiden B-Säulenbereichen 153 und 154 sind vertikal zwei Abspannschläuche 155 und 156 angeordnet. Die beiden Abspannschläuche 155 und 156 erstrecken sich ebenfalls von einem Dachbereich 157 zu einem Bodenbereich 158. Über die Fahrzeugbreite ist ein Abstützairbag 159 als Fondairbag angeordnet, der mit den Abspannschläuchen 155 und 156 strömungsverbunden ist. Somit ist auch bei dieser Sicherheitseinrichtung 152 durch die Kombination von Abspannschläuchen 155 und 156 mit dem Abstützairbag 159 ein funktionssicheres Abfangen des Fondinsassen 8 im Kollisionsfall gegeben. Der Abstützairbag 159 befindet sich in einer mittleren Fahrzeughöhe, was in etwa dem Brustbereich des Fondinsassen 8 entspricht.

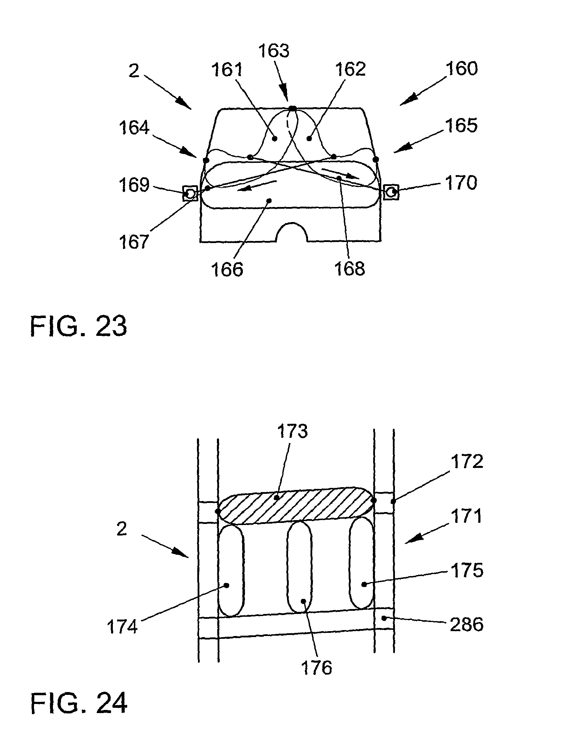

Bei einer weiteren Ausführungsform einer nicht beanspruchten Sicherheitseinrichtung 160, die in Fig. 23 schematisch dargestellt ist, sind zwei Abspannschläuche 161 und 162 jeweils von einem mittigen Dachbereich 163 zu jeweils einer Fahrzeugseite 164 und 165 angeordnet. Quer zur Fahrtrichtung über die komplette Fahrzeugbreite verläuft ein Abstützairbag 166 als Fondairbag der näher zum Fondinsassen 8 angeordnet ist als die Abspannschläuche 161 und 162. Um ein Durchtauchen des Kopfes des Fondinsassen 8 bei einer Kollision und eine Abstützung des Oberkörpers des Fondinsassen 8 am Abstützairbag 166 zu gewährleisten sind die beiden Abspannschläuche 161 und 162 mittels jeweils einem Spannband 167 und 168 jeweils in Richtung zur gegenüberliegenden Fahrzeugseite 164 und 165 abgespannt. Die Spannbänder 167 und 168 sind jeweils an der Fahrzeugseite 164 und 165 mit einer Strammereinrichtung 169 und 170 verbunden, so dass damit eine vorteilhafte Straffung der Abspannschläuche 161 und 162 bei der Aktivierung der Sicherheitseinrichtung 160 erfolgen kann. Damit ist ein sicheres Durchtauchen des Kopfes des Fondinsassen 8 möglich.

Bei der in Fig. 24 dargestellten Ausführungsform einer nicht beanspruchten Sicherheitseinrichtung 171 ist im Bereich einer B-Säule 172 ein Abspannsystem 173, das aus mehreren Abspannschläuchen besteht, angeordnet. Das Abspannsystem 173 wird im aktivierten Zustand der Sicherheitseinrichtung 171 in Fahrtrichtung nach hinten zu einer C-Säule 286 mittels zweier seitlicher Spannschläuche 174 und 175 und einem mittleren Spannschlauch 176 abgestützt. Die beiden seitlichen Spannschläuche 174 und 175 können im nicht aktivierten Zustand entweder im Dachbereich oder im Schwellerbereich integriert sein, während der mittige Spannschlauch 176 im nicht aktivierten Zustand der Sicherheitseinrichtung 171 im Dach integriert ist. Die Spannschläuche 174, 175 und 176 können so ausgelegt sein, dass sie sich in ihrer Länge beim Aufblasen verkürzen und somit funktionssicher eine Abstützfunktion für das Abspannsystem 173 im aktivierten Zustand der Sicherheitseinrichtung 171 bilden.

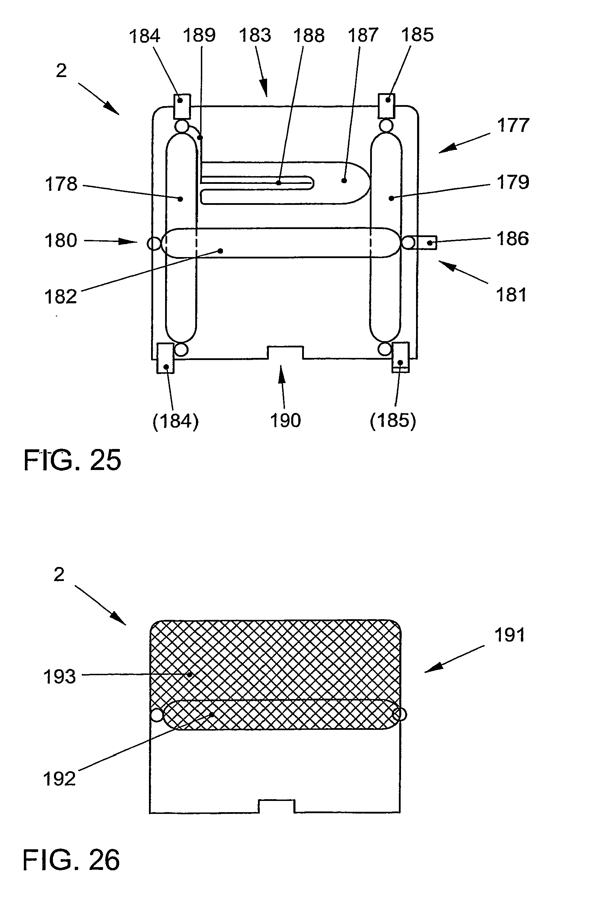

In Fig. 25 ist schematisch eine Ansicht in Fahrzeuglängsrichtung einer weiteren Ausführungsform einer nicht beanspruchten Sicherheitseinrichtung 177 dargestellt. Dabei sind zwei Abspannschläuche 178 und 179 jeweils im Bereich einer B-Säule auf beiden Fahrzeugseiten 180 und 181 integriert. Quer zur Fahrtrichtung über die komplette Fahrzeugbreite ist ungefähr fahrzeugmittig ein weiterer Abspannschlauch 182 angeordnet. Die beiden vertikalen Abspannschläuche 178 und 179 sind jeweils in einem Dachbereich 183 an einen Gasgenerator 184 und 185 angeschlossen. Der Querverlauf des Abspannschlauches 182 weist ebenfalls an einer Fahrzeugseite 181 einen Gasgenerator 186 auf. Zwischen der mit einem Zündschnurgenerator 188 ausgestattet ist. Die Befüllung des Abspannschlauches 187 erfolgt durch Zündung des Zündschnurgenerators 188, der über eine Zündleitung 189 mit dem Gasgenerator 184 verbunden ist und von dort aus gegebenenfalls zeitversetzt zündbar ist. Alternativ können die Gasgeneratoren 184 und 185 auch in einem Bodenbereich 190 angeordnet sein. In Fig. 25 sind beide Alternativen dargestellt.

In Fig. 26 ist eine weitere Ausführungsform einer nicht zur Erfindung gehörigen Sicherheitseinrichtung 191 in einer Ansicht in Fahrzeuglängsrichtung schematisch dargestellt. Dabei ist ein Abspannschlauch 192 quer zur Fahrtrichtung über die komplette Fahrzeugbreite im aktivierten Zustand der Sicherheitseinrichtung 191 angeordnet. Der Abspannschlauch 192 zieht bei der Entfaltung ein Netz 193 nach unten und spannt dieses auf. Damit ist der Fondbereich durch das aufgespannte Netz 193 komplett abgeriegelt, wodurch auch z. B. bei umgelegter Rücksitzlehne 6 der Rücksitzbank 4 und darauf angeordneter Ladung ein Schutz vor umherfliegender Ladung im Kollisionsfall für den Frontinsassen besteht.

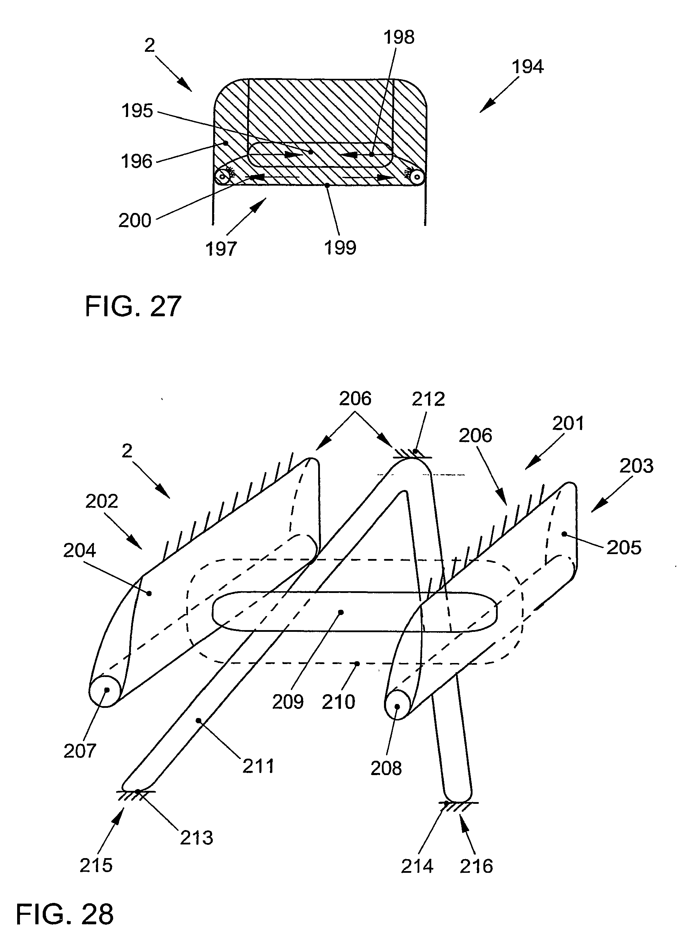

In Fig. 27 ist zur Sicherheitseinrichtung 191 von Fig. 26 eine alternative nicht zur Erfindung gehörigen Sicherheitseinrichtung 194 schematisch dargestellt. Dabei ist ein Abspannschlauch 195 quer zur Fahrtrichtung über die Fahrzeugbreite angeordnet. Ein mit dem Abspannschlauch 195 gekoppeltes Tuch 196 ist mittels einer Seil- und Umlenkeinrichtung 197 so gekoppelt, dass das Tuch 196 weiter als die Schlauchlage des Abspannschlauches 195 aufspannbar ist. Durch die Verkürzung des Abspannschlauches 195 (Pfeil 198) wird ein Seil 199 der Seil- und Umlenkeinrichtung 197 und damit das Tuch 196 aufgespannt. Die Seilbewegung ist mit Pfeil 200 in Fig. 27 eingezeichnet.

In Fig. 28 ist eine weitere Ausführungsform einer nicht zur Erfindung gehörigen Sicherheitseinrichtung 201 zum Schutze des Fondinsassen 8 im Fondbereich 2 im aktivierten Zustand dargestellt. Jeweils in einem seitlichen Fahrzeugbereich 202 und 203 verläuft ein vorhangartiger Seitenairbag 204 und 205 in Fahrzeuglängsrichtung. Die beiden Seitenairbags 204 und 205 sind jeweils im Dachbereich 206 angebunden. Dem Anbindungsbereich im Dachbereich 206 jeweils gegenüberliegend ist ein seitlicher Abspannschlauch 207 und 208 jeweils in den Seitenairbags 204 und 205 sich in Fahrzeuglängsrichtung erstreckend ausgebildet. Zwischen den beiden seitlichen Abspannschläuchen 207 und 208 verläuft in Fahrzeugquerrichtung im Bereich vor den Fondinsassensitzpositionen ein Quer-Abspannschlauch 209, der mit den seitlichen Abspannschläuchen 207 und 208 strömungsverbunden sein kann. Der Quer-Abspannschlauch 209 spannt zudem einen Abstützairbag 210 auf, der in Fig. 28 strichliert eingezeichnet ist. Der Quer-Abspannschlauch 209 wird im aktivierten Zustand mittels einem Abstütz-Abspannschlauch 211 abgestützt, der integral mit dem Quer-Abspannschlauch 209 verbunden sein kann. Der Abstütz-Abspannschlauch 211 ist im aktivierten Zustand V-förmig ausgebildet, wobei dessen erste Anbindungsstelle 212 in dem Dachbereich 206 mittig angeordnet ist und dessen zweite Anbindungsstelle 213 und 214 jeweils in einem bodenseitigen Fahrzeugseitenbereich 215 und 216 liegt. Von der ersten Anbindungsstelle 212 im Dachbereich 206 verläuft der Abstütz-Abspannschlauch 211 in Fahrtrichtung gesehen schräg nach hinten zu den zweiten Anbindungsstellen 213 und 214 jeweils im bodenseitigen Fahrzeugseitenbereich 215 und 216.

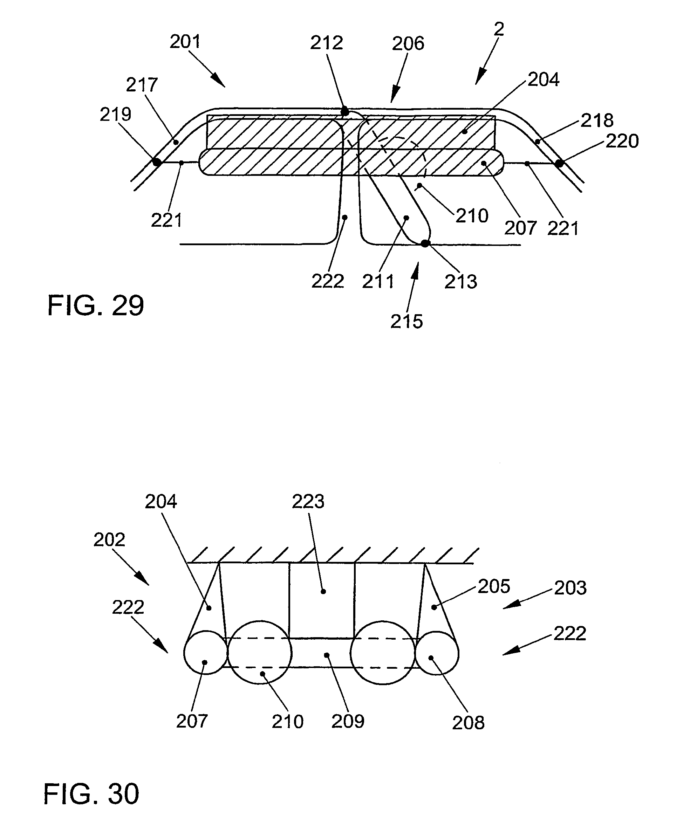

In Fig. 29 ist schematisch eine Seitenansicht der Sicherheitseinrichtung 201 von Fig. 28 dargestellt. Dabei ist zu erkennen, dass sich der vorhangartige Seitenairbag 204, 205 über den gesamten Fahrzeugseitenbereich des Fahrzeuginnenraums von einer A-Säule 217 bis zu einer C-Säule 218 erstreckt. Der dem Seitenairbag 204, 205 jeweils zugeordnete seitliche Abspannschlauch 207, 208 weist eine erste Abspannschlauch-Anbindungsstelle 219 an der A-Säule 217 und eine zweite Abspannschlauch-Anbindungsstelle 220 im Bereich der C-Säule 218 auf. Die Anbindung der seitlichen Abspannschläuche 207, 208 erfolgt an die beiden Säulen 217, 218 jeweils über Spannseile 221. Die erste Anbindungsstelle 212 im Dachbereich 206 des Abstütz-Abspannschlauchs 211 ist in Fahrzeuglängsrichtung gesehen im Bereich einer B-Säule 222 angeordnet, wobei sich die zweiten Anbindungsstellen 213 und 214 am bodenseitigen Fahrzeugseitenbereich 215 und 216 in Fahrtrichtung gesehen dahinter befinden, so dass der Abstütz-Abspannschlauch 211 im aktivierten Zustand schräg nach hinten in Richtung C-Säule 218 abfallend verläuft. Strichliert ist der Abstützairbag 210, der am Quer-Abspannschlauch 209 ausgebildet ist, in Fig. 29 eingezeichnet.

In Fig. 30 ist schematisch eine Ansicht in Fahrzeuglängsrichtung der Sicherheitseinrichtung 201 dargestellt. Jeweils im seitlichen Fahrzeugbereich 202 und 203 ist der Seitenairbag 204 und 205 mit den zugeordneten seitlichen Abspannschläuchen 207 und 208 angeordnet. Zwischen den seitlichen Abspannschläuchen 207 und 208 ist der Quer-Abspannschlauch 209 angeordnet, wobei der im Quer-Abspannschlauch 209 integrierte Abstützairbag 210 als zweikammriger Thoraxairbag ausgebildet ist. Als zusätzliche Abstützung des Abstützairbags 210 bzw. des Quer-Abspannschlauchs 209 ist mittig am Quer-Abspannschlauch 209 ein Haltetuch 223 ausgebildet, das mit dem Dachbereich 206 fest verbunden ist. Das Haltetuch 223 kann in Kombination oder alternativ zu dem Abstütz-Abspannschlauch 211 angeordnet sein (Abstütz-Abspannschlauch 211 ist in Fig. 30 aus Übersichtlichkeitsgründen weggelassen). Das Haltetuch 223 kann alternativ auch durch einen Befüllschlauch für die Airbags 209 und 210 ersetzt werden.

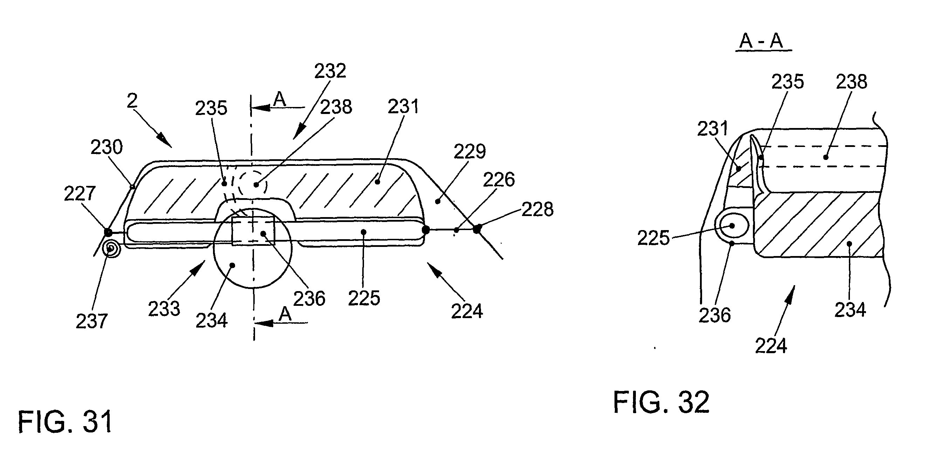

In Fig. 31 ist schematisch eine Seitenansicht des Kraftfahrzeuges 3 mit einer weiteren Ausführungsform einer nicht zur Erfindung gehörigen Sicherheitseinrichtung 224 schematisch dargestellt. Dabei erstreckt sich in Fahrzeuglängsrichtung ein seitlicher Abspannschlauch 225, der jeweils über ein Spannseil 226 mit einer Abspannschlauch-Anbindungsstelle 227 und 228 an einer A-Säule 229 und einer C-Säule 230 verbunden ist. Der seitliche Abspannschlauch 225 ist in einem in Fahrzeughochrichtung gesehen unteren Bereich eines Seitenairbags 231 angeordnet, der andernseits mit einem Dachbereich 232 des Kraftfahrzeuges 3 verbunden ist und im aktivierten Zustand vorhangartig entlang der Fahrzeugseite aufspannbar ist. Die Anordnung seitlicher Abspannschlauch 225 mit Seitenairbag 231 ist auf beiden Fahrzeugseiten ausgebildet, so dass zwischen den beiden Abspannschläuchen 225 ein Quer-Abspannschlauch 233 mit daran angeordneten Thoraxairbag 234 als Fondairbag verläuft. Der Thoraxairbag 234 ist mittels einem Befüllschlauch 235 mit Gas im aktivierten Zustand der Sicherheitseinrichtung 224 beaufschlagbar.

Eine Führungshülse 236 umgreift den seitlichen Abspannschlauch 225 und ist mit dem Quer-Abspannschlauch 233 bzw. mit dem Thoraxairbag 234 gekoppelt. Die Führungshülse 236 ist mittels einer Strammereinrichtung 237, die im Bereich der C-Säule 230 angeordnet ist, in Fahrzeuglängsrichtung längsverschiebbar, so dass der Thoraxairbag 234 bzw. der Quer-Abspannschlauch 233 im aktivierten Zustand der Sicherheitseinrichtung 224 in Richtung zum Fondinsassen 8 bewegbar ist. Das Seil der Strammereinrichtung 237 verläuft innerhalb der Gewebehülle des Seitenairbags 231, um einen Kontakt mit dem Fondinsassen zu vermeiden. Zusätzlich kann ein Kopfairbag 238, der strichliert eingezeichnet ist, parallel verlaufend zum Thoraxairbag 234 in der Sicherheitseinrichtung 224 integriert sein.

In Fig. 32 ist schematisch eine Schnittdarstellung des Schnittes A-A von Fig. 31 dargestellt. Die Führungshülse 236 umgreift den seitlichen Abspannschlauch 225 und ist entlang diesem in einem vorgegebenen Verstellbereich längsverschiebbar. Der Abspannschlauch 225 ist mit dem Seitenairbag 231 gekoppelt, der im Dachbereich 232 angebunden ist. Ebenfalls vom Dachbereich 232 ausgehend verläuft der Befüllschlauch 235 zum Thoraxairbag 234. Die Führungshülse 236 mit zugeordneter Strammereinrichtung 237 ist beidseitig an beiden Enden des Thoraxairbags 234 ausgebildet, so dass dieser gleichmäßig in Fahrzeuglängsrichtung verschiebbar ist.

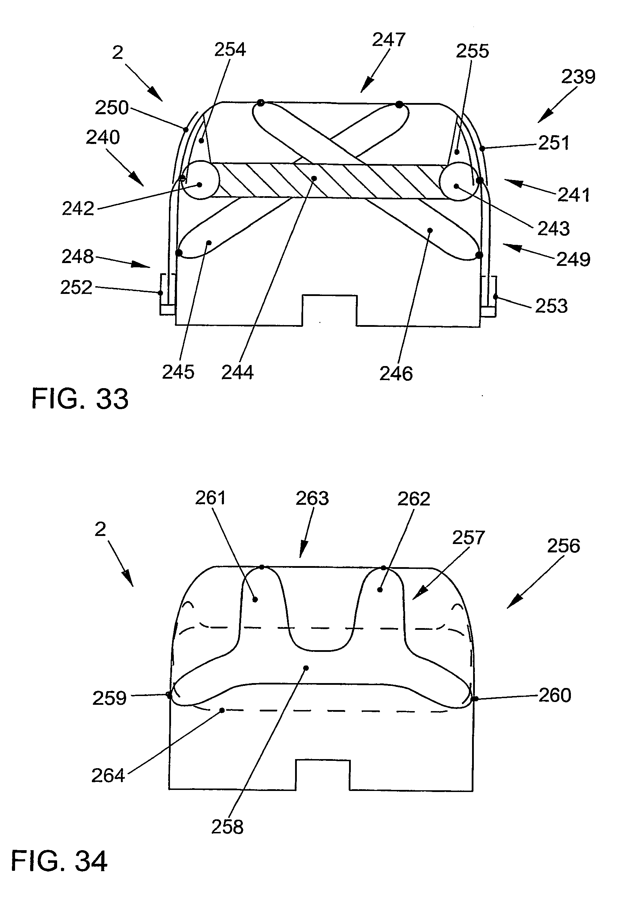

In Fig. 33 ist eine weitere Ausführungsform einer nicht zur Erfindung gehörigen Sicherheitseinrichtung 239 in einer Ansicht in Fahrzeuglängsrichtung schematisch dargestellt. Jeweils in einem seitlichen Fahrzeugbereich 240 und 241 ist sich in Fahrzeuglängsrichtung erstreckend ein seitlicher Abspannschlauch 242 und 243 ausgebildet. Zwischen den beiden seitlichen Abspannschläuchen 242 und 243 ist in Fahrzeugquerrichtung ausgerichtet ein Quer-Abspannschlauch 244 als Fondairbag angeordnet, der mit den seitlichen Abspannschläuchen 242 und 243 strömungsverbunden sein kann. Zur Abstützung des Quer-Abspannschlauches 244 sind zwei diagonal angeordnete Abspannschläuche 245 und 246 als Rückhaltevorrichtung vorgesehen, die einerseits in einem Dachbereich 247 und andererseits jeweils im Bereich einer B-Säule 248 und 249 im Fahrzeugseitenbereich angebunden sind. Die beiden seitlichen Abspannschläuche 242 und 243 sind im Bereich der Koppelungsstelle mit dem Quer-Abspannschlauch 244 jeweils so mit der B-Säule 248 und 249 angebunden, dass sie in Fahrzeughochrichtung entlang einer Führung 250 und 251 bei der Aktivierung der Sicherheitseinrichtung 239 von oben vom Dachbereich 247 nach unten verlagerbar sind. Durch diese Verlagerung, die mittels im Bereich der B-Säulen 248 und 249 angeordneten Verlagerungseinrichtungen 252 und 253 durchgeführt wird, wird einerseits der Quer-Abspannschlauch 244 in die dementsprechende Position vor dem Fondinsassen 8 gebracht und andererseits werden den seitlichen Abspannschläuchen 242 und 243 zugeordnete Seitenairbags 254 und 255 entfaltet.

In Fig. 34 ist in einer Ansicht in Fahrzeuglängsrichtung des Fondbereiches 2 eine weitere Ausführungsform einer nicht zur Erfindung gehörigen Sicherheitseinrichtung 256 schematisch dargestellt. Dabei ist ein Abspannschlauch 257 vorgesehen, der mit einem ersten in etwa quer verlaufenden Schlauchteil 258 zwischen zwei an gegenüberliegenden Fahrzeugseiten liegenden Anbindungsstellen 259 und 260 abgespannt ist. Ferner weist der Abspannschlauch 257 neben dem ersten Schlauchteil 258, das in Fahrzeugquerrichtung verläuft, zwei nach oben ragende Schlauchteile 261 und 262 auf, die jeweils an einem Dachbereich 263 angebunden sind. Der Abspannschlauch 257 stützt von hinten her einen Thoraxairbag, der strichliert in Fig. 34 eingezeichnet ist, ab. Die Freiräume zwischen den nach oben weisenden Schlauchteilen 261 und 262 des Abspannschlauches 257 erlauben bei einer Kollision ein Durchtauchen des Kopfes des Fondinsassen 8. Alternativ können diese Aussparungen aber auch durch zusätzliche Airbags, Matten oder Netze zur Vermeidung der Interaktion zwischen dem Front- und Fondinsassen 8 bzw. als Ladungsschutz geschlossen werden.

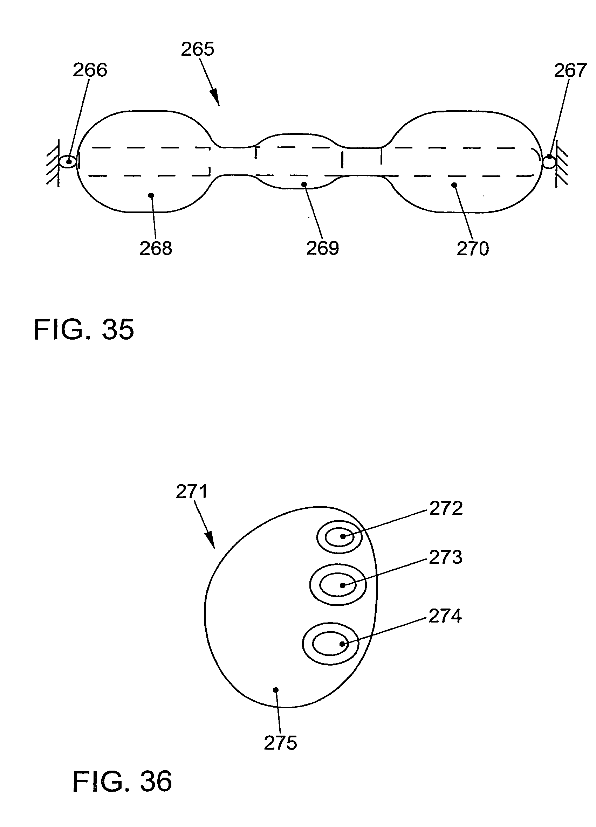

In Fig. 35 ist eine alternative nicht zur Erfindung gehörige Ausführungsform eines Abspannschlauches 265 schematisch dargestellt. Der Abspannschlauch 265 ist zwischen zwei fahrzeugseitlichen Anbindungsstellen 266 und 267, die z. B. im Bereich der B-Säulen angeordnet sind, abgespannt. Am Abspannschlauch 265 sind mehrere Airbagkammern 268 bis 270 angeordnet, die z. B. mit einem mehrstufigen Gasgenerator (nicht dargestellt) zeitversetzt zum Abspannschlauch 265 aufblasbar sind. Die Airbagkammern 268 bis 270 können alternativ auch mittels Drosseln mit dem Abspannschlauch 265 verbunden sein. Die Drosseln bzw. damit verbundenen Austrittsöffnungen können dabei dergestalt ausgeführt sein, dass eine Öffnung erst bei einer Insassenbelastung und einer damit verbundenen Druckerhöhung im Abspannschlauch 265 öffnen.

In Fig. 36 ist schematisch ein Querschnitt eines alternativen nicht zur Erfindung gehörigen Abspannschlauches 271 dargestellt. Der Abspannschlauch 271 besteht dabei aus mehreren einzelnen Schläuchen 272 bis 274, die parallel angeordnet sind. Die parallelen Schläuche 272 bis 274 weisen eine integrierte Airbagkammer 275 auf, die das so aufgebaute Abspannsystem stabilisiert. Die einzelnen Schläuche 272 bis 274 und die Airbagkammer 275 können untereinander strömungsverbunden sein. Durch dieses strukturierte Spannsystem mit der integrierten Airbagkammer 275 ist bei einer Belastung im Kollisionsfall ein Verdrehen der Schläuche 272 bis 274 verhindert.

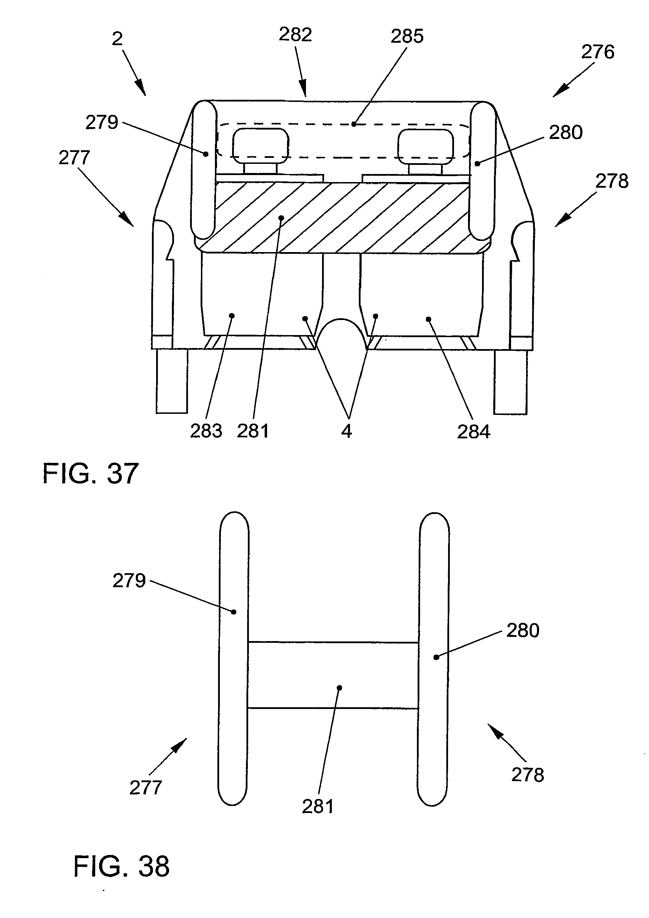

In Fig. 37 ist schematisch eine Ansicht in Fahrzeuglängsrichtung des Fondbereiches 2 mit einer nicht zur Erfindung gehörigen Sicherheitseinrichtung 276 im aktivierten Zustand dargestellt. Jeweils in einem Fahrzeugseitenbereich 277 und 278 ist ein in Fahrzeuglängsrichtung verlaufender vorhangartiger Seitenairbag 279 und 280 angeordnet. Zwischen den beiden Seitenairbags 279 und 280 verläuft in Fahrzeugquerrichtung ein Fondairbag 281, der mit den beiden Seitenairbags 279 und 280 strömungsverbunden sein kann. Die Seitenairbags 279 und 280 sind in einem Dachbereich 282 karosseriefest angebunden. Der Fondairbag 281 ist im aktivierten Zustand fahrzeugmittig vor den Fondinsassenpositionen 283 und 284 angeordnet. Zusätzlich zum Fondairbag 281 kann ein Kopfairbag 285 zur Erhöhung des Insassenschutzes angeordnet sein. Der Kopfairbag 285 ist strichliert in Fig. 37 eingezeichnet.

In Fig. 38 ist eine Draufsicht auf die Airbags 279, 280 und 281 der Sicherheitseinrichtung 276 schematisch dargestellt. Dabei sind die Airbags dergestalt angeordnet, dass sich ein H-förmiger Aufbau im aktivierten Zustand ergibt. In Fahrzeuglängsrichtung verlaufend sind dem Fahrzeugseitenbereich 277 und 278 jeweils zugeordnet die Seitenairbags 279 und 280 als Rückhaltevorrichtung angeordnet, wobei dazwischen querverlaufend der Fondairbag 281 ausgebildet ist. Der Kopfairbag 285 (in Fig. 38 nicht dargestellt) verläuft parallel zum Fondairbag 281. Die beiden Seitenairbags 279 und 280 sind an der A- und C-Säule zur Abspannung angebunden.

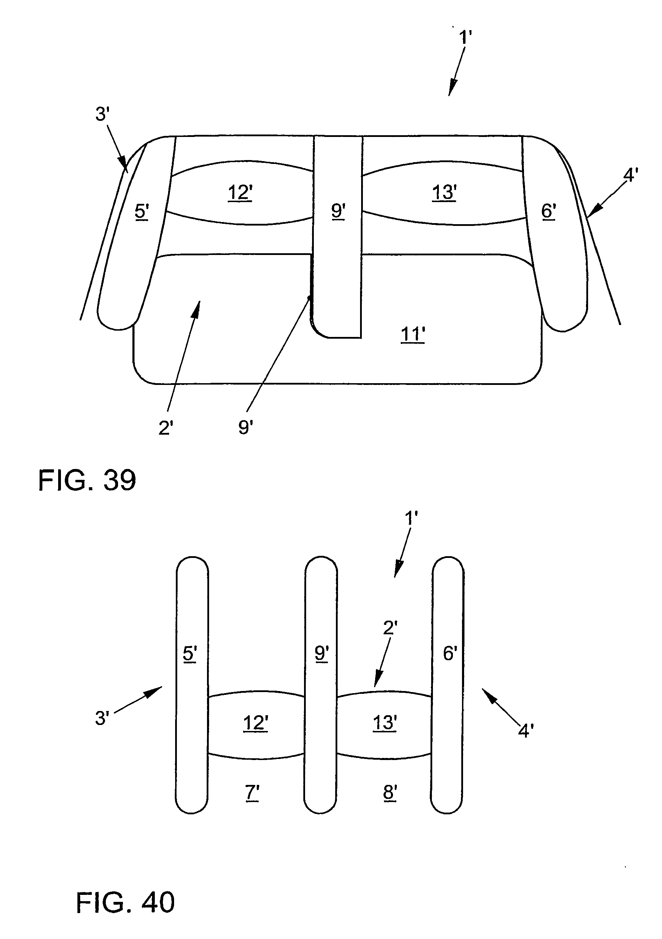

In den Fig. 39 und 40 ist eine alternative nicht zur Erfindung gehörige Ausführungsform gezeigt, bei der die gesamte Sicherheitseinrichtung 1' im nicht aktivierten Grundzustand zusammengefaltet hinter einem Dachverkleidungsteil verstaut angeordnet ist. Die Sicherheitseinrichtung 1' weist einen Fondairbag 2' auf, der sich in Fahrzeugquerrichtung und damit in Längsrichtung des Fondairbags 2' gesehen zwischen gegenüberliegenden Fahrzeugseiten 3', 4' erstreckt und dort jeweils mit einem im aktivierten Zustand vorhangartig vor einem Fahrzeugseitenbereich mittels hier nicht dargestellten Spann- und/oder Befestigungsmitteln aufspannbaren Seitenairbag 5', 6' als Side-Curtain verbunden ist. Die Seitenairbags 5', 6' sind hier so abgespannt, dass diese in einer Doppelfunktion gleichzeitig als Rückhaltevorrichtung für den Fondairbag 2' dienen.

Wie dies aus den Figuren 39 und 40 weiter ersichtlich ist, ist zwischen den beiden Seitenairbags 5', 6' im in Fahrzeugquerrichtung gesehen mittleren Bereich ein im aktivierten Zustand vorhangartig vorzugsweise parallel zu den beiden Seitenairbags 5', 6' in Fahrzeuglängsrichtung zwischen zwei benachbarten Fondinsassen-Sitzpositionen 7', 8' verlaufender Interaktionsairbag 9' vorgesehen. Dieser Interaktionsairbag 9' ist in einer Interaktionsairbag-Ausnehmung 10' in der Thoraxkammer 11' des Fondairbags 2' formschlüssig aufgenommen und verbunden. Beabstandet oberhalb der Thoraxkammer 11' erstrecken sich jeweils zwischen dem Seitenairbag 5' und dem Interaktionsairbag 9' sowie zwischen dem Interaktionsairbag 9' und dem Seitenairbag 6' eine Kopfkammer 12', 13' des Fondairbags 2'. Die Befüllung kann hier beispielsweise über Schnurgeneratoren erfolgen, wobei die Befüllung des Fondairbags 2', d. h. der Thoraxkammer 11' und der Kopfkammern 12', 13' gegebenenfalls auch über die Seitenairbags 5', 6' bzw. über den Interaktionsairbag 9' erfolgen kann.

Ersichtlich trägt der Interaktionsairbag 9' wesentlich zur Stabilisierung des gesamten Aufbaus bei und dient somit gleichzeitig auch als Bestandteil der Rückhaltevorrichtung.

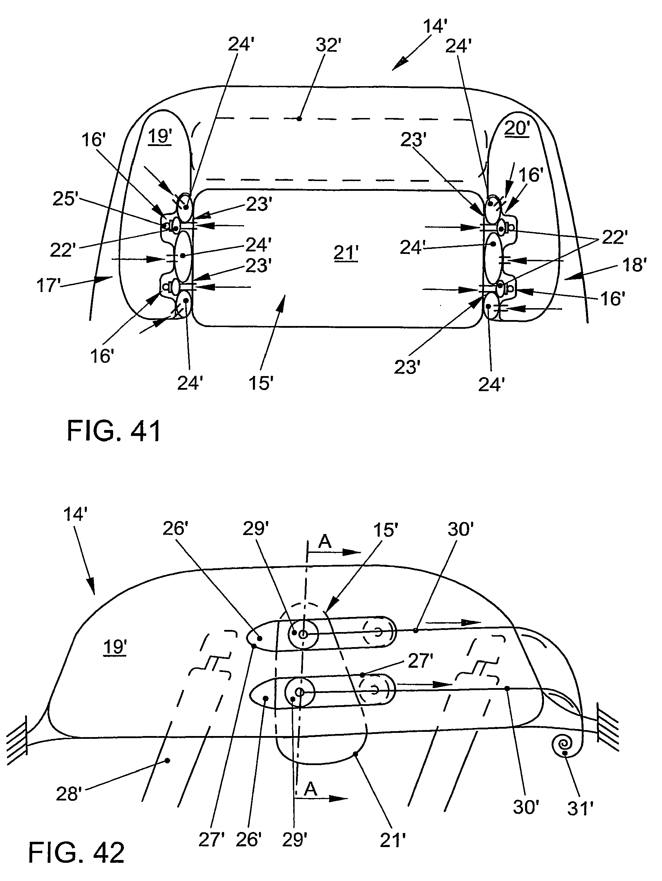

In der Fig. 41 ist eine alternative Lösung einer nicht zur Erfindung gehörigen Sicherheitseinrichtung 14' gezeigt, und zwar ebenfalls im aktivierten Zustand, bei dem die Sicherheitseinrichtung 14' aus dem Dachbereich heraus nach unten entfaltet worden ist.

Die Sicherheitseinrichtung 14' weist einen Fondairbag 15' auf, der sich in Fahrzeugquerrichtung und damit in Längsrichtung des Fondairbags 2' gesehen zwischen gegenüberliegenden Fahrzeugseiten erstreckt und dort jeweils mittels zweier Verschiebeverbindungen 16' mit einem im aktivierten Zustand vorhangartig vor einem Fahrzeugseitenbereich 17', 18' aufblasbaren Seitenairbag 19', 20' als Side-Curtain entlang eines Verschiebeweges verschiebbar verbunden ist. Die Verschiebeverbindungen 16 sind jeweils durch eine am z. B. als Thoraxkammer 21' ausgebildeten Fondairbag 15' ausgebildete Airbagnase 22' gebildet, die jeweils einen an der Seitenairbaginnenwand ausgebildeten Führungsschlitz 23' hintergreift. Die Airbagnase 22' ist hier jeweils durch eine hart aufblasbare separate Airbagkammer gebildet, die mit der Thoraxkammer 11' strömungsverbunden ist, wie dies in Fig. 41 schematisch durch die Pfeile dargestellt ist.

Der Führungsschlitz 23' ist hier jeweils durch separate Seitenairbagkammern 24' gebildet, die mit dem jeweils zugeordneten Seitenairbag 19', 20' strömungsverbunden sind. Auch hier ist die Strömungsverbindung wieder schematisch durch die Pfeile im Bereich des Seitenairbags 19', 20' eingezeichnet. Als Rückhaltevorrichtung ist vorzugsweise ein Seil 25' vorgesehen, das an der Außenseite der Airbagnasen 22' angebunden ist und dadurch abgeschirmt von den Fondinsassen im Schlitzbereich hinter den Seitenairbagkammern 24', die den Führungsschlitz 23' ausbilden verläuft. Im hier nicht dargestellten Bereich außerhalb des Führungsschlitzes 23' können die Seile 25' beispielsweise mittels einer zusätzlichen separaten Airbagkammer des Seitenairbags 19', 20' abgedeckt sein.

Wie dies in der Fig. 41 weiterhin strichliert eingezeichnet ist, kann eine Kopfairbagkammer 32' zusätzlich zur Thoraxkammer 21' vorgesehen sein als weiterer Bestandteil des Fondairbags, der dann gegebenenfalls ebenfalls über Verschiebeverbindungen mit den Seitenairbags 19', 20' verschiebbar verbunden ist.

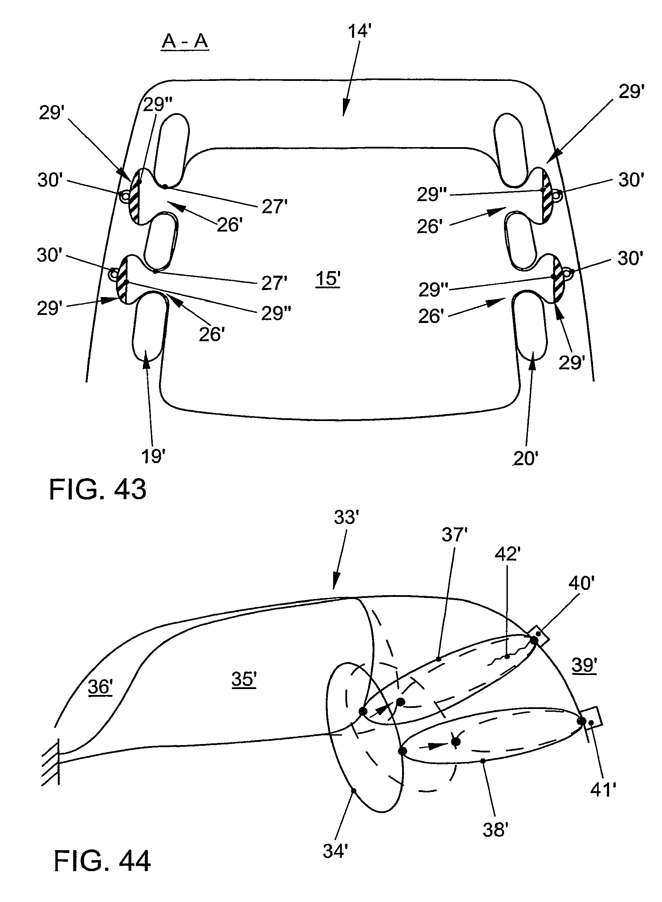

In den Figuren 42 und 43 ist eine alternative nicht zur Erfindung gehörige Ausführungsform gezeigt, bei der ein Führungsschlitz 26' durch Ausnehmungen 27' in den Seitenairbags 19', 20' gebildet ist. Wie dies aus der Fig. 42 deutlich hervorgeht, sind die Seitenairbags 19', 20' vorzugsweise im Bereich der A-Säule und im Bereich der C-Säule abgespannt und verlaufen die Führungsschlitze 26' im Wesentlichen beabstandet voneinander parallel ausgerichtet in etwa in Fahrzeuglängsachsenrichtung, und zwar in einem Bereich hinter einer Vordersitzlehne 28' eines Vordersitzes. Wie dies insbesondere aus der Fig. 43 ersichtlich ist, hintergreifen hier Airbagnasen 29' die Führungsschlitze 26', wobei zur Fixierung und Versteifung der Airbagnasen 29' in diese Scheiben 29" integriert sind, an denen jeweils das Rückhalteseil 30' angreift, wie dies insbesondere auch wiederum aus der Fig. 42 ersichtlich ist. Die beiden Rückhalteseile sind zu einer gemeinsamen Strammereinrichtung 31' geführt.

Die Funktionsweise der in den Funktionen 41 bis 43 dargestellten Ausführungsformen wird anhand der Ausführungsform der Figuren 42 und 43 nachfolgend näher erläutert:

Zu Beginn der Aktivierung der Sicherheitseinrichtung 14' werden die beiden Seitenairbags 19', 20' aus dem Dachbereich heraus entfaltet und aufgeblasen, wodurch der Fondairbag 15' positioniert wird. Anschließend wird dann dieser Fondairbag 15' aufgeblasen, wobei gleichzeitig die Strammereinrichtung 31' aktiviert werden kann, um den Fondairbag 15' über die Rückhalteseile 31' entlang eines Verschiebeweges in den Führungsschlitzen 26' nach vorne bis zum Anschlag am heckseitigen Führungsschlitzrandbereich zu ziehen, wie dies in der Fig. 42 lediglich schematisch strichliert dargestellt ist, so dass der Fondairbag 15' in der vorgegebenen Rückhaltestellung positioniert und gehalten wird. Dies ist in den Figuren 42 und 43 äußerst schematisch zur Verdeutlichung des Prinzips dargestellt. Durch das Strammen der Rückhalteseile 30' über eine einzige Strammereinrichtung wird dabei sichergestellt, dass der Fondairbag 15' in die optimale Rückhalteposition überführt wird.

In der Fig. 44 ist eine weitere alternative nicht zur Erfindung gehörige Ausführungsform gezeigt, bei der ein Fondairbag 34' vorgesehen ist, der sich in Fahrzeugquerrichtung und damit in Längsrichtung des Fondairbags 34' gesehen zwischen gegenüberliegenden Fahrzeugseiten erstreckt und dort jeweils mit einem aktivierten Zustand vorhangartig vor einem Fahrzeugseitenbereich aufblasbaren Seitenairbag 35' als Side-Curtain verbunden ist, von denen in der Darstellung der Fig. 44 lediglich einer gezeigt ist.

Der in der Fig. 44 gezeigte Side-Curtain 35' erstreckt sich im aufgeblasenen Zustand von einer Anbindungsstelle im A-Säulenbereich 36' ausgehend lediglich bis in etwa zum Aufblasbereich des Fondairbags 34' vor einer Fondinsassensitzposition. Wie dies aus der Fig. 44 weiter ersichtlich ist, und zwar aus der mit durchgezogenen Linien gezeigten Darstellung, sind die Side-Curtains 35' und der Fondairbag 34' im seitlichen Fahrzeugbereich jeweils mit einem sich beim Aufblasen in der Länge verkürzenden Airbagschlauch 37', 38' als Abspannschlauch verbunden, die jeweils mit einem weiteren Anbindungspunkt im C-Säulenbereich 39' angebunden sind. Zur Befüllung der Airbagschläuche 37', 38' ist jeweils ein Gasgenerator 40', 41' dargestellt, wobei der Gasgenerator 40' hier beispielhaft als Schnurgenerator mit einer Schnur 42' dargestellt ist.

Wie dies in der Fig. 44 strichliert dargestellt ist, spannen die den Side-Curtains 35' zugeordneten Airbagschläuche 37' diese im Wesentlichen ab und fixieren sie, während die dem Fondairbag 34' zugeordneten Airbagschläuche 38' diesen in Richtung Fondinsassensitzposition ziehen. In der Darstellung der Fig. 44 wird auch der Side-Curtain 35' durch den sich verkürzenden Airbagschlauch 37' in Richtung Fondinsassensitzposition gezogen.

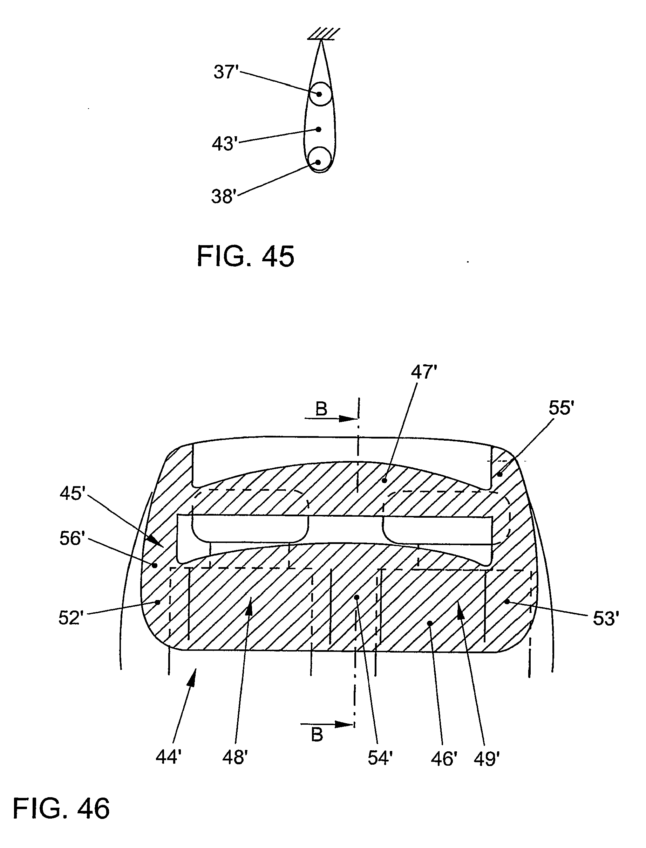

Wie dies weiter aus der Fig. 45 ersichtlich ist, können die beiden Airbagschläuche 37' und 38' auch noch ein Tuch 43' aufspannen.

Aus der Fig. 44 ist wiederum ersichtlich, dass die Side-Curtains 35' im Wesentlichen den vorderen seitlichen Fahrzeugbereich abdecken, während die als Abspannschläuche fungierenden Airbagschläuche 37', 38' in einer Doppelfunktion in der Art von Seitenairbags den seitlichen Fondinsassenbereich abdecken.

Der Fondairbag 34' ist hier nur beispielhaft schematisch dargestellt. Auch hier kann der Fondairbag 34' wieder durch eine Thoraxkammer und eine Kopfairbagkammer gebildet sein.

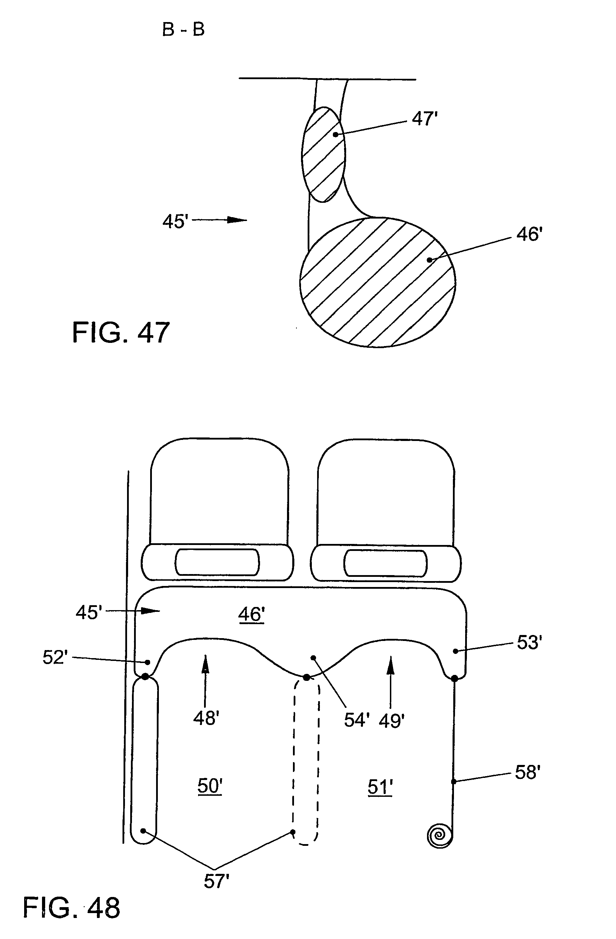

In den Figuren 46 bis 48 sind unterschiedliche Ausführungsformen einer weiteren, nicht unter die beanspruchte Erfindung fallenden Lösung dargestellt, wobei hier eine Sicherheitseinrichtung 44' gezeigt ist, bei der der Fondairbag 45' eine Thoraxairbagkammer 46' sowie eine beabstandet oberhalb angeordnete Kopfairbagkammer 47' aufweist, wobei wenigstens die Thoraxairbagkammer im aktivierten Zustand in ihrer Längserstreckungsrichtung in Fahrzeugquerrichtung gesehene Bereiche unterschiedlicher Dicke zur Ausbildung von Einbuchtungen 48', 49' aufweist. Diese Einbuchtungen sind jeweils einer Fondinsassensitzposition 50', 51' zugeordnet. Die seitlichen Verdickungen 52', 53' bilden, wie dies insbesondere aus der Fig. 48 ersichtlich ist, somit einen Schrägaufprallschutz aus, während die zwischen den beiden Einbuchtungen 48', 49' liegende mittige Verdickung 54' einen Interaktionsschutz ausbilden sollen. Hierzu müsste gegebenenfalls die mittige Verdickung mehr in Richtung Fondinsassensitzpositionen hin vorstehen, was jedoch in der Fig. 48 nicht dargestellt ist, in der lediglich schematisch das Grundprinzip verdeutlicht werden soll.

Wie dies insbesondere aus der Fig. 47 ersichtlich ist, ist die Kopfairbagkammer 47' gegenüber der Thoraxairbagkammer 46' kleiner ausgebildet, wobei die Kopfairbagkammer 47' und die Thoraxairbagkammer 46' über seitliche Füllschläuche 55', 56' miteinander strömungsverbunden sind.

Wie dies aus der Fig. 47 weiter ersichtlich ist, kann die Kopfairbagkammer 47' gegenüber der Thoraxairbagkammer 46', insbesondere in den verdickten Bereichen, in Richtung vom Fondinsassen weg nach hinten versetzt sein.

Für den Fall, dass eine Abspannung des Fondairbags 45' über eine Rückhaltevorrichtung erfolgen soll, können Abspanneinrichtungen in Form von sich beim Aufblasen in der Länge verkürzenden Airbagschläuchen 57' vorgesehen sein. Alternativ kann hierzu auch eine Seil- und Strammeranordnung 58' vorgesehen sein. Eine Abspannung im mittleren Fondairbagbereich 45' braucht nicht unbedingt vorgesehen sein, weswegen der Airbagschlauch 57' hier strichliert dargestellt ist.

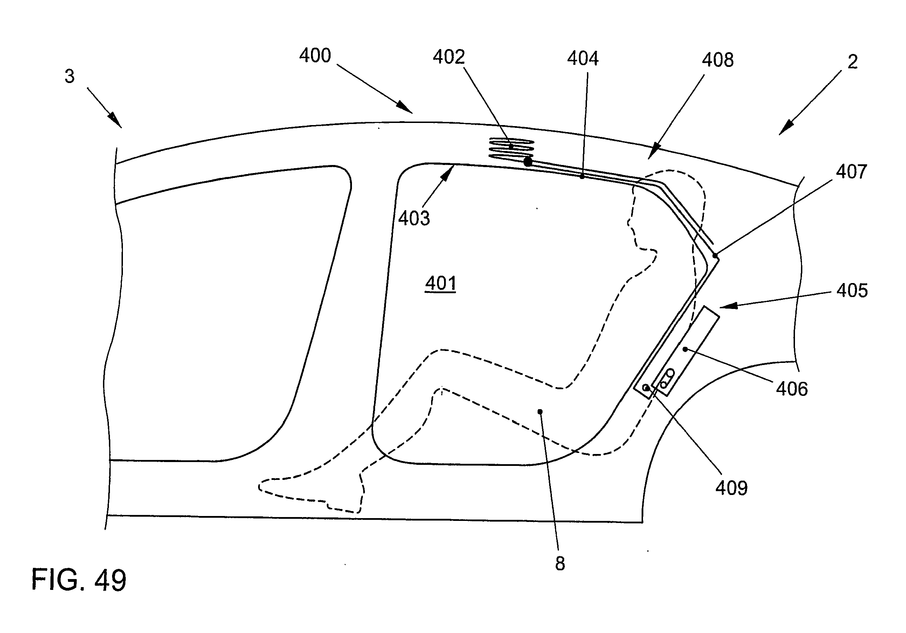

In Fig. 49 ist schematisch eine Seitenansicht einer erfindungsgemäßen Sicherheitseinrichtung 400 im Fondbereich 2 des Kraftfahrzeuges 3 dargestellt. Der Fondinsasse 8 ist bei dieser Darstellung aus Übersichtlichkeitsgründen nur strichliert eingezeichnet. Der im Fahrzeuginnenraum 401 abspannbare Abspannairbag 402 als Airbag ist im hier dargestellten nicht aktivierten Zustand in einem fondseitigen Dachhimmelbereich 403 hinter einem Verkleidungsteil 404 verstaut. Im Bereich einer C-Säule 405 ist eine Abspann- und Rückhaltevorrichtung 406 angeordnet, die nach dem Flaschenzugprinzip arbeitet. Zwischen dem Abspannairbag 402 und der Abspann- und Rückhaltevorrichtung 406 ist ein Seil 407 als Abspann- und Rückhaltemittel angeordnet, das im nicht aktivierten Zustand der Sicherheitseinrichtung 400 vom Abspannairbag 402 ausgehend entlang eines Dachholmbereiches 408 zur an der C-Säule 405 angeordneten Abspann- und Rückhaltevorrichtung 406 geführt ist. Dort wird das Seil 407 über eine Umlenkvorrichtung 409 in die Abspann- und Rückhaltevorrichtung 406 geführt. Der Abspannairbag 402 ist im nicht aktivierten Zustand U-förmig gefaltet mit einem im wesentlichen im Bereich vor dem Fondinsassen 8 quer über die gesamte Fahrzeugbreite verlaufenden ersten Airbagteilbereich als U-Basis sowie mit jeweils einem auf gegenüberliegenden Fahrzeugseiten verlaufenden zweiten Airbagteilbereich als U-Schenkel, die sich von der U-Basis ausgehend entlang des Dachholmbereiches 408 bis in den Bereich des Fondinsassen 8 erstrecken.

Im Zuschnitt ist der Abspannairbag 402 im wesentlichen H-förmig ausgebildet mit einem großflächigen und den eigentlichen Abstützbereich des Abspannairbags 402 bildenden Mittelteil 410 als H-Steg, der im gefalteten Zustand Bestandteil der U-Basis ist. Vom Mittelteil 410 ragen Schlauchbereiche als H-Schenkel 411 und 412 weg, die im gefalteten Zustand die U-Schenkel des Abspannairbags 402 ausbilden. Im aufgeblasenen Zustand ist das Mittelteil 410 vor dem Fondinsassen 8 aufgeblasen, so dass dadurch der Abstützbereich des Abspannairbags 402 gebildet ist. Auf in Querrichtung gegenüberliegenden Seiten des Mittelteils 410 ist jeweils am im aktivierten Zustand des Abspannairbags 402 unteren H-Schenkel 411 das Seil 407 angebunden, so dass mittels dem Seil 407 eine Abspannung und Rückhaltung des Abspannairbags 402 bei einer Aktivierung der Sicherheitseinrichtung 400 erfolgen kann.

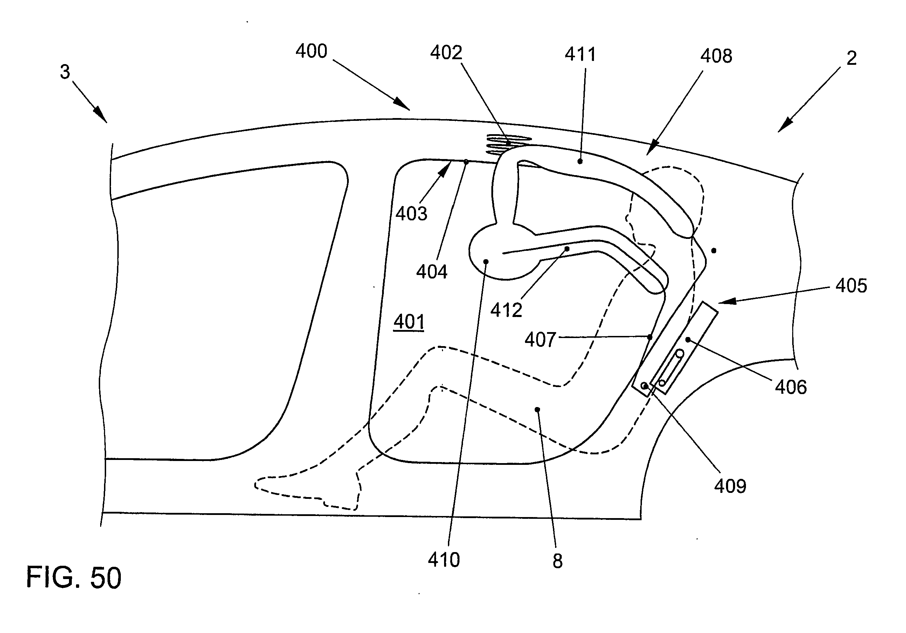

In Fig. 50 ist schematisch die Sicherheitseinrichtung 400 in einer Seitenansicht dargestellt. Der hier dargestellte Zustand der Sicherheitseinrichtung 400 entspricht dem kurz nach der Aktivierung der Sicherheitseinrichtung 400. Durch das Mittelteil 410, das bei einer Aktivierung nach unten in den Fahrzeuginnenraum 401 entfaltet wird, ist der Dachhimmelbereich 403 zur Ausbildung einer Airbagaustrittöffnung bereichsweise aufgedrückt worden. Das Seil 407, das mit dem unteren H-Schenkel 412 gekoppelt ist, wird mittels der Abspann- und Rückhaltevorrichtung 406 schon teilweise eingezogen, so dass der Abspannairbag 402, im speziellen das Mittelteil 410 nach unten und in Richtung Fondinsasse 8 gezogen wird. Der oberer H-Schenkel 411 deckt dabei den Dachholmbereich 408 ab.

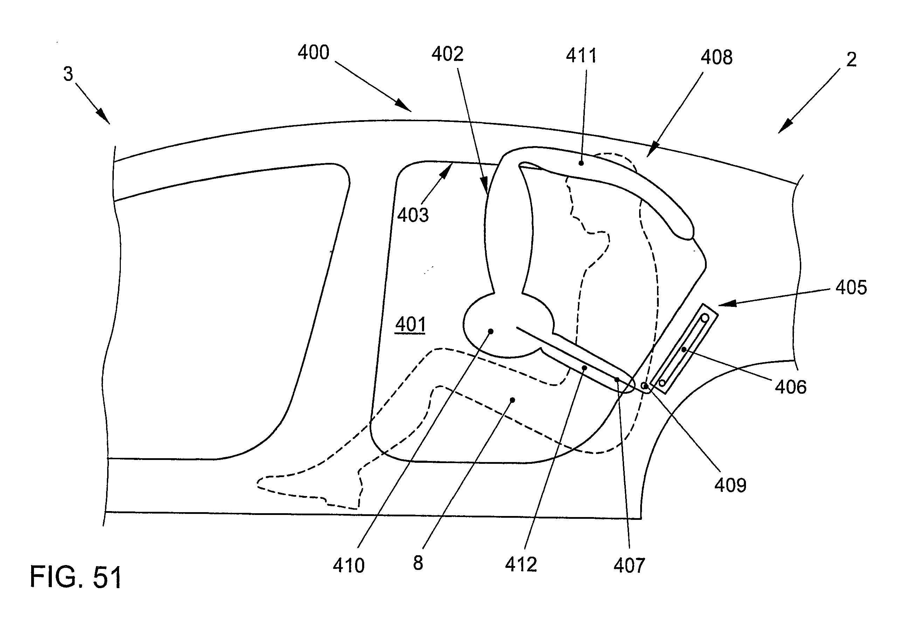

In Fig. 51 ist die Endposition des Abspannairbags 402 der Sicherheitseinrichtung 400 in einer schematischen Seitenansicht gezeigt. Das Mittelteil 410 ist vor dem Fondinsassen 8 angeordnet, so dass dadurch eine Abstützung und Rückhaltung des Fondinsassen 8 erfolgen kann. Der obere H-Schenkel 411 deckt, wie bereits oben beschrieben, den Dachholmbereich 408 ab und der untere H-Schenkel 412 deckt so das Seil 407 ab, dass dadurch keine Beeinträchtigung des Fondinsassen 8 folgen kann. Der oder die zur Sicherheitseinrichtung 400 gehörigen Gasgeneratoren (hier nicht mit dargestellt) und die Abspann- und Rückhaltevorrichtung 406 können so gesteuert werden, dass bei einer Aktivierung der Sicherheitseinrichtung 400 zuerst der Abspannairbag 402 vor dem Fondinsassen positioniert wird und anschließend erst aufgeblasen wird, wobei aber auch die Möglichkeit besteht, Positionierung und Aufblasen des Abspannairbags 402 kontinuierlich nebeneinander her durchzuführen.

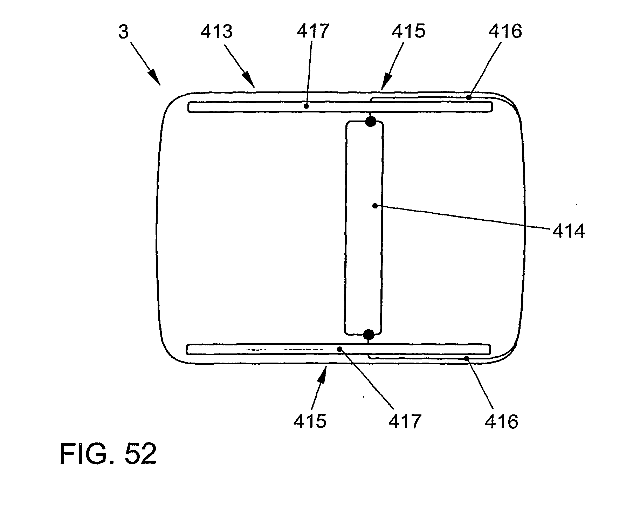

In Fig. 52 ist eine schematische Draufsicht auf das Kraftfahrzeug 3 dargestellt, wobei eine weitere Ausführungsform einer nicht unter die beanspruchte Erfindung fallenden Sicherheitseinrichtung 413 schematisch eingezeichnet ist. Die Sicherheitseinrichtung 413 ist hierbei im aktivierten Zustand gezeichnet. Dabei ist ein Abspannairbag 414 in Fahrzeugquerrichtung gesehen über die gesamte Fahrzeugbreite vor einem hier nicht mit dargestellten Fondinsassen angeordnet, wobei an beiden den Fahrzeugseiten 415 zugeordneten Endbereichen des Abspannairbags 414 Seile 416 als Abspann- und Rückhaltemittel angeordnet sind, die in Fahrtrichtung gesehen nach hinten zu einer hier nicht mit dargestellten Abspann- und Rückhaltevorrichtung, wie beispielsweise einem Rotationsstrammer, geführt sind. Entlang den Fahrzeugseiten 415 ist jeweils ein Side-Curtain 417 angeordnet, der im aktivierten Zustand als Seitenairbag eingesetzt ist. Die Seile 416 sind dabei im nicht aktivierten Zustand der Sicherheitseinrichtung 413 jeweils in Fahrzeugquerrichtung gesehen außerhalb des jeweiligen Side-Curtains 417 entlang des Dachrahmens verlegt. Zur Anbindung der Seile 416 an den Abspannairbag 414 sind diese unter dem Side-Curtain 417 herumgelegt. Bei Aktivierung der Sicherheitseinrichtung 413 werden zusammen mit dem Abspannairbag 414 die beiden Side-Curtains 417 aktiviert. Durch die Side-Curtains 417 wird die Verkleidung des Dachrahmens aufgedrückt (hier nicht mit dargestellt) und das Seil 416 wird nach unten gedrückt. Dadurch wird zugleich der Abspannairbag 414 ebenfalls nach unten geführt. Die Side-Curtains 417 befinden sich immer zwischen den Seilen 416 und dem Fondinsassen, so dass das Seil 416 keine Gefährdung für den Fondinsassen darstellt. Grundsätzlich könnte aber trotzdem das Seil 416 mit einem Airbagschlauch ummantelt werden.

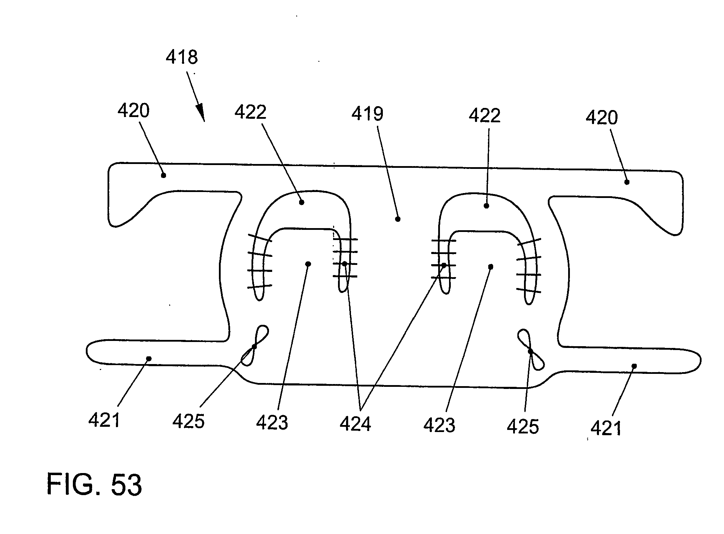

In Fig. 53 ist schematisch ein Zuschnitt eines erfindungsgemäßen Abspannairbags 418 dargestellt. Der Abspannairbag 418 ist dabei im wesentlichen H-förmig ausgebildet, wobei ein Mittelteil 419 als H-Steg einen großflächigen Abstützbereich des Abspannairbags 418 ausbildet. Von den Mittelteilecken ausgehend ragen Schlauchbereiche als H-Schenkel 420 und 421 ab, wobei die oberen H-Schenkel 420 eine Doppelfunktion aufweisen, nämlich einerseits zum Wegdrücken eines Dach- und C-Säulen-Verkleidungsteiles und somit zum Ausbilden einer Airbagaustrittöffnung im Bereich des Verkleidungsteiles und andererseits als Aufprallschutz wenigstens im Bereich eines Dachholmes. Die unteren H-Schenkel 421 sind mit einem Abspann- und Rückhaltemittel (hier nicht mit dargestellt) gekoppelt, so dass die H-Schenkel 421 eine Abschirmung der Abspann- und Rückhaltemittel darstellen zum Schutz des Fahrzeuginsassen.

Im nicht aktivierten Zustand ist der Abspannairbag 418 beispielsweise in einem Dachhimmelbereich angeordnet, wobei das Mittelteil 419 in Fahrzeugquerrichtung gesehen vor dem Fahrzeuginsassen zusammengefaltet verläuft. Die H-Schenkel 420 und 421 sind im Bereich der jeweils seitlich angeordneten Dachholme nach hinten geführt. Bei einer Aktivierung des Abspannairbags 418 wird das Mittelteil 419 mit den H-Schenkeln 421 nach unten in Richtung Fahrzeuginnenraum vor dem Fahrzeuginsassen positioniert und aufgeblasen, wobei durch die Abspann- und Rückhaltemittel, die mit den H-Schenkeln 421 gekoppelt sind, eine Abspannung und Rückhaltung des Abspannairbags 418 erfolgt. Die oberen H-Schenkel 420 sind im aktivierten Zustand vor den Dachholmen aufgeblasen, so dass dadurch ein Schutz für den Fahrzeuginsassen erhalten wird. Bei der in den Fig. 49 bis 51 beschriebenen Sicherheitseinrichtung 400 könnte ein derartig aufgebauter Abspannairbag 418 eingesetzt werden.

Im Mittelteil 419 des Abspannairbags 418 sind zudem zwei Fenster 422 ausgebildet, in die ein Fensterairbag 423 als Bestandteil des Mittelteils 419 einragt. Der Fensterairbag 423 ist bereichsweise mittels einer Reißnaht 424 mit dem Mittelteil 419 verbunden, wobei bei einem Aufprall eines Fahrzeuginsassen auf den Fensterairbag 423 die Reißnaht 424 kraftbegrenzt zerstört wird, so dass ein gesteuertes Durchtauchen des Fahrzeuginsassen durch das Fenster 422 erfolgen kann. Im Übergangsbereich zwischen dem Mittelteil 419 und den unteren H-Schenkeln 421 ist eine Naht 425 angebracht, mittels der eine bestimmte Gasführung innerhalb des Abspannairbags 418 erhalten werden kann. Ein zugeordneter Gasgenerator kann beispielsweise im Bereich einer C-Säule oder im Kofferraum oder dergleichen angeordnet sein, wobei ein oberer H-Schenkel 420 zugleich die Funktion einer Gaslanze übernehmen kann, so dass damit eine Strömungsverbindung zwischen dem Gasgenerator und dem Abspannairbag 418 hergestellt ist.

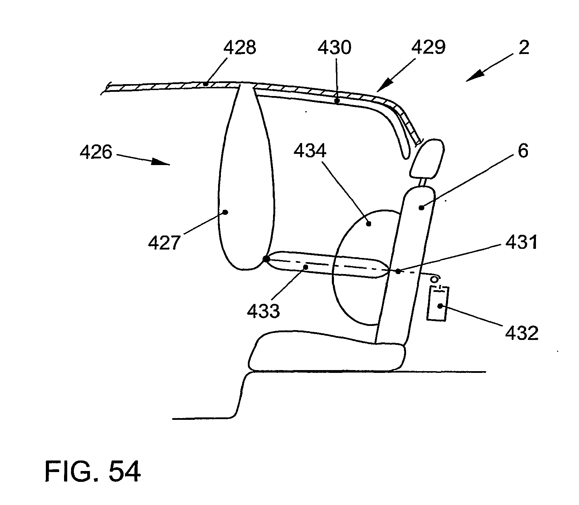

In Fig. 54 ist schematisch eine Seitenansicht des Fondbereichs 2 des Kraftfahrzeuges 3 mit einer nicht unter die beanspruchte Erfindung fallenden Sicherheitseinrichtung 426 im aktivierten Zustand dargestellt. Die Sicherheitseinrichtung 426 umfasst einen Abspannairbag 427, der in einem Dachhimmelbereich 428 angeordnet ist. Im nicht aktivierten Zustand ist der Abspannairbag 427 im Dachhimmelbereich 428 zusammengefaltet angeordnet, wobei bei einer Aktivierung der Sicherheitseinrichtung 426 der Abspannairbag 427 nach unten vor dem hier nicht mit dargestellten Fondinsassen im Fahrzeuginnenraum entfaltet wird. Beidseitig entlang eines Dachholmbereiches 429 ist ein Airbagschlauch 430 als Bestandteil der Sicherheitseinrichtung 426 vorgesehen, mit dem bei einer Aktivierung der Sicherheitseinrichtung 426 insbesondere die Dachhimmelverkleidung zur Ausbildung einer Airbagaustrittöffnung aufgerissen werden kann. Der Abspannairbag 427 ist mit einem Seil 431 als Abspann- und Rückhaltemittel mit einer Einzugsvorrichtung 432 als Abspann- und Rückhaltevorrichtung verbunden. Ein Airbagschlauch 433 ummantelt das Seil 431, so dass eine Beeinträchtigung des Fondinsassen bei einer Aktivierung der Sicherheitseinrichtung 426 durch das Seil 431 ausgeschlossen ist. Das Seil 431 ist ebenfalls jeweils im seitlichen Fahrzeugbereich beidseitig angeordnet. Zudem ist ein Thorax-Seitenairbag 434 als Bestandteil der Sicherheitseinrichtung 426 vorgesehen, der seitlichen im Lehnenteil 6 im nicht aktivierten Zustand verstaut ist. Bei einer Aktivierung der Sicherheitseinrichtung 426 wird durch den sich entfaltenden Thorax-Seitenairbag 434 die Sitznaht des Lehnenteils 6 geöffnet zur Freigabe einer Airbagaustrittöffnung. Das Seil 431 kann ebenfalls durch diese Airbagaustrittöffnung geführt sein, so dass durch das Aufreißen der Sitznaht durch den Thorax-Seitenairbag 434 eine funktionssichere Führung des Seile 431 gegeben ist. Zudem können mit dem sich entfaltenden Thorax-Seitenairbag 434 im Bereich der Tür oder des Fensters befindliche Körperteile, wie z. B. ein Arm des Fondinsassen weggedrückt werden, so dass ein Kontakt mit dem Seil 431 ausgeschlossen ist. Neben dem Airbagschlauch 433 bildet auch der Thorax-Seitenairbag 434 eine Abdeckung des Seiles 431, so dass auch durch den Thorax-Seitenairbag 434 ein Kontakt des Fondinsassen mit dem Seil 431 vermieden ist.

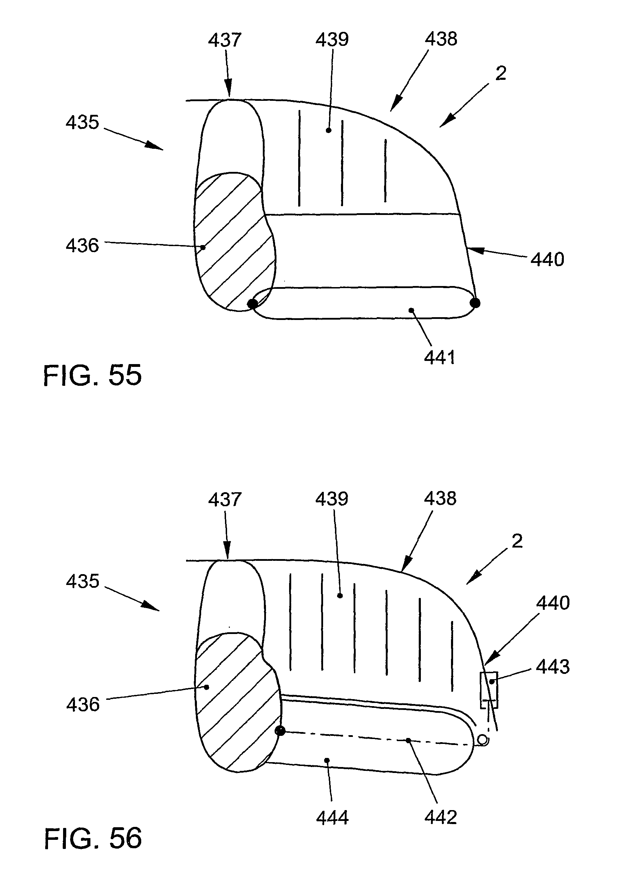

In Fig. 55 ist schematisch eine Seitenansicht des Fondbereiches 2 des Kraftfahrzeuges 3 mit einer weiteren Ausführungsform einer nicht zur Erfindung gehörigen Sicherheitseinrichtung 435 dargestellt. Auch hier umfasst die Sicherheitseinrichtung 435 einen Abspannairbag 436, der im hier dargestellten aktivierten Zustand von einem Dachhimmelbereich 437 nach unten entfaltet ist. Zudem ist im Bereich eines Dachholmes 438 ein Dachrahmenairbag 439 als Bestandteil der Sicherheitseinrichtung 435 angeordnet, der in der Art eines Curtains sich vom Dachholmbereich 438 ausgehend im seitlichen Fahrzeugbereich nach unten entfaltet. Somit ist mit dem Dachrahmenairbag 439 auch eine C-Säule 440 des Kraftfahrzeuges wenigstens bereichsweise abgedeckt. Als Abspann- und Rückhaltemittel ist ein sich in der Länge verkürzender Airbagschlauch 441 vorgesehen, der einerseits mit dem Abspannairbag 436 und andererseits fahrzeugfest mit der C-Säule 440 verbunden ist. Somit ist bei einer Aktivierung der Sicherheitseinrichtung 435 durch den sich verkürzenden Airbagschlauch 441 der vorzugsweise beidseitig im den Fahrzeugseiten zugeordneten Randbereich des Abspannairbags 436 angeordnet ist, ein funktionssicheres Abspannen und Rückhalten des Abspannairbags 436 vor dem hier nicht mit dargestellten Fondinsassen gegeben. Durch den Dachrahmenairbag 439 ist zusätzlich ein Seitenschutz für den Fondinsassen gewährleistet.

In Fig. 56 ist eine nicht zur Erfindung gehörige, alternative Ausführung der Sicherheitseinrichtung 435 in einer schematischen Seitenansicht gezeigt. Gleiche Bauteile sind mit gleichen Bezugszeichen versehen. Im Unterschied zu der in Fig. 55 dargestellten Ausführungsvariante ist das Abspann- und Rückhaltemittel in Fig. 56 durch ein Seil 442 gebildet, das mit einer Einzugsvorrichtung 443, die im Bereich der C-Säule 440 angeordnet ist, gekoppelt ist. Der Dachrahmenairbag 439 ist bei der in Fig. 56 dargestellten Ausführungsvariante der Sicherheitseinrichtung 435 noch weiter nach unten in Richtung Seil 442 ausgebildet. Das Seil 442 ist mit einem Airbagschlauch 444 ummantelt, wobei der Airbagschlauch 444 zugleich als Thoraxairbag eingesetzt werden kann.

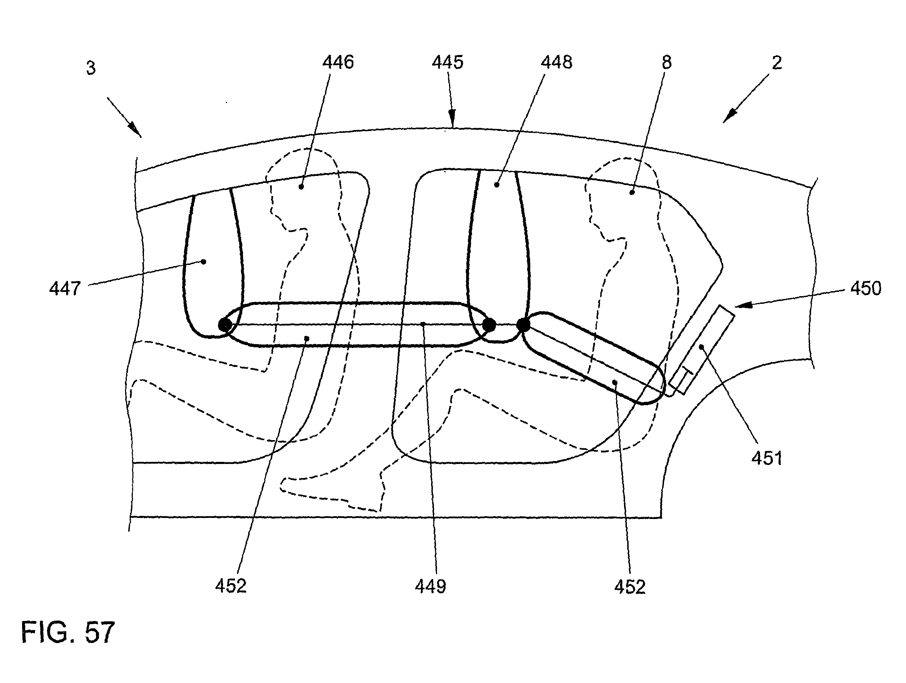

In Fig. 57 ist schematisch eine Seitenansicht einer nicht zur Erfindung gehörigen Sicherheitseinrichtung 445 in dem Kraftfahrzeug 3 eingezeichnet. Vor dem Fondinsassen 8 ist ein Frontinsasse 446 eingezeichnet, wobei die beiden Fahrzeuginsassen 8 und 446 aus Übersichtlichkeitsgründen nur strichliert dargestellt sind. Die Sicherheitseinrichtung 445 umfasst hierbei zwei Abspannairbags 447 und 448, so dass jeder Sitzreihe ein Abspannairbag 447 bzw. 448 zugeordnet ist. Bei der hier gewählten beispielhaften Ausführungsform der Sicherheitseinrichtung 445 ist der Abspannairbag 447 dem Frontinsassen 446 und der Abspannairbag 448 dem Fondinsassen 8 zugeordnet. Die beiden Abspannairbags 447 und 448 sind untereinander mit einem Seil 449, das jeweils beidseitig den Fahrzeugseiten zugeordnet angeordnet ist, verbunden. Im Bereich einer C-Säule 450 des Kraftfahrzeuges 3 ist eine Strammereinrichtung 451 angeordnet, mit der das Seil 449 bei einer Aktivierung der Sicherheitseinrichtung 445 eingezogen werden kann. Dadurch werden Abspannairbags 447 und 448 vor den jeweils zugeordneten Insassen 446 und 8 abgespannt und rückgehalten, so dass ein optimaler Insassenschutz gewährleistet ist. Das Seil 449 ist dabei von der Strammereinrichtung 451 ausgehend mit jedem Abspannairbag 447 und 448 gekoppelt. Grundsätzlich kann das Seil 449 auch durch ein Band und/oder einen Gurt und/oder einen sich beim Aufblasen in der Länge verkürzenden Airbagschlauch gebildet sein. Zum Schutz der Insassen 446 und 8 ist bei der Ausführung als Seil 449, Band oder Gurt als Abspannmittel ein Airbagschlauch 452 als Ummantelung um das Seil 449 vorgesehen, so dass bei einem etwaigen Kontakt zwischen Insassen 446 oder 8 mit dem Seil 449 durch den Airbagschlauch 452 ein Schutz gegeben ist.

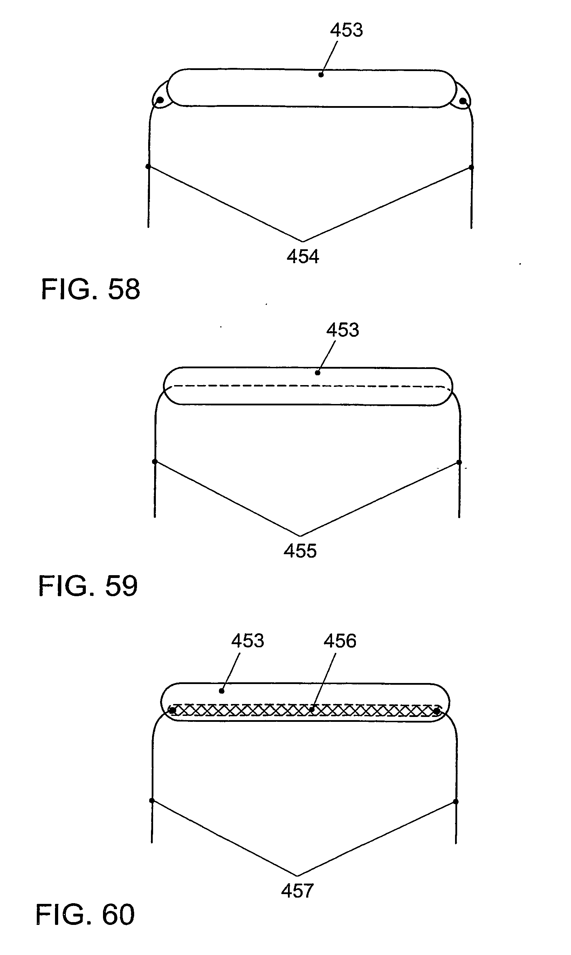

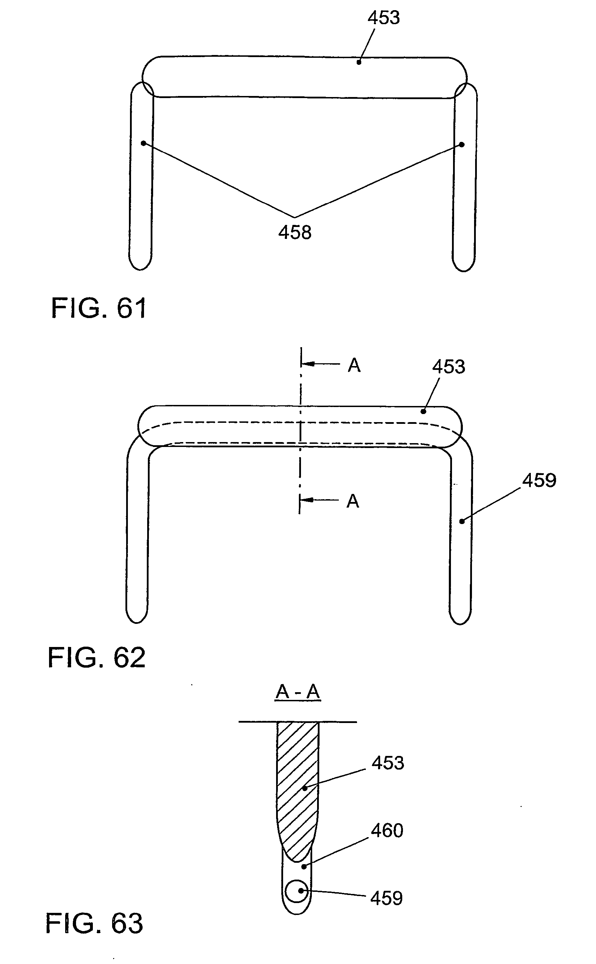

In den Fig. 58 bis 62 ist jeweils in einer schematischen Draufsicht ein nicht zur Erfindung gehöriger Abspannairbag 453 dargestellt mit jeweils unterschiedlichen Ausführungsvarianten von Abspann- und Rückhaltemitteln. In Fig. 58 ist jeweils im den Fahrzeugseiten zugeordneten Randbereichen des Abspannairbags 453, der in Fahrzeugquerrichtung gesehen sich über die gesamte Fahrzeugbreite erstreckt, jeweils ein Seil 454 vorgesehen, das in Fahrtrichtung gesehen nach hinten in Richtung Fahrzeuginsassenposition zu einer hier nicht mit dargestellten Abspann- und Rückhaltevorrichtung geführt ist. Grundsätzlich kann auch ein durchgehendes Seil 455, wie dies in Fig. 59 schematisch dargestellt ist, als Abspann- und Rückhaltemittel am Abspannairbag 453 angeordnet sein. In der in Fig. 60 dargestellten Variante des Abspann- und Rückhaltemittels ist dieses im Bereich des Abspannairbags 453 durch ein Gurtband 456 gebildet, wobei jeweils von den Randbereichen des Abspannairbags 453 ein Seil 457 nach hinten in Richtung Fahrzeuginsassenposition weggeführt ist. Bei allen drei Ausführungsvarianten von Seilen 454, 455 oder 457 könnten diese wenigstens teilweise mit einem Airbagschlauch ummantelt sein, so dass dadurch ein Schutz bei einem etwaigen Kontakt mit dem Fahrzeuginsassen gegeben ist. Grundsätzlich kann auch ein separat angeordneter Airbag, wie z. B. ein Side-Curtain so angeordnet sein, dass dieser als Schutz bei einem etwaigen Kontakt des Fahrzeuginsassen mit dem Seil 454, 455 oder 457 eingesetzt ist. Bei der in Fig. 61 dargestellten Ausführungsvariante der Abspann- und Rückhaltemittel des Abspannairbags 453 sind diese durch sich verkürzende Airbagschläuche 458 ausgeführt. Bei der in Fig. 62 dargestellten Ausführungsform ist ein durchgehender Airbagschlauch 459 ausgebildet, der durch eine am Abspannairbag 453 ausgebildeten Lasche 460 geführt ist. Die Lasche 460 ist im aktivierten Zustand des Abspannairbags 453 in Fahrzeughochrichtung gesehen unten an diesen angegliedert, wie dies aus der schematischen Schnittdarstellung von Fig. 63, die einen Schnitt entlang der Schnittlinie A - A von Fig. 62 zeigt, zu erkennen ist.

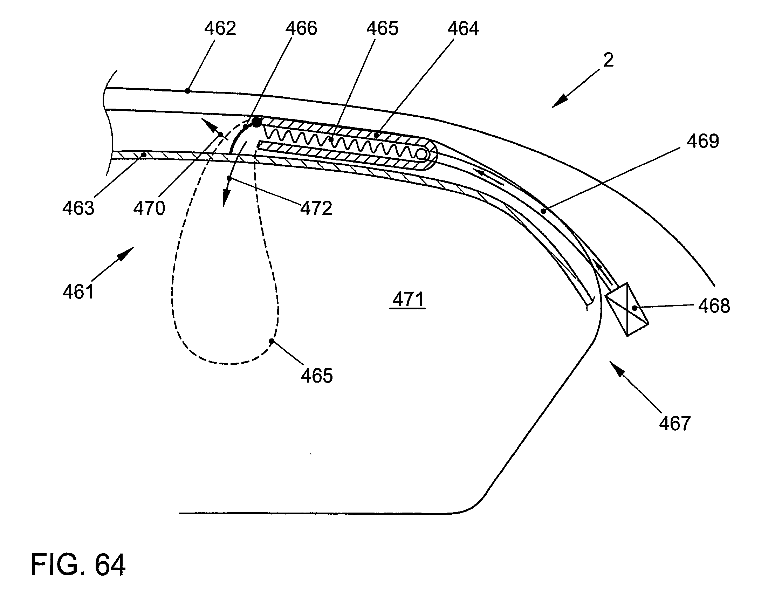

In Fig. 64 ist schematisch in einer Seitenansicht eine nicht zur Erfindung gehörige Sicherheitseinrichtung 461 im Fondbereich 2 des Kraftfahrzeuges 3 dargestellt. Zwischen einem Fahrzeugdach 462 und einem Dachhimmel 463 ist ein im Querschnitt gesehen U-förmiges Airbaggehäuse 464, in dem ein Abspannairbag 465 im nicht aktivierten Zustand zusammengefaltet aufgenommen ist, aufgenommen. An der offenen U-Seite des Airbaggehäuses 464, die im montierten Zustand in Fahrtrichtung gesehen nach vorne weist, ist eine schwenkbare Abdeckung 466 angeordnet, mit der die durch die offene U-Seite gebildete Mündung des Airbaggehäuses 464 im nicht aktivierten Zustand verschlossen ist. Im Bereich einer C-Säule 467 ist ein Gasgenerator 468 angeordnet, der über einen Airbagschlauch 469 mit dem Abspannairbag 465 im Airbaggehäuse 464 strömungsverbunden ist. Der Airbagschlauch 469 wird dabei bei einer Aktivierung der Sicherheitseinrichtung 461 einerseits zum Befüllen des Abspannairbags 465 und andererseits zum Öffnen des Dachhimmels 463 für eine Ausbildung einer Airbagaustrittöffnung eingesetzt. Bei einer Aktivierung der Sicherheitseinrichtung 461 wird die Abdeckung 466 von der Mündung des Airbaggehäuses 464 weggeschwenkt (Pfeil 470), wodurch einerseits vorzugsweise entlang einer Sollaufreißlinie (hier nicht mit dargestellt) der Dachhimmel 463 zur Ausbildung einer Airbagaustrittöffnung aufgerissen wird und andererseits der Abspannairbag 465 in Richtung Fahrzeuginnenraum 471 nach unten (Pfeil 472) gelenkt wird. Dadurch ist eine schnelle Entfaltung des Abspannairbags 465 möglich. Durch die flache Ausführung des Airbaggehäuses 464 ist insgesamt gesehen ein flacher Dachhimmelaufbau möglich, so dass dadurch die Kopffreiheit im Fahrzeuginnenraum 471 nicht eingeschränkt wird.

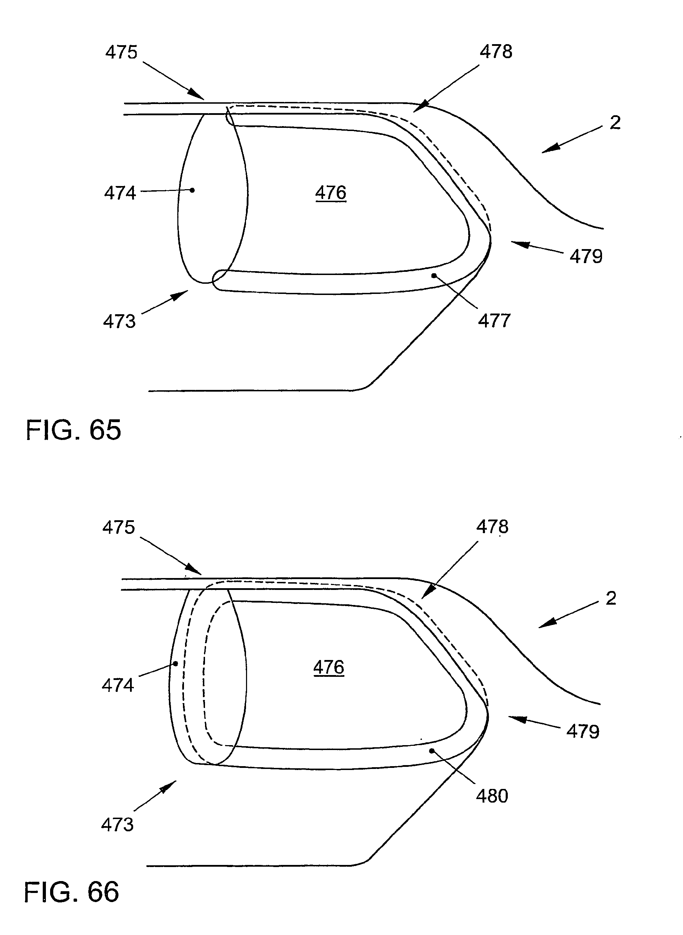

In Fig. 65 ist schematisch in einer Seitenansicht eine nicht zur Erfindung gehörige Sicherheitseinrichtung 473 im Fondbereich 2 des Kraftfahrzeuges 3 dargestellt. Dabei ist ein Abspannairbag 474, der im nicht aktivierten Zustand in einem Dachhimmelbereich 475 des Kraftfahrzeuges 3 angeordnet ist, als Bestandteil der Sicherheitseinrichtung 473 vorgesehen. Bei dem in Fig. 65 dargestellten aktivierten Zustand der Sicherheitseinrichtung 473 ist der Abspannairbag 474 vom Dachhimmelbereich 475 ausgehend nach unten in einen Fahrzeuginnenraum 476 aufgeblasen entfaltet, wobei als weiterer Bestandteil der Sicherheitseinrichtung 473 ein U-förmiger Airbagschlauch 477 vorgesehen ist, der in Fahrzeughochrichtung gesehen jeweils am oberen und unteren Bereich des Abspannairbags 474 mit seinen freien Enden angebunden ist. Vom oberen Bereich des Abspannairbags 474 ausgehend erstreckt sich der Airbagschlauch 474 entlang eines Dachholmbereiches 478, anschließend entlang eines C-Säulenbereiches 479 und wieder zurück zum Abspannairbag 474.

Bei der in Fig. 66 dargestellten, nicht zur Erfindung gehörigen Ausführungsvariante der Sicherheitseinrichtung 473 ist im Unterschied zu dem in Fig. 65 dargestellten Airbagschlauch 477 ein ringförmig geschlossener Airbagschlauch 480 vorgesehen, der in Fahrzeughochachsenrichtung gesehen vom oberen und unteren Bereich des Abspannairbags 474 ausgehend ringförmig nach hinten in Fahrzeuginsassen-Sitzposition geführt ist, wobei auch hier der Airbagschlauch 480 entlang des Dachholmbereiches 478 und des C-Säulenbereichs 479 geführt ist. Vom C-Säulenbereich 479 ist der Airbagschlauch 480 wieder zum Abspannairbag 474 geführt. Für die geschlossene Ringform erstreckt sich der Airbagschlauch 480 vom unteren zum oberen Bereich des Abspannairbags 474 durch diesen hindurch, was strichliert in Fig. 66 eingezeichnet ist. Sowohl der Airbagschlauch 477 von Fig. 65 als auch der Airbagschlauch 480 von Fig. 66 werden beim Aufblasen in der Länge verkürzt, so dass dadurch eine funktionssichere Abspannung und Rückhaltung des Abspannairbags 474 gewährleistet ist.

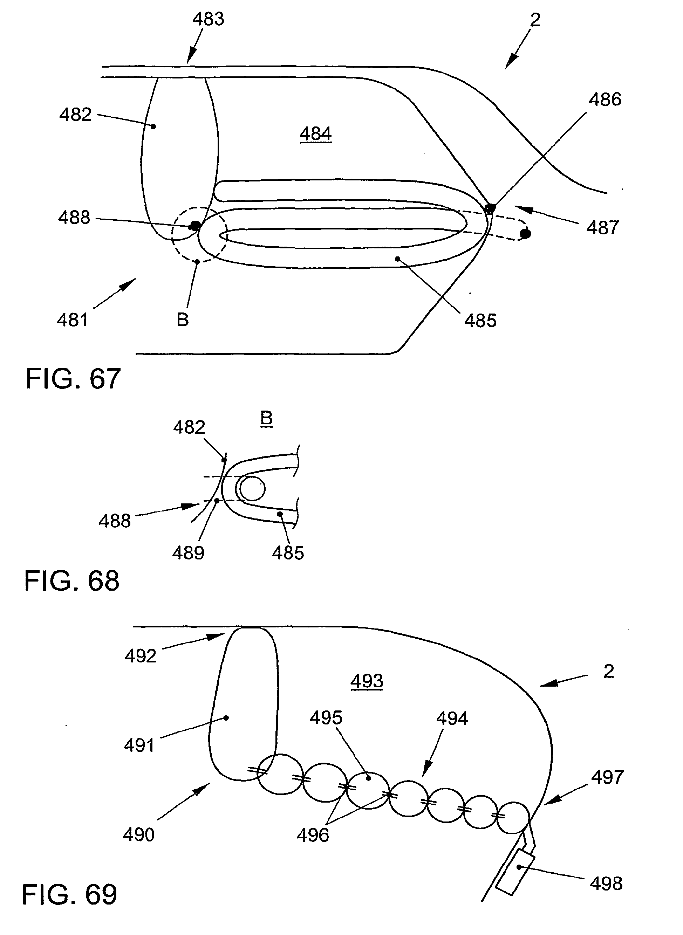

In einer schematischen Seitenansicht ist in Fig. 67 eine weitere Ausführungsform einer nicht zur Erfindung gehörigen Sicherheitseinrichtung 481 im Fondbereich 2 des Kraftfahrzeuges 3 dargestellt. Dabei ist ein Abspannairbag 482, der im aktivierten Zustand von einem Dachhimmelbereich 483 nach unten in einen Fahrzeuginnenraum 484 hinein vor einem hier nicht mit dargestellten Fondinsassen aufgeblasen ist, mit einem sich beim Aufblasen in der Länge verkürzenden Airbagschlauch 485 gekoppelt. Der Airbagschlauch 485 ist am Abspannairbag 482 fest angebunden und verläuft von dort in Fahrtrichtung gesehen nach hinten zu einem ersten Anbindungspunkt 486 im Bereich einer C-Säule 487, von dort wieder nach vorne zum Abspannairbag 482 zu einem zweiten Anbindungspunkt 488 und von diesem zurück zur C-Säule 487 für eine feste Anbindung an dieser. Insgesamt gesehen ist somit ein durchgehender Airbagschlauch 485 ausgebildet, der mäanderförmig zwischen dem Abspannairbag 482 und der C-Säule 487 angeordnet ist. Sowohl der erste Anbindungspunkt 486 als auch der zweite Anbindungspunkt 488 können als feste Anbindungspunkte für den Airbagschlauch 485 ausgebildet sein oder aber auch mit einer Rutschbefestigung versehen sein.

In Fig. 68 ist schematisch eine Vergrößerung der Einzelheit B von Fig. 67 dargestellt, die beispielhaft eine Rutschbefestigung des zweiten Anbindungspunktes 488 darstellt. Dabei ist an einer Art Öse 489, die am Abspannairbag 482 angeordnet ist, der Airbagschlauch 485 hindurchgeführt, so dass eine Verlagerung des Airbagschlauches 485 durch die Öse 489 hindurch während des Aufblasvorgangs des Abspannairbags 482 und des Airbagschlauchs 485 erfolgen kann. Unabhängig ob der erste bzw. zweite Anbindungspunkt 486 bzw. 488 mit oder ohne Rutschbefestigung ausgeführt sind, ist eine funktionssichere Abspannung und Rückhaltung des Abspannairbags 482 durch den mäanderförmig verlegten Airbagschlauch 485 möglich.

In Fig. 69 ist eine schematische Seitenansicht einer nicht zur Erfindung gehörigen Sicherheitseinrichtung 490 im Fondbereich 2 des Kraftfahrzeuges 3 dargestellt. Ein Abspannairbag 491 ist im dargestellten aktivierten Zustand von einem Dachhimmelbereich 492 ausgehend in Richtung Fahrzeuginnenraum 493 vor einem hier nicht mit dargestellten Fondinsassen entfaltet. Als Abspann- und Rückhaltemittel ist ein Airbagschlauch 494 vorgesehen, der aus einer Vielzahl einzelner kleinvolumiger und miteinander strömungsverbundener Kammern 495 gebildet ist. Die Strömungsverbindung zwischen den einzelnen Kammer 495 ist durch Überströmöffnungen 496 ausgebildet. Der Airbagschlauch 494 ist einerseits am Abspannairbag 491 und andererseits im Bereich einer C-Säule 497 festgelegt, wobei im Bereich der C-Säule 497 ist ein Gasgenerator 498 vorgesehen, mit dem wenigstens der Airbagschlauch 494 aufgeblasen werden kann. Im nicht aktivierten Zustand sind die einzelnen Kammer 495 gestreckt ausgebildet, so dass bei einer Aktivierung der Sicherheitseinrichtung 490 aufgrund des Aufblasens der einzelnen Kammern 495 eine Verkürzung des Airbagschlauches 494 erhalten wird. Grundsätzlich kann zusätzlich zum Airbagschlauch 494 ein Seil (nicht mit dargestellt) angeordnet sein, das einerseits durch den Airbagschlauch 494 abgedeckt werden kann zum Schutze des Fondinsassen und andererseits kann durch das Seil eine zusätzliche Abspannung und Rückhaltung des Abspannairbags 491 erreicht werden.

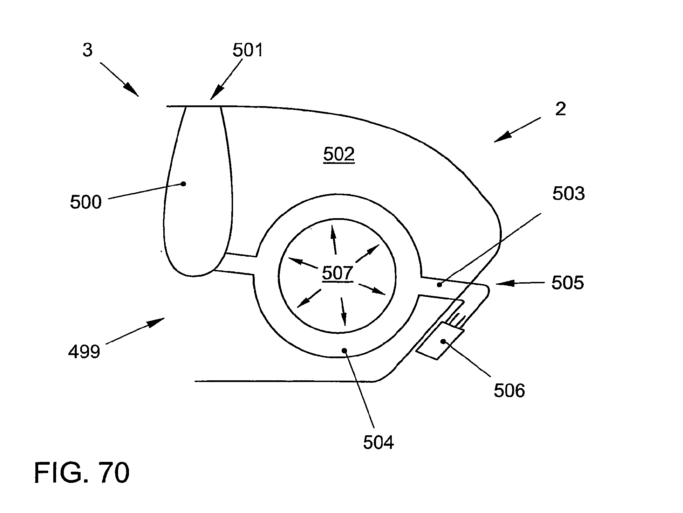

In Fig. 70 ist schematisch eine nicht zur Erfindung gehörige Sicherheitseinrichtung 499 in einer Seitenansicht im Fondbereich 2 eines Kraftfahrzeuges 3 dargestellt. Dabei ist als Bestandteil der Sicherheitseinrichtung 499 ein Abspannairbag 500 vorgesehen, der im dargestellten aktivierten Zustand von einem Dachhimmelbereich 501 ausgehend in den Fahrzeuginnenraum 502 hinein vor einem hier nicht mit dargestellten Fondinsassen aufgeblasen ist. Als Abspann- und Rückhaltemittel ist ein Airbagschlauch 503 vorgesehen, in den ein aufblasbares Ringteil 504 integriert ist. Der Airbagschlauch 503 ist einerseits am Abspannschlauch 500 und andererseits im Bereich einer C-Säule 505 am Kraftfahrzeug 3 festgelegt. Zudem ist im Bereich der C-Säule 505 ein Gasgenerator 506 angeordnet, der mit dem Airbagschlauch 503 strömungsverbunden ist. Bei einer Aktivierung der Sicherheitseinrichtung 499 wird der Airbagschlauch 503 vom Gasgenerator 506 mit Gas versorgt, wobei sich der Airbagschlauch 503 beim Aufblasen zusammenzieht. Durch das Aufblasen des Ringteils 504 wird eine zusätzliche Reduktion der Länge des Airbagschlauches 503 erreicht. In dem vom Ringbereich umschlossenen Innenhohlraum des Ringteils 504 kann gegebenenfalls ein Airbag 507 integriert sein, mit dem ein zusätzlicher Seitenschutz erreicht werden kann. Grundsätzlich ist das aufgeblasene Ringteil 504 alleine auch als Seitenschutz verwendbar. Durch ein weiteres Aufblasen des Airbags 507, insbesondere in Fahrzeughochrichtung, kann der Einzug noch verstärkt werden. Zudem könnten in Fahrzeughochrichtung Bänder vorgesehen sein, mit denen die Entfaltung des Airbags 507 und somit des Ringteils 504 in Fahrzeughochrichtung unterstützt wird, so dass dadurch ebenfalls eine Verstärkung des Einzugs und somit eine funktionssichere Abspannung des Abspannairbags 500 gewährleistet ist.

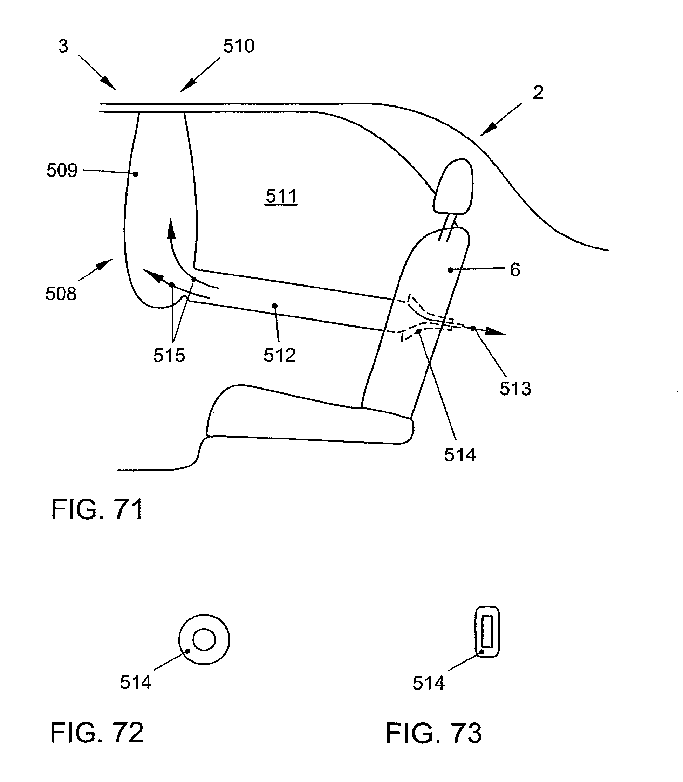

In Fig. 71 ist schematisch eine Seitenansicht einer nicht zur Erfindung gehörigen Sicherheitseinrichtung 508 im Fondbereich 2 eines Kraftfahrzeuges 3 dargestellt. In dem gezeigten aktivierten Zustand der Sicherheitseinrichtung 508 ist ein Abspannairbag 509 von einem Dachhimmelbereich 510 ausgehend in Fahrzeughochachsenrichtung gesehen nach unten in einen Fahrzeuginnenraum 511 hinein vor einem hier nicht mit dargestellten Fondinsassen aufgeblasen. Zur Abspannung und Rückhaltung des Abspannairbags 509 ist ein Airbagschlauch 512 mit dem Abspannairbag 509 strömungsverbunden. Der Airbagschlauch 512 kann dabei als ein sich beim Aufblasen in der Länge verkürzender Airbagschlauch ausgebildet sein. Bevorzugt ist auch hier jeweils in Fahrzeugquerrichtung gesehen im seitlichen Randbereich des Abspannairbags 509 den Fahrzeugseiten zugeordnet ein Airbagschlauch 512 angeordnet. Mittels einer hier nicht mit dargestellten Einzugseinrichtung kann der Airbagschlauch 512 in Fahrzeuglängsrichtung gesehen nach hinten für eine Abspannung des Abspannairbags 509 gezogen werden. Dies ist schematisch mit einem Pfeil 513 in Fig. 71 eingezeichnet. Dabei wird der Airbagschlauch 512 durch einen sich verjüngenden Einzugstrichter 514 gezogen, so dass dabei das sich im Airbagschlauch 512 befindliche Gas in den Abspannairbag 509 gedrückt wird. Dies ist schematisch mit den Pfeilen 515 in Fig. 71 eingezeichnet. Der Einzugstrichter 514 kann dabei, wie in Fig. 71 dargestellt am Lehnenteil 6 der Rücksitzbank 4 angeordnet sein, wobei aber auch beispielsweise eine Anordnung des Einzugstrichters 514 im Bereich einer C-Säule oder im Kofferraum des Kraftfahrzeuges 3 denkbar ist. Je nach zur Verfügung stehenden Bauraum am Anbringungsort des Einzugstrichters 514 kann dieser einen runden oder eckigen Querschnitt aufweisen. Dies ist jeweils beispielhaft in den Fig. 72 und 73 dargestellt, wobei die gewählte Blickrichtung auf den Einzugstrichter 514 der Zugrichtung durch die Einzugsrichtung 514 entspricht.

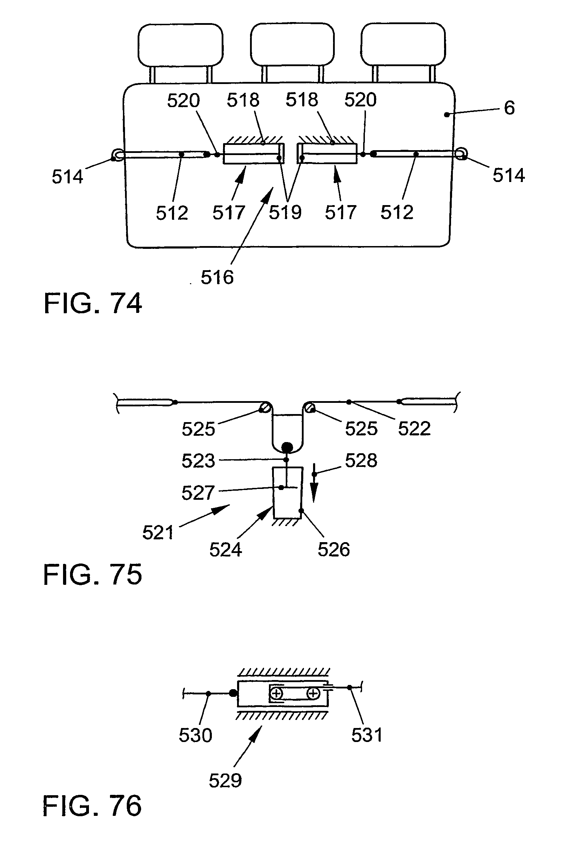

In den Fig. 74 bis 76 sind verschiedene Ausführungsformen für eine Einzugseinrichtung für die nicht zur Erfindung gehörige Sicherheitseinrichtung 508 mit Einzugstrichtern 514 dargestellt. In Fig. 74 ist eine Rückansicht des Lehnenteils 6 der Rücksitzbank 4 gezeichnet, wobei jeweils im linken und rechten Randbereich des Lehnenteils 6 der Einzugstrichter 514 angeordnet ist. Durch diesen hindurch ist jeweils der Airbagschlauch 512 zu einer auf der Rückseite des Lehnenteils 6 angeordneten Straffereinrichtung 516 als Einzugsvorrichtung gezogen. Die Straffereinrichtung 516 umfasst dabei zwei Zylinder-Kolben-Einheiten 517, deren Zylinder 518 jeweils ortsfest am Lehnenteil 6 angeordnet ist. Ein im Zylinder 518 verschieblich aufgenommener Kolben 519 ist über eine aus dem Zylinder 518 herausgeführte Kolbenstange 520 jeweils mit dem Airbagschlauch 512 vorzugsweise mit einem Seil gekoppelt. Bei einer Verlagerung des Kolbens 519 im Zylinder 518 jeweils zur Mitte des Lehnenteils 6 hin wird der Airbagschlauch 512 durch den Einzugstrichter 514 gezogen und dabei entleert, wobei das Gas in den Abspannairbag 509 übergeführt wird. Die Zylinder-Kolben-Einheiten 517 können auch nach dem Flaschenzugprinzip arbeiten. Insgesamt kann die gesamte Straffereinrichtung so am Lehnenteil 6 integriert werden, dass beispielsweise die Straffereinrichtung 516 durch einen Lehnenteilbezug verdeckt angeordnet ist.

In Fig. 75 ist schematisch eine alternative Ausführungsform einer nicht zur Erfindung gehörigen Straffereinrichtung 521 dargestellt. Hierbei sind nur die beiden Endbereiche des Airbagschlauchs 512 gezeichnet, wobei diese jeweils über ein einziges Seil 522 mit einer Kolbenstange 523 einer Zylinder-Kolben-Einheit 524 gekoppelt sind. Das Seil 522 wird dabei über Umlenkungen 525 zur einzigen Zylinder-Kolben-Einheit 524 geführt. Die Kolbenstange 523 ist mit einem im Zylinder 526 verschiebbar aufgenommenen Kolben 527 gekoppelt, so dass bei einer Verschiebung des Kolbens 527 im Zylinder 526 in Pfeilrichtung eines Pfeiles 528 das Seil 522 über die Umlenkungen 525 eingezogen wird, wodurch die beiden am Seil 522 angebundenen Airbagschläuche 512 durch die hier nicht mit dargestellten Einzugstrichter 514 gezogen werden. Dadurch ist eine funktionssichere Abspannung des zugeordneten Abspannairbags 509 möglich.

In Fig. 76 ist eine weitere alternative Ausführungsform einer nicht zur Erfindung gehörigen Straffereinrichtung 529 schematisch dargestellt. An den beiden Seilen 530 und 531 sind die beiden Airbagschläuche, die hier nicht mit dargestellt sind, angebunden. Die Seile 530 und 531 sind mit der nach dem Flaschenzugprinzip arbeitenden Straffereinrichtung 529 so verbunden, dass damit ein Einzug der Seile 530 und 531 und somit der daran angekoppelten Airbagschläuche 512 möglich ist. Somit ist auch mit der Straffereinrichtung 529 ein funktionssicheres Einziehen der Airbagschläuche 512 und damit ein Abspannen des Abspannairbags 509 möglich.

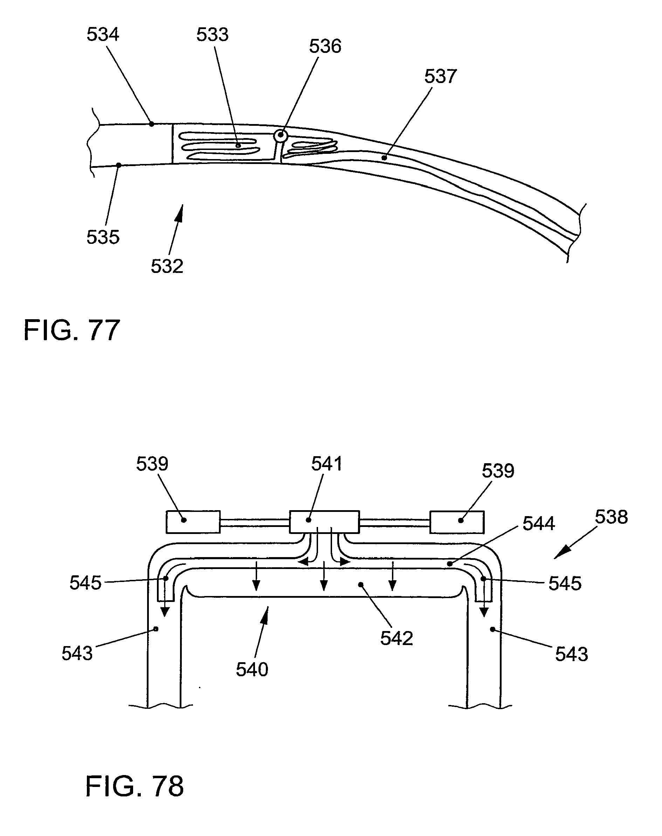

In Fig. 77 ist schematisch eine Seitenansicht einer nicht zur Erfindung gehörigen Sicherheitseinrichtung 532 im Fondbereich 2 des Kraftfahrzeuges 3 dargestellt. Als Bestandteil der Sicherheitseinrichtung 532 ist ein Abspannairbag 533 vorgesehen, der im hier dargestellten nicht aktivierten Zustand zwischen einem Fahrzeugdach 534 und einem Dachhimmel 535 angeordnet ist. Der Abspannairbag 533 ist mit einer Gaslanze 536, die mit einem hier nicht mit dargestellten Gasgenerator strömungsverbunden ist, gekoppelt, wobei zudem ein Airbagschlauch 537 mit der Gaslanze 536 gekoppelt ist. Im aktivierten Zustand der Sicherheitseinrichtung 532 ist der Airbagschlauch 537 zur Abspannung des Abspannairbags 533 vorgesehen. Die Sicherheitseinrichtung 532 ist dabei so aufgebaut, dass zu Beginn der Aktivierung zuerst der Airbagschlauch 537 befüllt wird und anschließend erst der Abspannairbag 533. Damit kann beispielsweise mit dem Airbagschlauch 537 der Dachhimmel 535 so aufgerissen werden, dass eine entsprechende Airbagaustrittöffnung entsteht.

In Fig. 78 ist schematisch eine Draufsicht auf eine nicht zur Erfindung gehörige Sicherheitseinrichtung 538 dargestellt. Zwei Gasgeneratoren 539 sind dabei in Fahrtrichtung vor einer Abspannairbag-Verstauposition 540 angeordnet. Bei einer Aktivierung der Sicherheitseinrichtung 538 wird Gas von den Gasgeneratoren 539 über einen Verteiler 541 entgegen der Fahrtrichtung in einen in der Abspannairbag-Verstauposition befindlichen Abspannairbag 542 eingeblasen werden. Zudem sind in den beiden Seitenbereichen des Kraftfahrzeuges in Fahrzeugquerrichtung gesehen jeweils neben der Abspannairbag-Verstauposition 540 jeweils ein Airbagschlauch 543 angeordnet, die ebenfalls über den Verteiler 541 mit Gas versorgt werden können. Die Sicherheitseinrichtung 538 kann dabei so ausgelegt sein, dass zuerst die beiden Airbagschläuche 543 mit Gas befüllt werden und anschließend erst der Abspannairbag 542. Somit können die Airbagschläuche 543 beispielsweise eine entsprechend angeordnete Dachhimmelverkleidung aufdrücken und dadurch eine Airbagaustrittöffnung für den Abspannairbag 542 schaffen. Die eingesetzten Gasgeneratoren 539 können dabei durch Stufengeneratoren ausgeführt sein. Vom Verteiler 541 kann das Gas bei einer Aktivierung der Sicherheitseinrichtung 538 über eine Lanze 544 zum Abspannairbag 542 und zu den Airbagschläuchen 543 verteilt werden, was schematisch mit Pfeilen 545 in Fig. 78 eingezeichnet ist.

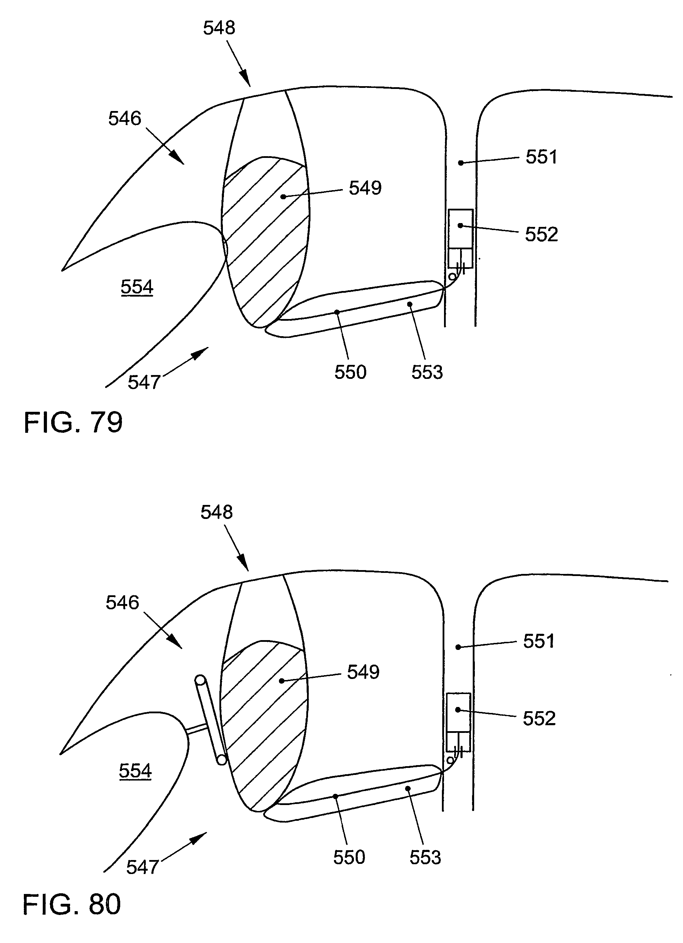

In den Fig. 79 und 80 ist jeweils eine nicht zur Erfindung gehörige Sicherheitseinrichtung 546 schematisch in einer Seitenansicht dargestellt, die in einem Frontbereich 547 des Kraftfahrzeuges 3 angeordnet ist. Dabei ist in Fig. 79 ein Beifahrerbereich und in Fig. 80 ein Fahrerbereich dargestellt. Ein in einem Dachhimmelbereich 548 angeordneter Abspannairbag 549 ist im hier dargestellten aktivierten Zustand der Sicherheitseinrichtung 546 jeweils vor einem hier nicht mit dargestellten Frontinsassen aufgeblasen, so dass dadurch ein Schutz für den Frontinsassen insbesondere bei einem Frontalaufprall gegeben ist. Zur Abspannung und Rückhaltung des Abspannairbags 549 ist ein Seil 550 vorgesehen, das einerseits mit dem Abspannairbag 549 und andererseits mit einer an einer B-Säule 551 angeordneten Einzugsvorrichtung 552 verbunden ist. Das Seil 550 ist mit einem Airbagschlauch 553 ummantelt, so dass bei einem etwaigen Kontakt des Frontinsassen mit dem Seil 550 ein Schutz durch den Airbagschlauch 553 gegeben ist. Zudem kann der Airbagschlauch 553 als ein sich beim Aufblasen verkürzender Airbagschlauch ausgebildet sein, so dass dadurch die Abspannung des Abspannairbags 549 verbessert werden kann. Der Abspannairbag 549 ist im aufgeblasenen Zustand zwischen dem Frontinsassen und einer Instrumententafel 554 angeordnet.

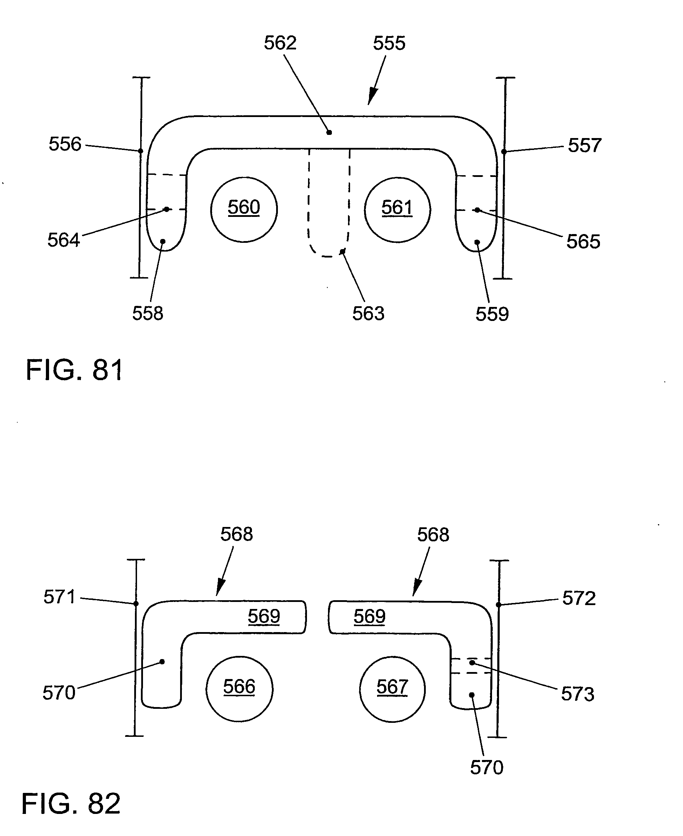

In der Fig. 81 ist eine weitere nicht zur Erfindung gehörige Ausführungsform gezeigt, bei der der Airbag 555 im aktivierten und aufgeblasenen Zustand eine U-Form aufweist. Ein derartiger U-förmiger Airbag 555 kann sowohl im Fond als auch im Frontbereich eingesetzt werden. Die Positionier- und/oder Abspann- und/oder Rückhaltevorrichtung wird hier durch die als Seitenairbag den Fahrzeugseitenbereichen 556, 557 zugeordneten U-Schenkel 558 und 559 gebildet. Der eigentliche Abstützairbag für ein Aufprall der Insassen 560, 561 wird dabei durch die U-Basis 562 gebildet. Gegebenenfalls kann zwischen den beiden Insassen 560 und 561 auch noch ein weiterer Airbagteil als Interaktionsairbag 563 vorgesehen sein, was in der Fig. 81 lediglich strichliert eingezeichnet ist. In den U-Schenkeln 558 und 559 können dabei Sicht-Ausnehmungen 564, 565 ausgebildet sein, was in der Fig. 81 ebenfalls lediglich strichliert dargestellt ist. Ebenfalls können im Bereich der U-Basis 562 auch die zuvor erwähnten Kopffenster ausgebildet sein, was aber hier nicht mehr mit dargestellt ist.

In der Fig. 82 ist eine zur Fig. 81 alternative und ebenfalls nicht zur Erfindung gehörige Ausführungsform gezeigt, bei der für jede Insassensitzposition, die hier durch die Fahrzeuginsassen 566 und 567 schematisch gekennzeichnet ist, jeweils ein L-förmiger Airbag 568 vorgesehen ist, dessen erster L-Schenkel 569 im Bereich vor den Insassen 566 und 567 den eigentlichen Abstützairbag ausbildet. Ein zweiter L-Schenkel 570 ist hier als Seitenairbag den Fahrzeugseitenbereichen 571 und 572 zugeordnet und bildet dabei gleichzeitig die Positionier- und/oder Abspann- und/oder Rückhaltevorrichtung aus. In der in der Fig. 82 dargestellten Draufsicht bilden die beiden L-förmigen Airbags 568 insgesamt eine U-Form aus.

Auch hier können wieder die Kopffenster bzw. die Sichtfenster in den Airbags 568 integriert sein. Aus Übersichtlichkeitsgründen ist hier lediglich im rechten der Airbags 568 im zweiten L-Schenkel 570 eine Sicht-Ausnehmung 573 als Sichtfenster beispielhaft dargestellt.

Bei beiden Ausführungsformen der Fig. 81 und 82 erfolgt somit die Positionierung und Abspannung und Rückhaltung der eigentlichen Abstützairbags, die in der Fig. 81 durch die U-Basis 562 und in der Fig. 82 durch den ersten L-Schenkel 569 gebildet sind, mittels der hier beispielhaft als Seitenairbags ausgebildeten und den Fahrzeugseitenbereichen 556, 557 sowie 571, 572 zugeordneten U-Schenkel 558, 559 bzw. dem zweiten L-Schenkel 570. Mittels der Rückhaltung und Abspannung durch die Schenkelbereiche der Airbags wird dabei hier ebenso wie in allen vorangegangenen Ausführungsbeispielen erreicht, dass sich der eigentliche Abstützairbag nicht mehr mit der vollen Belastungskraft auf ein davor liegendes Bauteil abstützt, wobei gegebenenfalls das Abstützen sogar ganz vermieden werden kann, was jedoch von der Dimensionierung und von den jeweils fahrzeugspezifisch vorhandenen Einbaugegebenheiten abhängt.

## Patentansprüche

1. Fahrzeug, insbesondere Kraftfahrzeug, mit einer Sicherheitseinrichtung,
mit wenigstens einem Airbag, der im nicht aktivierten Grundzustand zusammengefaltet hinter einem Innenverkleidungsteil (404) angeordnet ist und der bei einer Aktivierung der Sicherheitseinrichtung (400) im Fahrzeuginnenraum (401) vor wenigstens einer Insassenposition aufgeblasen ist, und
mit wenigstens einer mit dem wenigstens einen Airbag gekoppelten Rückhaltevorrichtung (406), mit der der wenigstens eine Airbag im aufgeblasenen Zustand bei einem Aufprall eines Insassen (8) auf den wenigstens einen Airbag im Fahrzeuginnenraum (401) in eine vorgegebene Rückhalteposition überführt und gehalten wird,
**dadurch gekennzeichnet,**
**dass** der wenigstens eine Airbag als Abspannairbag (402; 418) H-förmigen Zuschnitts mit einem den eigentlichen Abstützbereich des Abspannairbags (402; 418) bildenden Mittelteil als H-Steg (410; 419) ausgebildet ist, wobei der Abspannairbag (402; 418) im nicht aktivierten Zustand U-förmig gefaltet im Fahrzeug angeordnet ist dergestalt, dass der H-Steg (410; 419) im gefalteten Zustand Bestandteil der U-Basis ist und die vom H-Steg (410; 419) wegragenden Schlauchbereiche H-Schenkel (411, 412; 420, 421) sind, die im gefalteten Zustand die U-Schenkel des Abspannairbags (402; 418) ausbilden, so dass der H-Steg (410; 419) im aufgeblasenen Zustand einen vor einer Insassensitzposition aufgeblasenen Abstützairbag ausbildet und dass die von dem H-Steg (410; 419) wegragenden H-Schenkel (411, 412; 420, 421) im aufgeblasenen Zustand zu beiden Seiten des H-Stegs (410; 419) in Fahrzeughochachsenrichtung übereinander liegende Seitenairbags ausbilden.

2. Fahrzeug nach Anspruch 1, **dadurch gekennzeichnet, dass** der Abspannairbag (402; 418) im nicht aktivierten Zustand im Dachbereich (403) angeordnet ist und sich von dort her nach unten in den Fahrzeuginnenraum (401) hinein entfaltet.

3. Fahrzeug nach Anspruch 1 oder 2, **dadurch gekennzeichnet, dass** der Abstützairbag (419) des Abspannairbags (418) wenigstens eine Kopfausnehmung als Kopffenster (422) aufweist, die einer Insassenposition zugeordnet ist.

4. Fahrzeug nach Anspruch 3, **dadurch gekennzeichnet, dass** in dem wenigstens einen Kopffenster (422) ein Kopffensterairbag (423) angeordnet ist, der mit dem Airbag (418) strömungsverbunden ist dergestalt, dass bei einer Aktivierung der Sicherheitseinrichtung der Airbag (418) und zugleich oder zeitversetzt der Kopffensterairbag (423) entfaltet werden, wobei bei einem Eintauchen des Kopfes eines Insassen in den Fensterbereich der Kopffensterairbag (418) in Fahrtrichtung gesehen zusammen mit diesem wegklappt für eine aufprallweiche Abdeckung dahinterliegender Bauteile, und dass der Kopffensterairbag (423) wenigstens bereichsweise mit einem angrenzenden Fensterrandbereich mit kraftbeaufschlagt nachgebenden Verbindungsmitteln (424) verbunden ist.

5. Fahrzeug nach Anspruch 4, **dadurch gekennzeichnet, dass** der wenigstens eine Kopffensterairbag (423) im aktivierten Zustand in einem unteren Randbereich des Kopffensters (422) angeordnet ist und im Fensterbereich zungenartig nach oben ragt.

6. Fahrzeug nach einem der Ansprüche 1 bis 5, **dadurch gekennzeichnet, dass** die Rückhaltevorrichtung durch wenigstens einen sich beim Aufblasen in der Länge verkürzenden Airbagschlauch gebildet ist, der einerseits mit dem Abstützairbag und andererseits mit einem in Fahrtrichtung hinter oder neben der Insassenposition liegenden Airbagschlauch-Anbindungspunkt verbunden ist.

7. Fahrzeug nach Anspruch 6, **dadurch gekennzeichnet, dass** der Abspannairbag (402) wenigstens einen Airbagbereich aufweist, der zu Beginn der Aktivierung des Airbagmoduls die Verkleidung (404) zur Freigabe wenigstens einer Airbagaustrittöffnung für den Abspannairbag (402) aufdrückt.

8. Fahrzeug nach einem der Ansprüche 1 bis 7, **dadurch gekennzeichnet, dass** der Abspannairbag (402, 418) einen quer über die gesamte Fahrzeugbreite verlaufenden, durch den H-Steg (410; 419) des Zuschnitts gebildeten ersten Airbagteilbereich als Abstützairbag und U-Basis sowie auf gegenüberliegenden Fahrzeugseiten verlaufenden, durch die H-Schenkel (411, 412; 420, 421) des Zuschnitts gebildete zweite Airbagteilbereiche als Seitenairbags und U-Schenkel aufweist, die sich von der U-Basis ausgehend entlang des Dachholmbereichs (408) bis wenigstens in den Bereich der Fahrzeuginsassensitzposition erstrecken, und
dass auf in Querrichtung gegenüberliegenden Seiten des H-Stegs (410; 419) jeweils wenigstens ein Abspann- und Rückhaltemittel einer Rückhaltevorrichtung im Bereich der im aktivierten Zustand des Abspannairbags (402; 418) unteren H-Schenkel (412; 421) angebunden ist dergestalt, dass nach dem Aufdrücken des Verkleidungsteils (404) durch den sich aufblasenden Abspannairbag (402; 418) durch den H-Steg (410; 419) gebildete Abstützairbag nach unten in die vorgesehene Abstützposition gezogen und dort gehalten ist.

9. Fahrzeug nach Anspruch 8, **dadurch gekennzeichnet, dass** die durch die oberen H-Schenkel (411; 420) gebildeten Seitenairbags im aufgeblasenen, aktivierten Zustand des Abspannairbags (402; 418) wenigstens den Dachholmbereich (408) abdecken.

10. Fahrzeug nach Anspruch 8 oder Anspruch 9, **dadurch gekennzeichnet, dass** die durch die unteren H-Schenkel (412; 421) gebildeten Seitenairbags im Falle von Bändern, Seilen (407) oder dergleichen als Abspann- und Rückhaltemittel diese von der Fahrzeuginsassensitzposition her abdecken.

11. Fahrzeug nach Anspruch 8 oder Anspruch 9, **dadurch gekennzeichnet, dass** die durch die unteren H-Schenkel (412; 421) gebildeten Seitenairbags als sich beim Aufblasen in der Länge verkürzende Airbagschläuche ausgebildet sind und **dadurch** die Abspann- und Rückhaltemittel der Rückhaltevorrichtung ausbilden.

12. Fahrzeug nach einem der Ansprüche 1 bis 11, **dadurch gekennzeichnet, dass** im Falle mehrerer hintereinander liegender Sitzreihen für jede der Sitzreichen wenigstens ein Abspannairbag vorgesehen ist.

## Claims

1. Vehicle, in particular motor vehicle, having a safety device
with at least one airbag, which in the normal, non-activated state is folded together and arranged behind an internal trim element (404) and which, on activation of the safety device (400), is inflated in the interior (401) of the vehicle in front of at least one occupant seat, and
with at least one restraining device (406) coupled to the at least one airbag, by means of which the at least one airbag, when inflated, is transferred into and held in a predetermined restraining position on impact of an occupant (8) against the at least one airbag in the interior (401) of the vehicle,
**characterized in that**
the at least one airbag takes the form of an H-shaped bracing airbag (402; 418) with a central part as the web of the H (410; 419) forming the actual supporting region of the bracing airbag (402; 418), the bracing airbag (402; 418) in the non-activated state being folded in a U-shape and arranged in the vehicle, in such a way that the web of the H (410; 419) is part of the base of the U in the folded state and the tube regions projecting away from the web of the H (410; 419) are the legs of the H (411, 412; 420, 421), which in the folded state form the legs of the U of the bracing airbag (402; 418), such that, in the inflated state, the web of the H (410; 419) forms a supporting airbag inflated in front of an occupant seat and that, in the inflated state, the legs of the H (411, 412; 420, 421) projecting away from the web of the H (410; 419) form side airbags on either side of the web of the H (410; 419) located one above the other in the direction of the vertical axis of the vehicle.

2. Vehicle according to Claim 1, **characterized in that**, in the non-activated state, the bracing airbag (402; 418) is arranged in the roof region (403) and deploys from there downwards into the interior (401) of the vehicle.

3. Vehicle according to Claim 1 or 2, **characterized in that** the supporting airbag (419) of the bracing airbag (418) comprises at least one head recess in the form of a head window (422), which is allocated to an occupant seat.

4. Vehicle according to Claim 3, **characterized in that** there is arranged in the at least one head window (422) a head window airbag (423) which is connected for flow to the airbag (418) in such a way that, on activation of the safety device, the airbag (418) and, simultaneously or with a time offset, the head window airbag (423) are deployed, wherein, when the head of an occupant enters the window region, the head window airbag (418), when viewed in the direction of travel, bends away together therewith for soft-impact covering of components located therebehind, and that the head window airbag (423) at least in places along with an adjoining window edge region is connected to connecting means (424) which give under load.

5. Vehicle according to Claim 4, **characterized in that**, in the activated state, the at least one head window airbag (423) is arranged in a bottom edge region of the head window (422) and projects upwards in the manner of a tongue in the window region.

6. Vehicle according to one of Claims 1 to 5, **characterized in that** the restraining device is formed by at least one airbag tube which becomes shorter on inflation and is connected on the one hand to the supporting airbag and on the other hand to an airbag tube connection point located behind or next to the occupant seat in the direction of travel.

7. Vehicle according to Claim 6, **characterized in that** the bracing airbag (402) comprises at least one airbag region which, at the start of activation of the airbag module, forces open the trim (404) to expose at least one airbag outlet opening for the bracing airbag (402).

8. Vehicle according to one of Claims 1 to 7, **characterized in that** the bracing airbag (402, 418) comprises as supporting airbag and U base a first airbag sub-region extending transversely over the entire width of the vehicle and formed by the web (410; 419) of the H shape and, as side airbags and U legs, second airbag sub-regions extending on opposing vehicle sides and formed by the legs (411, 412; 420, 421) of the H shape, which sub-regions start from the U base and extend along the roof spar region (408) at least as far as into the region of the vehicle occupant seat, and
**in that**, on transversely opposing sides of the web of the H (410; 419), in each case at least one bracing and restraining means of a restraining device is connected in the region of the H legs (412; 421) which are the lower ones when the bracing airbag (402; 418) is in the activated state, in such a way that, once the trim element (404) has been forced open by the inflating bracing airbag (402; 418), the supporting airbag formed by the web of the H (410; 419) is pulled down into the intended supporting position and held there.

9. Vehicle according to Claim 8, **characterized in that** the side airbags formed by the upper legs of the H (411; 420) cover at least the roof spar region (408) when the bracing airbag (402; 418) is in the inflated, activated state.

10. Vehicle according to Claim 8 or Claim 9, **characterized in that**, in the event of the bracing and restraining means taking the form of straps, cables (407) or the like, the side airbags formed by the lower legs of the H (412; 421) cover said means from the point of view of the vehicle occupant seat.

11. Vehicle according to Claim 8 or Claim 9, **characterized in that** the side airbags formed by the lower legs of the H (412; 421) take the form of airbag tubes reducing in length on inflation and thereby constitute the bracing and restraining means of the restraining device.

12. Vehicle according to one of Claims 1 to 11, **characterized in that**, in the case of a plurality of rows of seats located one behind the other, at least one bracing airbag is provided for each of the rows of seats.

## Revendications

1. Véhicule, notamment véhicule automobile, avec un dispositif de sécurité
comprenant au moins un airbag qui, dans l'état de base non activé, est disposé replié derrière un élément de garniture intérieure (404) et qui, lors d'une activation du dispositif de sécurité (400), est gonflé dans l'habitacle (401) du véhicule devant au moins un emplacement de passager,
et comprenant au moins un dispositif de retenue (406) qui est couplé à l'airbag au moins unique et par lequel l'airbag au moins unique à l'état gonflé est, lors d'un heurt d'un passager (8) sur l'airbag au moins unique, transféré et maintenu dans une position prédéfinie de retenue dans l'habitacle (401) du véhicule,
**caractérisé en ce que** l'airbag au moins unique est réalisé sous forme d'airbag d'assujettissement (402 ; 418) à découpe en H, avec comme barre du H (410 ; 419) une partie médiane constituant la région de soutien proprement dite de l'airbag d'assujettissement (402 ; 418), sachant que l'airbag d'assujettissement (402 ; 418) est, dans l'état non activé, disposé replié en forme de U dans le véhicule de telle sorte que la barre du H (410 ; 419), dans l'état replié, fait partie de la base du U et que les régions tubulaires qui s'éloignent de la barre du H (410 ; 419) sont les branches du H (411, 412 ; 420, 421) qui constituent dans l'état replié les branches du U de l'airbag d'assujettissement (402 ; 418), de sorte que la barre du H (410 ; 419) constitue dans l'état gonflé un airbag de soutien gonflé devant un emplacement de passager assis et que les branches du H (411, 412 ; 420, 421) qui s'éloignent de la barre du H (410 ; 419) constituent dans l'état gonflé, de part et d'autre de la barre du H (410 ; 419), des airbags latéraux superposés dans la direction de l'axe vertical du véhicule.

2. Véhicule selon la revendication 1, **caractérisé en ce que** l'airbag d'assujettissement (402 ; 418) est disposé dans l'état non activé dans la région du toit (403), et se déploie de là vers le bas à l'intérieur de l'habitacle (401) du véhicule.

3. Véhicule selon la revendication 1 ou 2, **caractérisé en ce que** l'airbag de soutien (419) de l'airbag d'assujettissement (418) présente au moins un évidement pour la tête sous la forme d'une fenêtre pour tête (422) qui est associée à un emplacement de passager.

4. Véhicule selon la revendication 3, **caractérisé en ce qu'**un airbag (423) de fenêtre pour tête est disposé dans la fenêtre pour tête (422) au moins unique, lequel est fluidiquement relié à l'airbag (418) de telle sorte que, lors d'une activation du dispositif de sécurité, l'airbag (418) et en même temps ou avec un décalage dans le temps l'airbag (423) de fenêtre pour tête sont déployés, sachant que lors d'un enfoncement de la tête d'un passager dans la région de la fenêtre, l'airbag (418) de fenêtre pour tête est éloigné par rabattement, considéré dans la direction de marche, conjointement avec la tête en question, afin de recouvrir des éléments structurels situés derrière en vue d'un heurt en douceur, et **en ce que** l'airbag (423) de fenêtre pour tête est au moins sectoriellement relié à une région limitrophe de bord de fenêtre par des moyens de liaison (424) qui cèdent lorsqu'ils sont sollicités par une force.

5. Véhicule selon la revendication 4, **caractérisé en ce que** l'airbag (423) de fenêtre pour tête au moins unique est disposé dans l'état activé dans une région de bord inférieur de la fenêtre pour tête (422) et dépasse vers le haut dans la région de la fenêtre à la manière d'une languette.

6. Véhicule selon l'une quelconque des revendications 1 à 5, **caractérisé en ce que** le dispositif de retenue est formé par au moins un airbag tubulaire dont la longueur diminue lors du gonflage et qui est relié d'une part à l'airbag de soutien et d'autre part à un point d'attache d'airbag tubulaire situé derrière ou à côté de l'emplacement de passager dans la direction de marche.

7. Véhicule selon la revendication 6, **caractérisé en ce que** l'airbag d'assujettissement (402) présente au moins une région d'airbag qui, au début de l'activation du module d'airbag, exerce une pression sur la garniture (404) afin de dégager au moins une ouverture de sortie d'airbag pour l'airbag d'assujettissement (402).

8. Véhicule selon l'une quelconque des revendications 1 à 7, **caractérisé en ce que** l'airbag d'assujettissement (402 ; 418) présente, comme airbag de soutien et base du U, une première région partielle d'airbag formée par la barre du H (410 ; 419) de la découpe et s'étendant transversalement sur toute la largeur du véhicule, ainsi que, comme airbags latéraux et branches du U, des deuxièmes régions partielles d'airbag formées par les branches du H (411, 412 ; 420, 421) de la découpe et s'étendant sur des côtés opposés du véhicule, régions qui, en partant de la base du U, s'étendent le long de la région du montant de toit (408) jusqu'au moins dans la région de l'emplacement de passager assis du véhicule,
et **en ce que**, sur des côtés opposés, en direction transversale, de la barre du H (410 ; 419), au moins un moyen respectif d'assujettissement et de retenue d'un dispositif de retenue est rattaché dans la région des branches inférieures (412 ; 421), dans l'état activé de l'airbag d'assujettissement (402 ; 418), du H de telle sorte qu'à la suite de la pression exercée sur l'élément de garniture (404) par l'airbag d'assujettissement (402 ; 418) qui se gonfle, l'airbag de soutien formé par la barre du H (410 ; 419) est tiré vers le bas dans la position de soutien prévue, et y est maintenu.

9. Véhicule selon la revendication 8, **caractérisé en ce que** les airbags latéraux formés par les branches supérieures (411 ; 420) du H recouvrent, dans l'état activé, gonflé de l'airbag d'assujettissement (402 ; 418), au moins la région du montant de toit (408).

10. Véhicule selon la revendication 8 ou 9, **caractérisé en ce que** les airbags latéraux formés par les branches inférieures (412 ; 421) du H, dans.le cas de sangles, câbles (407) ou analogues comme moyens d'assujettissement et de retenue, recouvrent ces moyens depuis l'emplacement de passager assis du véhicule.

11. Véhicule selon la revendication 8 ou 9, **caractérisé en ce que** les airbags latéraux formés par les branches inférieures (412 ; 421) du H sont réalisés sous la forme d'airbags tubulaires dont la longueur diminue lors du gonflage et constituent ainsi les moyens d'assujettissement et de retenue du dispositif de retenue.

12. Véhicule selon l'une quelconque des revendications 1 à 11, **caractérisé en ce qu'**en présence de plusieurs rangées de sièges disposées en succession, au moins un airbag d'assujettissement est prévu pour chacune des rangées de sièges.
